# EUROPÄISCHE PATENTSCHRIFT

(11) **EP 4 133 761 B1**
(45) Veröffentlichungstag und Bekanntmachung des Hinweises auf die Patenterteilung: **23.07.2025**
(21) Anmeldenummer: 21717433.3
(22) Anmeldetag: 08.04.2021
(51) Int. Cl.: H04W 4/70, H04L 9/32, H04W 12/06, H04W 4/38, H04L 9/40, H04L 67/12, H04L 67/104, H04W 12/069

(54) **ÜBERWACHUNGSSYSTEM MIT MEHRSTUFIGER ANFRAGEPRÜFUNG**
MONITORING SYSTEM WITH MULTISTAGE REQUEST VERIFICATION
SYSTÈME DE SURVEILLANCE COMPRENANT UNE VÉRIFICATION DE DEMANDE À PLUSIEURS ÉTAPES

(30) Priorität: 09.04.2020 DE 102020110034
(43) Veröffentlichungstag der Anmeldung: 15.02.2023
(73) Patentinhaber: Bundesdruckerei GmbH, 10969 Berlin (DE)
(72) Erfinder: WILKE, Andreas, 13509 Berlin (DE); KOMAROV, Ilya, 13507 Berlin (DE); PAESCHKE, Manfred, 16348 Wandlitz (DE)
(74) Vertreter: Richardt Patentanwälte PartG mbB
(86) Internationale Anmeldenummer: PCT/EP2021/059177
(87) Internationale Veröffentlichungsnummer: WO 2021/204943

(56) Entgegenhaltungen:
- US-A1- 2003 233 573
- US-A1- 2007 101 418
- US-A1- 2013 318 581
- US-A1- 2013 339 740
- US-A1- 2015 256 337
- US-A1- 2018 026 954
- US-A1- 2019 215 694
- US-B1- 7 792 126

## Beschreibung

### Technisches Gebiet

Die vorliegenden Darstellungen betreffen mikrocontrollerbasierte und mikroprozessorbasierte Überwachungssysteme und insbesondere die Zugriffskontrolle auf deren Funktionalität durch externe Systeme.

### Stand der Technik

Mikrocontrollerbasierte und mikroprozessorbasierte Systeme werden bereits heute vielfach zur Überwachung verschiedenster technischer Objekte ("Überwachungsobjekte) verwendet.

Bekannte Beispiele hierfür sind Waschmaschinen, Staubsauger sowie diverse andere Haus- und Gartengeräte. Auch viele Komponenten von Fahrzeugen haben eine eigene Steuerung, um halbautonom reagieren zu können, z.B. das ABS und ESP System. Das ABS System verhindert das Blockieren der Räder auf der Basis eines als gefährlich erachteten Abfallens der Drehzahl eines Rades, die z.B. dadurch verursacht werden kann, dass ein Rad auf einem Untergrund mit einem niedrigeren Haftreibungskoeffizienten steht. Das ESP System verhindert ein nicht erwünschtes Drehen des Fahrzeugs auf der Basis diverser Sensoren, z.B. eines Lenkwinkelsensors. Manche ESP Überwachungssysteme vergleichen eine aktuelle Winkelgeschwindigkeit um die Hochachse des Fahrzeugs mit einer maximalen SOLL Winkelgeschwindigkeit. Zwar ist die Rechenkapazität von mikrocontrollerbasierten und mikroprozessorbasierten Systemen oftmals recht gering, dies ist jedoch in der Regel unproblematisch, da die gesamte Chiparchitektur samt der ggf. darauf befindlichen Peripheriefunktionalitäten stark aufeinander abgestimmt sind und der Mikrocontroller bzw. der Mikroprozessor oft nur einige wenige oder nur eine einzige Funktion ausführen muss, auf deren Ausführung dieser oftmals optimiert ist.

In all den vorgenannten Systemen besteht keine Gefahr eines Angriffs über das Internet, denn die besagten Systeme verfügen nicht über eine entsprechende Netzwerkschnittstelle.

Mit dem Aufkommen des autonomen oder teilautonomen Fahrens, von Smart-Home Anwendungen und diversen Applikationen und Systemen des "Internets der Dinge" (Internet of Things, IoT) hat sich die Situation jedoch geändert. Viele Systeme zur Überwachung anderer Objekte erfordern zwingend eine Vernetzung mit der Cloud oder mit anderen IoT-Endknoten über das Internet, um ihre Funktion korrekt durchführen zu können. Damit werden diese Systeme jedoch vulnerabel für entsprechende Angriffe über das Netzwerk.

Eine bestimmte Form des Angriffs, der Denial of Service (DoS; engl. für "Verweigerung des Dienstes") Angriff, hat sich dabei als besonders problematisch erwiesen. Unter einem DoS Angriff wird ein Angriff auf eine Recheneinheit mittels einer gro-ßen Menge an Anfragen innerhalb eines kurzen Zeitfensters verstanden, welcher die Nichtverfügbarkeit der Recheneinheit aufgrund Überlastung des Datennetzes bzw. der CPUs der Recheneinheit zum Ziel hat. Im Fall einer durch eine Vielzahl von gezielten Anfragen verursachten, mutwilligen Blockade eines Systems spricht man von einer Denial-of-Service Attacke und, wenn die Anfragen von einer großen Zahl an Rechnern aus durchgeführt werden, von einer Distributed-Denial-of-Service Attacke (DDoS-Attacke, deutsch wörtlich verteilte-Verweigerung-des-Dienstes-Angriff). Da beim DDoS-Angriff die Anfragen von einer Vielzahl von Quellen ausgehen, ist es nicht möglich, den Angreifer zu blockieren, ohne die Kommunikation mit dem Netzwerk komplett einzustellen.

DoS Angriffe sind technisch vergleichsweise simpel, da sie nicht das Eindringen in das IoT-Gerät zum Ziel hat, sondern dessen Lahmlegung. Ein Schutz vor derartigen Angriffen ist für internetfähige IoT-Geräte aber auch besonders schwierig, da ein Trennen der Netzwerkverbindung oftmals einem funktionalen Ausfall des IoT-Endknotens gleichkommt. Zudem sind IoT-Endknoten aufgrund ihrer geringen Rechenkapazität im Hinblick auf DoS-Angriffe besonders vulnerabel.

Zwar sind im Kontext von Standard-Desktop Computern und Server-Computern verschiedene Technologien bekannt, um diese Systeme vor unberechtigtem Zugriff Dritter über das Internet zu schützen. Hierzu gehören z.B. Firewalls, Virenscanner, komplexe kryptographische Authentifizierungsverfahren und andere. Allerdings sind diese Technologien im Kontext von IoT Endknoten und bauähnlicher Systeme in der Regel nicht anwendbar, da die Rechenleistung von mikrocontrollerbasierten und mikroprozessorbasierten Systemen für diese Schutzmechanismen zu schwach ist.

Außerdem sind IoT Endknoten in der Regel batteriebetrieben, sodass konventionelle, rechenintensive Sicherungsverfahren zu einer schnellen Entladung der Batterie führen würden.

US Patentanmeldung US20130318581A1 beschreibt ein System, das von einem Benutzergerät Informationen empfängt, die einer Anfrage zum Empfang eines Dienstes von einer Servervorrichtung zugeordnet sind. Die Informationen enthalten einen eindeutigen Identifikator, der mit einem Benutzer einer Benutzervorrichtung verbunden ist. Das System kann auch so konfiguriert sein, dass es: den eindeutigen Identifikator aus den Informationen extrahiert; aus einem Speicher eine dem

Benutzer zugeordnete Kennung abruft; einen Hinweis zu erhalten, ob der dem Benutzer zugeordnete Identifikator vertrauenswürdig ist; zusätzliche Authentifizierungsoperationen durchzuführen, wenn der dem Benutzer zugeordnete Identifikator, vertrauenswürdig ist; und eine Benachrichtigung an die Servervorrichtung übermitteln, die angibt, dass der Benutzer authentifiziert ist, wenn die zusätzliche Authentifizierungsoperationen ergeben, dass die Benutzervorrichtung authentifiziert ist
US Patentanmeldung US 20150256337A1 beschreibt ein Verfahren und System zur Authentifizierung eines Schlüsselaustauschs zwischen einem ersten Peer-Gerät und einem zweiten Peer-Gerät. In einem Aspekt sendet das erste Peer-Gerät föderierte Anmeldedaten eines Benutzers und einen ersten Identifikator an einen ersten föderierten Anmeldeanbieter, empfängt eine erste Authentifizierungsantwort von dem ersten föderierten Anmeldeanbieter, empfängt eine zweite Authentifizierungsantwort von dem zweiten Peer-Gerät, authentifiziert die zweite Authentifizierungsantwort mit einem zweiten föderierten Anmeldeanbieter, sendet die erste Authentifizierungsantwort an das zweite Peer- Gerät, empfängt eine Bestätigung von dem zweiten Peer-Gerät, die anzeigt, dass das zweite Peer-Gerät die erste Authentifizierungsantwort mit dem föderierten Login-Provider authentifiziert hat, sendet eine Bestätigung an das zweite Peer-Gerät, die anzeigt, dass das erste Peer-Gerät die zweite Authentifizierungsantwort authentifiziert hat, und authentifiziert den Schlüsselaustausch basierend auf der Bestätigung von dem zweiten Peer-Gerät.

### Technisches Problem und grundlegende Lösungen

Vor diesem Hintergrund besteht ein Bedarf an verbesserten mikrocontrollerbasierten und/oder mikroprozessorbasierten Systemen und Verfahren zur Überwachung physischer Objekte insofern, dass die vorangehend erwähnten Nachteile damit zumindest teilweise vermeidbar sind.

Der Erfindung liegt demgegenüber die Aufgabe zugrunde, ein verbessertes Überwachungssystem für physische Objekte zu schaffen, sowie ein entsprechendes Überwachungsverfahren.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Überwachungssystem. Das Überwachungssystem ist als ein mikrocontroller-basiertes oder mikroprozessor-basiertes Datenverarbeitungssystem ausgebildet, welches operativ an ein Überwachungsobjekt koppelbar ist. Das Überwachungssystem umfasst:
- zumindest einen Prozessor;
- eine Netzwerkschnittstelle;
- zumindest einen Sensor, der dazu ausgebildet ist, einen aktuellen Zustand des Überwachungsobjektes zu erfassen; und/oder eine Steuereinheit, die dazu ausgebildet ist, den Zustand des Überwachungsobjektes zu verändern.

Das Überwachungssystem ist ausgebildet zum:
- Empfang einer Anfrage über die Netzwerkschnittstelle von einer Anfrageeinheit;
- Durchführen einer ersten Prüfung der Anfrage durch den Prozessor;
- Falls die erste Prüfung ergibt, dass die Anfrage nicht vertrauenswürdig ist, Abbruch der ersten Prüfung, ohne eine Antwort irgendeiner Form an die Anfrageeinheit zurückzugeben;
- nur falls die erste Prüfung ergibt, dass die Anfrageeinheit vertrauenswürdig ist, Durchführen einer weiteren Prüfung der Anfrage durch den Prozessor;
- nur falls die weitere Prüfung der Anfrage ergibt, dass die Anfrageeinheit hinreichend berechtigt ist, Ermöglichung der Übertragung von Zustandsdaten des Überwachungsobjekts, die von dem zumindest einen Sensor erfasst wurden, an die Anfrageeinheit und/oder Ändern des Zustands des Überwachungsobjekts mittels der Steuerungseinheit gemäß der Anfrage.

Ausführungsformen der Erfindung können den Vorteil aufweisen, dass die Durchführung einer mehrstufigen Prüfung der Anfrage das Überwachungssystem erheblich entlasten kann. Die Gesamtheit an im jeweiligen Anwendungskontext durchzuführenden Prüfungen einschließlich der weiteren Prüfung wird nur dann durchgeführt, wenn schon eine erste "Vorprüfung" der Anfrage positiv ausgefallen ist, wenn also die Anfrage zumindest einen ggf. schnell prüfbaren Beleg bzw. ein Indiz ihrer Vertrauenswürdigkeit enthielt. Auch ein leistungsschwacher Mikroprozessor kann hierdurch in die Lage versetzt werden, komplexe Prüfalgorithmen durchzuführen, ohne dass dieser Prozessor hierdurch vulnerabel für DoS Angriffe wird, denn ein DoS Angriff würde bereits beim ersten Prüfschritt scheitern, die weiteren und ggf. rechenaufwändigen Prüfschritte würden gar nicht mehr durchgeführt.

Ausführungsformen der Erfindung können zudem den Vorteil aufweisen, dass das Überwachungssystem dann, wenn die erste Prüfung negativ ausfällt, keine Antwort zurückgibt, noch nicht einmal eine Fehlermeldung. Dadurch kann verhindert werden, dass ein potentieller Angreifer anhand der Fehlermeldung Rückschlüsse auf das Prüfsystem bzw. das von diesem verwendete Anfrageprüfungs- und Authentifizierungsverfahren machen kann. Durch eine Antwort würde in Angreifer zumindest erfahren, dass unter der vom Angreifer benutzten Adresse auch tatsächlich ein Überwachungssystem erreichbar ist. Dadurch, dass das Überwachungssystem keinerlei Antwort zurückgibt, wird der Angreifer darüber im Unklaren gelassen, ob sein Angriff überhaupt ein real existierendes Überwachungssystem getroffen hat. Dies kann für Ausführungsformen der Erfindung die Sicherheit erhöhen, denn dem Angreifer wird die Motivation und die Möglichkeit genommen, sich näher mit einer Antwort des Überwachungssystems auseinanderzusetzen und den nächsten Angriff entsprechend anzupassen.

Nach Ausführungsformen der Erfindung trennt das Überwachungssystem die Netzwerkverbindung zu der Anfrageeinheit falls die erste Prüfung ergibt, dass die Anfrage dass die Anfrage nicht vertrauenswürdig ist. Die Netzwerkverbindung zwischen dem Überwachungssystem und der Anfrageeinheit kann z.B. auf einer höheren Ebene des OSI-Modells bestehen, insbesondere der Applikationsebene.

Ausführungsformen können den Vorteil haben, dass die Verbindungstrennung sicher stellt, dass zumindest zunächst von der Anfrageeinheit keine weiteren Anfragen mehr gesendet werden können, die ggf. Schadcode enthalten könnten. Erst muss wieder eine Netzwerkverbindung, z.B. eine SSH-Verbindung oder eine Verbindung gemäß eines anderen Datenaustauschprotokolls re-etabliert werden. Beispielsweise kann das Überwachungssystem aber so konfiguriert sein, dass es einen erneuten Aufbau einer Datenübertragungsverbindung zu der gleichen Anfrageeinheit nur nach einem zeitlichen Mindestabstand zu der letzten gescheiterten (als nicht vertrauenswürdig erachteten) Anfrage, z.B. von 5 Minuten oder einer Stunde, erlaubt. Somit können Ausführungsformen der Erfindung sicherstellen, dass der Prozessor des Überwachungssystems nicht durch wiederholtes Schließen und Neuaufbau einer Datenaustauschverbindung zu der Anfrageeinheit blockiert wird.

Beispielsweise kann das Überwachungssystem über eine Netzwerkverbindung mit anderen Überwachungssystemen und/oder der Anfrageeinheit verbunden sein. Die Netzwerkverbindung kann z.B. als eine Funkverbindung ausgebildet sein. Zusätzlich oder alternativ dazu kann die Netzwerkverbindung auch über z.B. Bluetooth Low Energy (BLE) und WiFi aufgebaut werden.

Nach Ausführungsformen ist die weitere Prüfung rechnerisch aufwändiger als die erste Prüfung.

Gemäß einer Ausführungsform besteht die erste Prüfung aus einer oder mehreren arithmetischen Operationen auf numerischen Datenwerten. Insbesondere kann die erste Prüfung aus einer Prüfung bestehen, ob die Anfrage einen Berechtigungsnachweis in Form eines numerischen Datenwerts beinhaltet, der identisch ist zu einem in einem nicht-flüchtigen Speichermedium der Überwachungseinheit gespeicherten Referenzberechtigungsnachweises ist.

Gemäß einer Ausführungsform gilt die Anfrage und/oder die Anfrageeinheit als nicht vertrauenswürdig, wenn im Zuge der ersten Prüfung erkannt wird, dass die Anfrage den numerischen Berechtigungsnachweis nicht enthält.

Ausführungsformen der Erfindung können den Vorteil haben, dass die erste Prüfung auf eine sehr ressourcenschonende Weise durchgeführt werden kann. Bei dem Referenzberechtigungsnachweis handelt es sich um einen numerischen Wert. Eine Prüfung auf Identität zweier Werte kann von Prozessoren und insb. auch Mikroprozessoren auf höchst effiziente, ressourcenschonende Weise durchgeführt werden. Somit kann das Überwachungssystem durch einen Vergleich eines mit der Anfrage erhaltenen Wertes mit einigen im Überwachungssystem hinterlegten Referenzberechtigungsnachweisen bereits Angreifer und eine Vielzahl sonstiger unberechtigter Systeme erkennen, denn diesen ist der Referenzberechtigungsnachweis nicht bekannt. Auch ein leistungsschwacher Mikroprozessor kann mehrere dieser Zahlenwertvergleiche in kurzer Zeit durchführen.

Zusätzlich oder alternativ dazu umfasst die weitere Prüfung eine Zertifikatskettenprüfung. Die Zertifikatskettenprüfung beinhaltet eine Prüfung, ob ein die Anfrageeinheit repräsentierendes Nutzer-Zertifikat über eine Kette weiterer Nutzer-Zertifikate ableitbar ist von einem als vertrauenswürdig geltenden Root-Nutzer-Zertifikat.

Ausführungsformen der Erfindung können den Vorteil haben, dass die Zertifikatskettenprüfung zuverlässig die Identität oder eine Eigenschaft, z.B. ein Recht, eines bestimmten Nutzers bzw. eines als Nutzer repräsentierten Überwachungssystem belegen kann. Beispielsweise kann das Root-Zertifikat von einer offiziellen Zertifizierungsstelle stammen, sodass mittels der Zertifikatskettenprüfung geprüft werden kann, ob die Identität oder die Eigenschaft sich direkt oder indirekt von diesem als vertrauenswürdig erachteten Root-Zertifikat ableitet. Zwar ist die Durchführung einer Zertifikatskettenprüfung oftmals rechenaufwändig, da diese jedoch erst innerhalb der weiteren Prüfung durchgeführt wird, ist die Wahrscheinlichkeit sehr hoch, dass die Anfrage nicht von einem Angreifer kommt, sondern von einem Computer oder anderen Überwachungssystem, das die erforderlichen Rechte besitzt, wobei dies letztlich erst durch die weitere Prüfung entschieden wird.

Ausführungsformen können den Vorteil haben, dass die weitere Prüfung nur dann durchgeführt wird, wenn die erste Prüfung ergab, dass der Berechtigungsnachweis der Anzeige dem Überwachungssystem bekannt ist und in Form eines identischen Referenzberechtigungsnachweis im Überwachungssystem gespeichert ist. Dies schont die Rechenkapazität des Überwachungssystems. Während die erste Prüfung nur einen oder mehrere Vergleiche numerischer Werte auf Identität beinhaltete, kann die nachfolgende Prüfung durchaus komplexer und damit vergleichsweise rechenintensiv sein. Da die weitere Prüfung aber nur durchgeführt wird, wenn die erste Prüfung bereits positiv verlief, fällt dieser Aufwand nur für Anfragen von Anfrageeinheiten an, die mit einiger Wahrscheinlichkeit auch hinreichend berechtigt sind, die gewünschte Funktion durch das Überwachungssystem ausführen zu lassen. Somit kann ein guter Kompromiss zwischen dem Wunsch nach geringer Rechenlast einerseits und dem Wunsch zur Durchführung komplexer und entsprechend sicherer Authentifizierungsverfahren.

Gemäß Ausführungsformen der Erfindung ist das Überwachungsobjekt ausgewählt ist aus einer Gruppe umfassend:
- Ein Infrastrukturobjekt, insbesondere ein Infrastruktur-Gebäude (z.B. ein Krankenhaus, ein städtisches oder kommunales Gebäude, ein Bibliotheksgebäude), eine Energieerzeugungsanlage, ein Elektrizitätswerk, eine Anlage eines Wasserwerks, ein Kraftwerk;
- eine militärische Anlage;
- eine industrielle Anlage zur Produktion von Gütern;
- eine Vorrichtung, z.B. eine Tür oder ein Tor,
- eine Maschine, z.B. ein Gerät der Medizintechnik, ein Haushaltsgerät wie z.B. eine Waschmaschine, ein Fernsehgerät, einen Router, ein Mobiltelefon oder allgemein ein Gerät der Unterhaltungselektronik;
- ein Fahrzeug;
- ein Flugzeug;
- eine Komponente der vorgenannten Objekte;
- eine Kombination aus zwei oder mehr der vorgenannten Objekte.

Gemäß Ausführungsformen der Erfindung sind die von dem zumindest einen Sensor erfassten Zustandsdaten des Überwachungsobjekts ausgewählt aus einer Gruppe umfassend:
- Leistungsparameter des Überwachungsobjekts, insbesondere Drehzahl, Energieverbrauch, Wirkungsgrad, Beschleunigung, Größenveränderung, Temperatur, Menge der verbrauchten Verbrauchsmittel, Menge der erzeugten oder bereitgestellten Güter, zurückgelegte Strecke, Temperatur;
- Verschleißparameter, die einen Verschleiß des Überwachungsobjekts oder seiner Komponenten anzeigen, insbesondere Schwingungsmessdaten, optische oder leitfähigkeitsbasierte Rostindikatoren, Menge der verarbeiteten oder bereitgestellten Güter, akkumulierte Betriebsdauer, zurückgelegte Strecke;
- Zustandsindikatoren, die einen aktuellen Zustand des Überwachungsobjekts angeben, insbesondere "inaktiv", "bereit", "aktiv", "defekt", "Grad der Aktivität in %";
- eine Kombination aus zwei oder mehr der vorgenannten Zustandsparameter.

Gemäß Ausführungsformen der Erfindung ist die von der Steuereinheit bewirkte Zustandsänderung des Überwachungsobjekts ausgewählt ist aus einer Gruppe umfassend.
- eine Aktivierung des Überwachungsobjekts;
- eine Deaktivierung des Überwachungsobjekts;
- eine Erhöhung der Leistung des Überwachungsobjekts;
- eine Reduzierung der Leistung des Überwachungsobjekts.

Nach Ausführungsformen der Erfindung handelt es sich bei dem Überwachungssystem um ein eingebettetes System.

Ein eingebettetes System (auch englisch embedded system) ist ein elektronischer Computer, der in einen technischen Kontext eingebunden (eingebettet) ist, wobei der Computer entweder Überwachungs-, Steuerungs- oder Regelfunktionen bezüglich des Überwachungsobjekts übernimmt und/oder für eine Form der Daten- bzw. Signalverarbeitung von sensierten Statusdaten des Überwachungsobjekts zuständig ist. Bei dieser Daten- bzw. Signalverarbeitung kann es sich z.B. um das Ver- bzw. Entschlüsseln, Codieren bzw. Decodieren oder Filtern von Daten, insbesondere Messdaten, handeln.

Oft werden eingebettete Systeme speziell an eine Aufgabe angepasst. Aus Kostengründen wird eine optimierte, gemischte Hardware-Software-Implementierung gewählt. Dabei vereinigt eine solche Konstruktion die große Flexibilität von Software mit der Leistungsfähigkeit der Hardware. Die Software dient dabei sowohl zur Steuerung des Systems selbst als auch zur Interaktion des Systems mit der Außenwelt über definierte Schnittstellen oder Protokolle (z. B. LIN-Bus, CAN-Bus, ZigBee für drahtlose Kommunikation oder IP über Ethernet).

Nach Ausführungsformen ist eine Vielzahl von ansonsten autonomen Überwachungssystemen miteinander funktional vernetzt um ein komplexes Gesamtsystem bereitzustellen (so z.B. im Fahrzeug oder Flugzeug und bei IoT Anwendungen).

Nach Ausführungsformen umfasst das Überwachungssystem ferner eine software- oder hardwarebasierte Funktionalität.

Eine softwarebasierte Funktionalität kann z.B. in von dem Prozessor ausführbaren Instruktionen ("Software") implementiert sein.

Die Funktionalität kann zur Überwachung des Überwachungsobjekts dienen und z.B. eine Steuerung des Sensors zum Sensieren und/oder Speichern der sensierten Zustandsdaten beinhalten. Zusätzlich oder alternativ dazu kann die Funktionalität eine Kontrolle der Steuereinheit beinhalten, wobei die Kontrolle beinhaltet, die Steuereinheit dazu zu veranlassen, einen Steuerbefehl zu erzeugen und an das Überwachungsobjekt zu senden, wobei der Steuerbefehl zu einer Zustandsänderung des Überwachungsobjekts führt. Beispielsweise kann das Überwachungsobjekt eine Turbine oder ein Motor sein und die Funktionalität kann in einer Kontrolleinheit bestehen, die einen Steuerbefehl an das Überwachungsobjekt sendet um z.B. dessen Drehzahl zu erhöhen oder zu reduzieren.

Das Überwachungssystem ist dazu konfiguriert, nur dann, falls die erste und die weitere Prüfung positiv verläuft, also z.B. zum Ergebnis haben dass die Anfrage und der Anfrageeinheit vertrauenswürdig sind, die Funktionalität auszuführen. Vorzugsweise werden bei der Ausführung Angaben innerhalb der Anfrage berücksichtigt. Beispielsweise kann die Anfrage beinhalten, die Umdrehungszahl einer Turbinen auf einen bestimmten absoluten Wert oder um einen bestimmten Wert relativ zur aktuellen Umdrehungszahl zu erhöhen. Die Ausführung der Funktionalität würde dann beinhalten, die Steuereinheit zu veranlassen, einen Kontrollbefehl zu erzeugen, der die Reduzierung der Umdrehungszahl um den besagten Wert spezifiziert, und den Kontrollbefehl an die Turbine (Überwachungsobjekt) zu senden. Der Kontrollbefehl bewirkt, dass die Turbine ihre Umdrehungszahl entsprechend verringert.

Gemäß einem anderen Beispiel kann die softwarebasierte Funktionalität beinhalten, dass die Anfrageeinheit Daten von dem Überwachungssystem empfängt, z.B. Sensordaten, die ein oder mehrere Sensoren des Überwachungssystems erfasst und lokal gespeichert haben.

Gemäß einem anderen Beispiel kann die softwarebasierte Funktionalität beinhalten, dass die Anfrageeinheit ein trainiertes ML-Modell, das auf lokal erfassten Daten des Überwachungssystems trainiert wurde, oder eine Vorhersage, die eine Vorhersagesoftware des Überwachungssystems berechnet hat, empfängt oder aktiv auslesen darf.

Gemäß einem weiteren Beispiel beinhaltet die softwarebasierte Funktionalität das Speichern von Daten in einem lokalen Datenspeicher des Überwachungssystems. Bei den zu speichernden Daten kann es sich z.B. um Messdaten handeln, die der zumindest eine Sensor des Überwachungssystems bezüglich des Status des Überwachungsobjekts über einen gewissen Zeitraum hin erfasst hat. Alternativ dazu kann es sich bei den zu speichernden Daten um Daten handeln, die in der Anfrage enthalten sind. Beispielsweise kann es sich bei den in der Anfrage enthaltenen Daten um ein trainiertes ML-Modell eines anderen Überwachungssystems oder der Anfrageeinheit handeln, wobei die Anfrage z.B. der Synchronisation mehrerer ML-Modelle zwischen den Überwachungssystemen und/oder der Anfrageeinheit dient.

Eine hardwarebasierte Funktionalität kann z.B. ein Schalter sein, der manuell und/oder auf Veranlassung des Überwachungssystems betätigt wird und dessen Betätigung die Erfassung von Sensordaten durch den zumindest einen Sensor des Überwachungssystems initialisiert. Zusätzlich oder alternativ dazu kann die Betätigung dieses Schalters vermittelt über die Steuereinheit eine Zustandsänderung eines größeren mechanisch beweglichen Bauteil des Überwachungsobjekts bewirken, z.B. das Öffnen eines Tores, das Schließen einer Schließanlage, etc.

Gemäß Ausführungsformen der Erfindung ist das Überwachungssystem dazu konfiguriert, Ergebnisses der Ausführung der Funktionalität an die Anfrageeinheit zurückzugeben.

Beispielsweise können von einem Sensor des Überwachungssystems erfasste Messwerte, von einer Software des Überwachungssystems berechnete Vorhersagen, Ergebnisse eines Kontrollbefehls zum Öffnen oder Schließen von Türen oder Toren an die Anfrageeinheit zurückgegeben werden.

Nach Ausführungsformen beinhaltet das Speichermedium des Überwachungssystems eine Nutzdaten-Datenbank. Die Nutzdaten-Datenbank beinhaltet mehrere Datensätze. In manchen Ausführungsformen kann das Speichermedium auch mehrere derartiger Nutzdaten-Datenbanken beinhalten. Zumindest einer der Datensätze beinhaltet Zustandsdaten des Überwachungsobjekts, die von dem zumindest einen Sensor erfasst wurden. Zusätzlich oder alternativ dazu beinhaltet zumindest einer der Datensätze Konfigurationsdaten, die von der Steuereinheit bei der Änderung des Zustands des Überwachungsobjekts gelesen und bei der Zustandsänderung berücksichtigt werden. Beispielsweise kann das Überwachungsobjekt eine Tür beinhalten und die Anfrage beinhalten, diese Tür zu öffnen. In den Konfigurationsdaten kann ein Default-Wert gespeichert sein, der angibt, wie weit, also bis zu welche Öffnungswinkel, die Tür geöffnet werden soll, sofern in der Anfrage kein anderer Wert spezifiziert ist oder der in der Anfrage spezifizierte Wert außerhalb eines in den Konfigurationsdaten hinterlegten zulässigen Wertebereichs liegt.

Das Speichermedium des Überwachungssystems umfasst ferner gemäß Ausführungsformen eine ID-Datenbank. In der ID-Datenbank sind eine Vielzahl von Nutzer-Zertifikaten und eine Vielzahl von Zugriffs-Zertifikaten gespeichert.

Ein Nutzer-Zertifikat ist ein einem Nutzer eindeutig zugewiesener Datenwert. Beispielsweise kann es sich bei dem Nutzer-Zertifikat um eine Zahl oder vorzugsweise um ein von einer Zertifizierungsstelle ausgestelltes Zertifikat handeln, z.B. um ein X.509 Zertifikat. Ein Nutzer kann eine natürliche Person, aber auch ein Überwachungssystem oder eine Anfrageeinheit repräsentieren.

Ein Zugriffs-Zertifikat ist ein numerischer Datenwert, der einem Nutzer durch Zuweisung dieses Zugriffs-Zertifikat an dessen Nutzer-Zertifikat in der ID-Datenbank eine bestimmte Art des Datensatzzugriffs auf Datensätze der Nutzdaten-Datenbank gewährt.

Ausführungsformen können vorteilhaft sein, das die Trennung von Nutzdaten und Nutzer-Zertifikaten sowie assoziierten Zugriffsrechten ein sehr komplexes, flexibles und feingranulares Zugriffsrechtemanagement ermöglichen kann.

Beispielsweise können eine bestimmten Nutzer bzw. dessen Nutzer-Zertifikat in der ID-Datenbank drei unterschiedliche Zugriffs-Zertifikate in Form von drei unterschiedlichen numerischen Werten zugewiesen sein. Das erste Zugriffszertifikat berechtigt zum Lesen auf Datensätze, die von diesem Nutzer erstellt wurden. Das zweite Zugriffszertifikat berechtigt zum Schreiben bzw. Modifizieren des von diesem Nutzer erstellten Datensatzes. Und das dritte Zugriffszertifikat erlaubt es, auf einen Index zuzugreifen, der Feldwerte dieses Datensatzes enthält.

Die weitere Prüfung umfasst gemäß Ausführungsformen eine Prüfung, ob die Anfrage ein Nutzer-Zertifikat enthält, dem in der ID-Datenbank eines der Zugriffs-Zertifikate zugeordnet ist, welches die Anfrageeinheit zum Empfang der Zustandsdaten und/oder zur Veranlassung einer Zustandsänderung des Überwachungsobjekts berechtigt. Das Überwachungssystem ist dazu konfiguriert, die Ermöglichung der Übertragung der Zustandsdaten und/oder das Ändern des Zustands des Überwachungsobjekts nur dann zu veranlassen, wenn die Anfrage ein solches Nutzer-Zertifikat enthält.

Beispielsweise kann dieses Nutzer-Zertifikat ein Nutzer-Zertifikat sein, welches die Anfrageeinheit zur Veranlassung der Ausführung der oben beschriebenen Hardware- oder Software-Funktionalität berechtigt. Das Überwachungssystem ist dazu konfiguriert, die Ausführung dieser Funktionalität nur dann zu veranlassen, wenn die Anfrage ein solches Nutzer-Zertifikat enthält.

Ausführungsformen können vorteilhaft sein, da die Verwendung verschiedener Zugriffs-Zertifikate für unterschiedliche Zugriffsformen ein höchst feingranulares Zugriffsmanagement ermöglichen kann. Beispielsweise kann das Überwachungssystem drei unterschiedliche Typen von Zugriffsrechten unterscheiden, die jeweils als einzigartiger numerischer Wert ausgebildet sein kann. Die Art des Zugriffs der durch das entsprechende Zugriffszertifikat gewährt wird kann z.B. durch die Speicherposition bzw. das Feld dieses Zugriffs-Zertifikats in der ID-Datenbank und/oder in Metadaten der Zugriffs-Zertifikate und/oder durch numerische Prefixes oder Suffixes spezifiziert sein.

Nach Ausführungsformen ist jeder der Referenzberechtigungsnachweise eines der Zugriffs-Zertifikate der ID-Datenbank.

Gemäß Ausführungsformen beinhaltet das Speichermedium einen oder mehrere Referenzberechtigungsnachweise. Das Überwachungssystem ist dazu konfiguriert, die Referenzberechtigungsnachweise mit der Anfrage abzugleichen, wobei jeder der Referenzberechtigungsnachweise eines der Zugriffs-Zertifikate der ID-Datenbank ist, wobei die Zugriffszertifikate jeweils numerische Datenwerte sind.

Beispielsweise können sämtliche Zugriffs-Zertifikate als rein numerische Werte ausgebildet sein. Jedem Nutzer können dabei so viele überwachungssystemweiteinmalige numerische Werte als Zugriffszertifikate zugewiesen sein wie es Zugriffsarten gibt, die individuell erlaubt oder verhindert werden sollen. Die Verwendung numerischer Werte hat den Vorteil, dass eine Prüfung, ob ein Zugriffsrecht vorliegt, sehr schnell und unter geringem rechnerischen Aufwand durch Vergleich zweiter Zahlen durchgeführt werden kann.

Nach Ausführungsformen ist das Zugriffs-Zertifikat ausgewählt aus einer Gruppe umfassend:
- ein Lesezugriffs-Zertifikat, welches einem Nutzer einen lesenden Zugriff auf den zumindest einen Datensatz ermöglicht;
- ein Schreibzugriffs-Zertifikat, welches einem Nutzer einen modifizierenden Zugriff auf den zumindest einen Datensatzes ermöglicht; der Schreibzugriff kann z.B. das Löschen (DELETE) oder Ändern (UPDATE) eines Datensatzes beinhalten;
- ein Indexzugriffs-Zertifikat, welches einem Nutzer Kenntnis der Existenz des zumindest einen Datensatzes in der Nutzdaten-Datenbank und einen lesenden Zugriff auf Metadaten des zumindest einen Datensatzes ermöglicht.

Beispielsweise ermöglicht ein Indexzugriffs-Zertifikat es einem Nutzer oder einem anfragenden System, eine statistische Auswertung mehrerer Datensätze zu erhalten, etwa bezüglich der Frage, auf wie viele Datensätze einer Nutzdaten-Datenbank ein bestimmter Nutzer Lesezugriff oder Schreibzugriff besitzt oder wie viele Datensätze in dem Nutzdatenfeld die Wörter "Kalibrierungsfehler" beinhalten.

Unter einem "Nutzer" kann hier eine Person aber auch ein weiteres Überwachungssystem und/oder die Anfrageeinheit bezeichnet sein, da ein solches Überwachungssystem als ein "virtueller Nutzer" angesehen werden kann.

Die Verwendung mehrerer unterschiedlicher Typen von Zugriffs-Zertifikaten für unterschiedliche Zugriffsarten und die individuelle Zuweisung dieser Zertifikatstypen an einzelne Nutzer um diesen den Zugriff auf die von einem Nutzer erstellte Daten zu ermöglichen, kann vorteilhaft sein, da dadurch eine besonders feingranulare Kontrolle des Zugriffs auf die Daten ermöglicht wird.

Nach Ausführungsformen beinhaltet die Anfrage ein Nutzer-Zertifikat, hier als Anfragenutzer-Zertifikat bezeichnet. Die Datensätze der Nutzdatenbank beinhalten jeweils das Zugriffs-Zertifikat desjenigen Nutzers, welcher den Datensatz erstellt hat, als Bestandteil des Datensatzes in einem eigenen Feld des Datensatzes.

Vorzugsweise handelt es sich bei den in den entsprechenden Feldern des Datensatz gespeicherten Zugriffs-Zertifikaten um reine Zahlenwerte, nicht um komplexe x509 Zertifikate. Metadaten bezüglich der Gültigkeit und andere Aspekte können getrennt von dem eigentlichen Zugriffs-Zertifikat in der ID-Datenbank gespeichert sein. Vorzugsweise enthält jeder von einem bestimmten Nutzer in einer Nutzdaten-Datenbank erstellte Datensatz in seinen entsprechenden Feldern sämtliche Zugriffs-Zertifikate des diesen Datensatz erstellenden Nutzers. Wird beispielsweise ein Datensatz DS von Nutzer (z.B. Nutzer, lokaler Prozess oder externes Überwachungssystem) "U1" erstellt und der Nutzer-U1 hat gemäß dem Inhalt der ID-Datenbank genau 3 Typen von Zertifikaten (ein Lesezugriffs-Zertifikat "U1.Z-Zert[R]", ein Schreibzugriffs-Zertifikat "U1.Z-Zert[W]" und ein Indexzugriffs-Zertifikat "U1.Z-Zert[S]"), so werden Kopien genau dieser 3 Zugriffs-Zertifikate im Zuge der Speicherung des Datensatzes DS aus der ID-Datenbank erstellt und die in die entsprechenden Felder des Datensatzes DS gespeichert. Wenn nun der Nutzer-U1 einem anderen Nutzer U2 Leserechte bezüglich des Datensatzes DS einräumt, bedeutet das, dass in der ID-Datenbank eine Zuordnung dieses Lesezugriffs-Zertifikat "U1.Z-Zert[R]" des Nutzers U1 und des Nutzer-Zertifikats des Nutzers U2 gespeichert wird. Falls der Nutzer (z.B. Nutzer, lokaler Prozess oder externes Überwachungssystem) "U2" nun zu einem späteren Zeitpunkt auf den Datensatz DS zugreifen will, sendet die Nutzdaten-Datenbank, die den Datensatz DS beinhaltet, in Antwort auf die Zugriffsanfrage des Nutzers U2 automatisch eine Berechtigungsanfrage an die ID-Datenbank zusammen mit den in dem Datensatz DS gespeicherten Zugriffsrechten des Erstellers U1. Die ID-Datenbank prüft daraufhin, ob ein dem Nutzer U2 zugeordnetes Nutzer-Zertifikat in der ID-Datenbank mit ein oder mehreren der in dem Datensatz DS gespeicherten Zugriffsrechte des Erstellers U1 verknüpft gespeichert ist. Nur falls dies der Fall ist, darf er auf den Datensatz zugreifen.

In manchen Ausführungsformen prüft die ID-Datenbank zusätzlich, ob dem Nutzer U2 in der ID-Datenbank zusätzlich ein Eigner-Zertifikat für die Nutzdaten-Datenbank zugewiesen ist, die den einen Datensatz enthält. Nur falls die ID-Datenbank ein dem Nutzer U2 zugeordnetes Nutzer-Zertifikat enthält, das mit ein oder mehreren der in dem Datensatz DS gespeicherten Zugriffsrechte des Erstellers U1 verknüpft gespeichert ist, und falls der Nutzer U2 außerdem Eigner der Nutzdaten-Datenbank ist, darf er auf den Datensatz zugreifen.

Nach Ausführungsformen umfasst das zumindest eine Zugriffs-Zertifikat, dass vorzugsweise als Bestandteil des erstellten Datensatzes gespeichert ist, mehrere Zugriffs-Zertifikate für jeweils andere Zugriffsarten. Die mehreren Zugriffs-Zertifikate umfassen zum Beispiel ein Schreibzugriffs-Zertifikat Z.Zert_U2[W] des erstellenden Nutzers, und/oder ein Lesezugriffs-Zertifikat Z.Zert_U2[R] des erstellenden Nutzers und/oder ein Indexzugriffs-Zertifikat Z.Zert_U2[S].

Nach Ausführungsformen wird die Prüfung und/oder Verwaltung der Zugriffsberechtigungen, also z.B. die Erzeugung und Prüfung von Nutzer-Zertifikaten, Eigner-Zertifikaten, Zugriffs-Zertifikaten und/oder entsprechenden Kettenobjekten von einem auf dem Überwachungssystem instanziierten Zugriffs-Verwaltungssystem, das z.B. als Zugriffs-Verwaltungsprogramm ausgebildet sein kann, implementiert.

Das Zugriffs-Verwaltungssystem erzeugt gemäß Ausführungsformen der Erfindung automatisch für jede der Zugriffsarten eine Indexstruktur aus den Zugriffs-Zertifikaten sämtlicher Datensätze, die diese Zugriffsart spezifiziert. So kann zum Beispiel ein erster Index für die Schreibzugriffs-Zertifikate, ein zweiter Index für die Lesezugriffs-Zertifikate und ein dritter Index für die Index Zugriffs-Zertifikate sowie ein weiterer Index für die Nutzdaten selbst erstellt werden. In Antwort auf eine Datenbankfrage eines Nutzers, die auf einen oder mehrere der für die Nutzdaten-Datenbank erstellten Indices der Zugriffs-Zertifikate zugreift, prüft das Zugriffs-Verwaltungssystem, ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist. Diese Prüfung kann insbesondere durch die Nutzdaten-Datenbank in Interoperation mit der ID-Datenbank und gegebenenfalls weiteren Modulen, zum Beispiel dem ID-Management-Modul, erfolgen. Die Nutzdaten-Datenbank ermöglicht dem anfragenden Nutzer die Verwendung der ein oder mehreren Indices zur Ausführung der Datenbankabfrage nur dann, wenn dem anfragenden Nutzer das Indexzugriffs-Zertifikat zugewiesen ist.

Dies kann vorteilhaft sein, da über den Index eine schnelle Abfrage einer Zugriffsberechtigungsstatistik über die Datensätze einer Datenbank im Hinblick auf mehrere verschiedene Nutzer durchgeführt werden kann. Aus dieser geht dann zum Beispiel hervor, welche der bei dem Zugriffs-Verwaltungssystem registrierten Nutzer im Hinblick auf welche Datensätze zum Lesen, Schreiben und oder Indexzugriff berechtigt ist. Allerdings wird über eine Anfrage, die durch das Indexzugriffs-Zertifikat ermöglicht wird, nur eine statistische Auskunft über mehrere Datensätze gegeben, ein lesender oder schreibenden Zugriff auf die Nutzdaten der Datensätze ist in den Rechten, die einen Indexzugriffs-Zertifikat gewährt, nicht umfasst.

Ausführungsformen können den Vorteil haben, dass das Zugriffs-Zertifikat getrennt von den übrigen Nutzdaten indiziert werden kann, sodass über den Index eine schnelle Suche nach Datensätzen, die ein bestimmter Nutzer erstellt hat, möglich ist.

In der ID-Datenbank sind gemäß Ausführungsformen eine Vielzahl Zugriffsermächtigungskettenobjekten gespeichert. Jedes Zugriffsermächtigungskettenobjekt beinhaltet eines der Zugriffs-Zertifikate und ein oder mehrere der Nutzer-Zertifikate, wobei die Reihung der Nutzer-Zertifikate in dem Zugriffsermächtigungskettenobjekt die Sequenz der Nutzer widergibt, die dieses Zugriffs-Zertifikat einem jeweils anderen Nutzer, dessen Nutzer-Zertifikat in dem Zugriffsermächtigungskettenobjekt enthalten ist, zugewiesen haben. Die Reihung der Nutzer-Zertifikate in dem Zugriffsermächtigungskettenobjekt gibt die Sequenz der Gewährung des in dem Zugriffs-Zertifikat spezifizierten Rechtes ausgehend von dem durch das erste Nutzer-Zertifikat in dem Zugriffsermächtigungskettenobjekt repräsentierten Nutzer an.

Die weitere Prüfung der Anfrage umfasst eine Prüfung, ob in der ID-Datenbank ein Zugriffsermächtigungskettenobjekt existiert, das ein Zugriffs-Zertifikat beinhaltet, das identisch ist zu dem in der Anfrage enthaltene Berechtigungsnachweis, wobei dieses Zugriffsermächtigungskettenobjekt dieses Zugriffs-Zertifikat dem Anfragenutzer-Zertifikat direkt oder über eine Kette aus ein oder mehreren weiteren Nutzer-Zertifikaten zuweist, wobei diese Zuweisung die Gewährung des in dem Zugriffs-Zertifikat spezifizierten Rechtes an den durch das Anfragenutzer-Zertifikat repräsentierten Anfrage-Nutzers belegt.

Die weitere Prüfung ergibt nur dann, wenn die ID-Datenbank ein solches Zugriffsermächtigungskettenobjekt enthält, dass die Anfrageeinheit die Statusdaten übermitteln und/oder das Überwachungsobjekt steuern darf (z.B. also zur Veranlassung der Ausführung einer entsprechenden Hardware- oder Software Funktionalität des Überwachungssystems berechtigt ist).

Ausführungsformen der Erfindung können den Vorteil haben, dass einzelnen Nutzern bzw. Überwachungssystemen die Möglichkeit gegeben werden kann, mittels Zugriffsermächtigungskettenobjekten Zugriffsrechte auf eigene (über den zumindest einen eigenen Sensor erfasste) Datensätze, die Zustandsdaten des aktuell oder ehemals operativ gekoppelten Überwachungsobjekts enthalten, in delegierbarer oder nicht-delegierbarer Form anderen Nutzern bzw. Überwachungssystemen einzuräumen.

Nach Ausführungsformen ist der Nutzdaten-Datenbank ist ein Eigner-Zertifikat zugeordnet. Das Eigner-Zertifikat wiederum ist in der ID-Datenbank einem Nutzer-Zertifikat eines Nutzers zugeordnet. Ein Eigner-Zertifikat ist ein Zertifikat, das einer oder mehreren Nutzdaten-Datenbanken zugeordnet ist und jedem Nutzer, dem es zugeordnet ist, das Recht gewährt, Datensätze in dieser Nutzdaten-Datenbank anzulegen.

Die weitere Prüfung der Anfrage umfasst eine Prüfung, ob die Anfrage ein Nutzer-Zertifikat enthält, welches in der ID-Datenbank dem Eigner-Zertifikat der Nutzdaten-Datenbank zugeordnet ist, wobei die weitere Prüfung nur dann, wenn dies der Fall ist, ein positives Ergebnis ergibt, also beispielsweise zum Ergebnis hat, dass die Anfrageeinheit hinreichend berechtigt ist.

Dies kann vorteilhaft sein, da jeder Nutzer bzw. jedes Überwachungssystem, dem ein Nutzer-Zertifikat in der ID-Datenbank zugewiesen ist, auch auf der untersten "Rechte-Ebene", volle Kontrolle über die von ihm erstellten Datensätze der Nutzdaten-Datenbank erlangt: auch wenn ein anderer Nutzer, z.B. die Anfrageeinheit oder ein anderes Überwachungssystem, dem Nutzer, dem das Überwachungssystem zugewiesen ist, ein Eigner-Zertifikat für die Nutzdaten-Datenbank hat und also berechtigt ist, dort eigene Datensätze anzulegen, bedeutet dies nicht, dass dieser Nutzer automatisch auch lesenden oder manipulierenden Zugriff auf die von anderen Nutzern erstellten Daten hat. Damit wird der Datenschutz enorm erhöht, denn bei dem die Daten erzeugenden Nutzer ("Erzeuger-Nutzer") kann es sich um externe Systeme handeln, welchen nicht komplett vertraut wird. Beispielsweise kann ein Eigner-Zertifikat für eine Nutzdaten-Datenbank an weiteres Überwachungssystem ausgestellt werden, sodass dieses Daten, z.B. trainierte ML-Modelle, in die Nutzdaten-Datenbank schreiben kann. Die Daten können beispielsweise in einer Anfrage enthalten sein, die wie beschrieben zweistufig geprüft wird. Dies bedeutet aber nicht automatisch, dass andere Überwachungssysteme, die ebenfalls Eigner-Rechte für diese Nutzdaten-Datenbank, lesend auf diese Datensätze zugreifen können. Dies ist vielmehr nur möglich, wenn ein Nutzer, der einen bestimmten Datensatz anlegt, ein oder mehreren Zugriffsrechte bezüglich der von diesem Nutzer erstellten Datensätzen explizit an diese anderen Überwachungssysteme zuweist. In einem vorteilhaften Aspekt können manche Ausführungsformen also ein hohes Maß an Datenschutz gewährleisten, da eine Prüfung zweier unabhängiger Parameter vor Zugriffsgewährung erfolgt (sowohl bezüglich der Eignerschaft als auch bezüglich der Zugriffsberechtigung). Somit kann ein komplexes Rechtemanagement etabliert werden, welches einen koordinierte und sicheren Datenaustausch zwischen mehreren vernetzten Überwachungssystemen und/oder Zugriff auf lokale Speicherbereiche anderer Überwachungssysteme ermöglicht. Dies kann insbesondere in Anwendungsszenarien vorteilhaft sein, wo eine Vielzahl von Überwachungssystemen autonom ein jeweils operativ gekoppeltes Überwachungsobjekt überwachen, wobei die Überwachungssysteme sich aber dennoch für spezifische Funktionen, z.B. Softwareupdates, Synchronisation von Trainingsdaten oder trainierten ML-Modellen etc. auf sichere und kontrollierte Weise austauschen. Beispielsweise können alle oder eine größere Zahl von sensorbestückten Überwachungssystemen für die verschiedenen Komponenten eines Fahrzeugs oder Gebäudes zwar autonom den Zustand der an sie gekoppelten Fahrzeugkomponente bzw. Gebäudekomponente überwachen, sie können jedoch dennoch Daten miteinander austauschen, z.B. die erfassten Sensorwerte oder Anfragen, die Vorhersagen, insbesondere Warnungen oder ML-Modelle beinhalten. Die Überwachungseinheiten des Fahrzeugs bzw. des Gebäudes bilden somit eine aus semiautonomen Überwachungseinheiten bestehendes "Überwachungsnetzwerk" bzw. verteiltes Überwachungssystem. Dies kann die Funktionalität erheblich verbessern. Falls beispielsweise das Kühlwasser-Überwachungssystem auf Basis der lokal erfassten Messwerte eine Vorhersage berechnet, dass der Motor bei gleichbleibend raschem Temperaturanstieg in 10 Minuten eine kritische Temperatur erreichen und die Leistung drosseln wird, kann das Motor-Überwachungssystem als Anfrageeinheit agieren und eine Anfrage mit dieser Nachricht und einem Berechtigungsnachweis für das Schreiben eines bestimmten, "warnungsbezogenen" Datensatzes in die jeweiligen lokalen Nutzdaten-Datenbanken an alle in dem Motor-Überwachungssystem gespeicherten Adressen weiterer Überwachungssysteme des Fahrzeugs senden. Diese können nach Durchführung der mehrstufigen Prüfung dieser Warnungsanfrage die Warnung lokal speichern und danach autonom entscheiden, ob und wie sie auf diese Warnmeldung reagieren.

In einem weiteren Aspekt können Ausführungsformen der Erfindung sicherstellen, dass technische Administratoren, die z.B. das Überwachungssystem bereitstellen und administrieren, im Hinblick auf die Zugriffsrechte auf die in den Nutzdaten-Datenbanken gespeicherten Informationen keine besonderen Zugriffsrechte besitzen.

Nach Ausführungsformen ist die Nutzdaten-Datenbank des Überwachungssystems frei von Zugriffsermächtigungskettenobjekten. Die Datensätze der Nutzdaten-Datenbank beinhalten neben den Nutzdaten nur die Zugriffs-Zertifikate, die dem Nutzer, welcher diesen Datensetz erstellt hat, Zugriff auf diesen Datensatz gewähren.

Nach Ausführungsformen ist die ID-Datenbank dazu ausgebildet, auf Anfrage Berechtigungstoken für einen anfragenden Nutzer (z.B. für ein anfragendes Überwachungssystem, dem ein Nutzer-Zertifikat zugewiesen ist) zu erzeugen. Die Nutzdaten-Datenbank ist dazu ausgebildet, die Berechtigung auf Basis des Berechtigungstokens zu prüfen.

Ausführungsformen können den Vorteil haben, dass die Trennung von Nutzdatenhaltung in einer Datenbank und die Speicherung von Zugriffs- und Nutzer-Zertifikaten in einer anderen Datenbank in Kombination mit der Ausstellung und Prüfung von Berechtigungstoken im Zusammenwirken der beiden Datenbanken eine sehr feingranulare Zugriffskontrolle ermöglicht. Die damit einhergehenden Rechenoperationen werden erst im Zuge der weiteren Berechtigungsprüfung durchgeführt, also nur dann, wenn die initiale Prüfung mit einem positiven Ergebnis (die Anfrage ist vertrauenswürdig) beendet wurde. Zudem können Ausführungsformen den Vorteil haben, dass ein Export von Nutzdaten in andere Überwachungssysteme möglich ist, ohne das gesamte in einem bestimmten Überwachungssystem verwendete Zugriffsrechtemanagement, das im Wesentlichen in der ID-Datenbank gespeichert ist, ebenfalls auf das andere Überwachungssystem übertragen wird, sodass hier jedes Überwachungssystem weiterhin sein eigenes Rechtemanagement aufrechterhalten kann.

Nach Ausführungsformen umfasst die Anfrage eine Zugriffsanfrage eines Anfrage-Nutzers (Anfrageeinheit, z.B. weiteres Überwachungssystem für das gleiche oder ein anderes Überwachungsobjekt oder ein Nutzer, dem diese Anfrageeinheit zugeordnet ist) auf einen Datensatz, den ein Ersteller-Nutzer in der Nutzdaten-datenbank angelegt hat. Das Überwachungssystem ist konfiguriert zum:
- Ermitteln der Zugriffs-Zertifikate des Ersteller-Nutzers (also eines Nutzers oder Überwachungssystems, welches diesen Datensatz initial erzeugt und in der Nutzdaten-Datenbank gespeichert hat), die in der Nutzdaten-Datenbank als Bestandteil des einen Datensatzes gespeichert sind, durch die Nutzdaten-Datenbank;
- Senden des Anfrage-Nutzer-Zertifikats, das dem Nutzer der Anfrageeinheit zugeordnet ist, und der ermittelten Zugriffs-Zertifikate, an die ID-Datenbank;
- In Antwort auf den Empfang des Anfrage-Nutzer-Zertifikats und der ermittelten Zugriffs-Zertifikate, Generierung eines Berechtigungstokens durch die ID-Datenbank, wobei der Berechtigungstoken angibt, ob der Anfrage-Nutzer dem einen Datensatz durch zumindest eines der Zugriffsermächtigungskettenobjekte zugewiesen ist;
- Übermittlung des Berechtigungstokens von der ID-Datenbank an die Nutzdaten-Datenbank;
- Prüfung, durch die Nutzdaten-Datenbank, anhand des Berechtigungstoken, ob dem Anfrage-Nutzer ob dem Anfrage-Nutzer die erforderlichen Zugriffsrechte in Form von Zugriffs-Zertifikate in Bezug auf den einen Datensatz zugewiesen sind;

Die Nutzdaten-Datenbank ist dazu konfiguriert, dem Anfrage-Nutzer Zugriff auf den einen Datensatz nur in dem Umfang der Zugriffs-Zertifikate zu gewähren, welche dem Anfrage-Nutzer in dem Berechtigungstoken zugewiesenen sind.

Nach manchen Ausführungsformen wird zusätzlich noch das Vorliegen eines Eigner-Zertifikats in die Prüfung einbezogen. Beispielsweise umfasst die Anfrage eine Zugriffsanfrage eines Anfrage-Nutzers, der die Anfrageeinheit repräsentiert, auf einen Datensatz, den ein Ersteller-Nutzer in der Nutzdaten-datenbank angelegt hat. Das Überwachungssystem ist konfiguriert zum:
- Ermitteln der Zugriffs-Zertifikate des Ersteller-Nutzers (also eines Nutzers bzw. Überwachungssystems, welches diesen Datensatz initial erzeugt und in der Nutzdaten-Datenbank gespeichert hat), die in der Nutzdaten-Datenbank als Bestandteil des einen Datensatzes gespeichert sind, durch die Nutzdaten-Datenbank;
- Senden des Anfrage-Nutzer-Zertifikats, das die Anfrageeinheit repräsentiert, und der ermittelten Zugriffs-Zertifikate, an die ID-Datenbank;
- In Antwort auf den Empfang des Anfrage-Nutzer-Zertifikats und der ermittelten Zugriffs-Zertifikate, Generierung eines Berechtigungstoken durch die ID-Datenbank, wobei der Berechtigungstoken angibt, ob der Anfrage-Nutzer einem Eigner-Zertifikat der Nutzdaten-Datenbank durch zumindest eines der Eignerschaftsermächtigungskettenobjekte zugewiesen ist und ob der Anfrage-Nutzer dem einen Datensatz durch zumindest eines der Zugriffsermächtigungskettenobjekte zugewiesen ist;
- Übermittlung des Berechtigungstoken von der ID-Datenbank an die Nutzdaten-Datenbank;
- Prüfung, durch die Nutzdaten-Datenbank, anhand des Berechtigungstoken, ob dem Anfrage-Nutzer ein Eigner-Zertifikat für die Nutzdaten-Datenbank zugewiesen ist und ob dem Anfrage-Nutzer die erforderlichen Zugriffsrechte in Form von Zugriffs-Zertifikate in Bezug auf den einen Datensatz zugewiesen sind;

Die Nutzdaten-Datenbank ist dazu konfiguriert, dem Anfrage-Nutzer einen Aufbau einer Datenbankverbindung zu der Nutzdaten-Datenbank nur dann zu gewähren, wenn diesem ein Eigner-Zertifikat für die Nutzdaten-Datenbank zugewiesen ist und dem Anfrage-Nutzer Zugriff auf den einen Datensatz nur in dem Umfang zu gewähren, den ihm die Zugriffs-Zertifikate im Berechtigungstoken einräumen.

Dies kann vorteilhaft sein, da einem Nutzer, der kein Eigner-Zertifikat hat, von vorneherein schon der Verbindungsaufbau zu der Nutzdaten-Datenbank verwehrt wird. Somit kann auf einfache Weise global sichergestellt werden (z.B. durch Entzug des Eigner-Zertifikats), dass ein bestimmter Nutzer (bzw. bestimmter Überwachungssystem oder Anfrageeinheit, das von diesem Nutzer repräsentiert wird) auf keinerlei Daten einer bestimmten Nutzdaten-Datenbank mehr zugreifen kann, ohne dass hierfür ggf. eine große Zahl an Nutzern bzw. Überwachungssystemen, die diesem Nutzer bzw. Überwachungssystem ein Zugriffsrecht für die von ihnen jeweils erstellte Datensätze eingeräumt haben, diesem einen Nutzer die Zugriffsrechte einzeln entziehen müssten. Durch Zuweisung oder Entziehung (z.B. Invalidierung oder Verweigerung einer erneuten Ausstellung nach dem Ablauf eines aktuellen Eigner-Zertifikats (typische Validitätsdauer z.B. innerhalb einiger Tage, Wochen oder Monate)) kann also ein relativ weitreichender, global gut kontrollierbarer Zugriffsschutz für sämtliche in einer Datenbank gespeicherten Daten bereitgestellt werden. Falls beispielsweise ein bestimmtes Überwachungssystem in seiner Nutzdaten-Datenbank Messwerte sammelt, die von mehreren anderen Überwachungssystemen für verschiedene Überwachungsobjekte erfasst wurden, und falls erkannt wird, dass eines dieser Überwachungssysteme wegen eines Kalibrierungsfehlers seines Sensors falsche Messdaten liefert, kann diesem einen Überwachungssystem einfach das Eignerschafts-Zertifikat für die Nutzdatenbank entzogen werden, um die Nutzdaten-Datenbank davor zu schützen, mit fehlerhaften Daten beschickt zu werden. Dies kann insbesondere dann vorteilhaft sein, wenn diese Daten die Datenbasis für Vorhersagen bilden oder zum Trainieren von ML-Modellen (Machine-Learning-Modellen) verwendet werden.

Beispielsweise kann es sich bei der Anfrage um eine Anfrage handeln, einen künftigen technischen Parameterwert - z.B. auf der Basis der in der Nutzdaten-Datenbank gespeicherten Datensätze - vorherzusagen und zurückzugeben. Bei dem Datensatz, auf den Zugriff begehrt wird, kann es sich z.B. um ein Machine-Learning Modell handeln, welches in einem Trainingsprozess auf lokalen Trainingsdaten gelernt hat, einen künftigen Wert eines bestimmten Parameters (z.B. eines Zustands- und/oder Leistungsparameters des Überwachungsobjekts) vorherzusagen. Beispielsweise könnte der vorherzusagende Parameterwert der voraussichtliche Zeitpunkt sein, wann ein bestimmtes Bauteil, das als Überwachungsobjekt fungiert, aufgrund von Materialermüdung ausgetauscht werden muss, wobei die Parameterwerte auf deren Basis diese Vorhersage berechnet wird, aktuelle Schwingungsparameterwerte sind, die von Sensoren des operativ an dieses Bauteil gekoppelten Überwachungssystems erfasst werden.

Nach Ausführungsformen beinhaltet jedes der Eigner-Zertifikate einen Delegierbarkeitsparameter, welcher entweder den Datenwert "DELEGIERBAR" oder den Datenwert "NICHT DELEGIERBAR" annehmen kann. Eine zur Erstellung der Eigner-Zertifikate verwendete Programmlogik, z.B. ein ID-Management Modul, ist so konfiguriert, dass
- ein Nutzer, dem ein Eigner-Zertifikat für die Nutzdaten-Datenbank zugeordnet ist und welcher ein Eigner-Zertifikat für einen anderen Nutzer für diese Nutzdaten-Datenbank erstellt, den Delegierbarkeitsparameter des erstellten Eigner-Zertifikats unabhängig vom Delegierbarkeitsparameter des ihm zugeordneten Eigner-Zertifikats auf "NICHT DELEGIERBAR" setzen kann, den Delegierbarkeitsparameter des erstellten Eigner-Zertifikats jedoch nur dann auf "DELEGIERBAR" setzen kann, wenn der Delegierbarkeitsparameter seines Eigner-Zertifikats den Wert "DELEGIERBAR" hat; und
- ein Nutzer, welchem eine Eigner-Zertifikat für eine Nutzdaten-Datenbank zugeordnet ist, dessen Delegierbarkeitsparameter den Wert "NICHT DELEGIERBAR" hat, keine weiteren Eigner-Zertifikate für andere Nutzer für diese Nutzdaten-Datenbank erstellen kann.

Nach alternativen Ausführungsformen beinhaltet ein Datenobjekt, das ein Eigner-Zertifikat einem bestimmten Nutzer zuweist oder das das Eigner-Zertifikat einer Kette aus zwei oder mehr Nutzern, die sich das Eigner-Recht zugewiesen haben, zuweist, den Delegierbarkeitsparameter. Ein solches Objekt, im Folgenden auch als Eignerschaftermächtigungskettenobjekt bezeichnet, kann z.B. in Form einer neuen Kopie erzeugt und in der ID-Datenbank gespeichert werden sobald eine Kette aus Nutzern, die sich das Eigner-Recht für eine Nutzdaten-Datenbank zugewiesen haben, um ein Kettenglied (also z.B. ein weiteres Nutzer-Zertifikat) erweitert wird. Der Delegierbarkeitsparameter kann entweder den Datenwert "DELEGIERBAR" oder den Datenwert "NICHT DELEGIERBAR" annehmen.

Ausführungsformen können den Vorteil haben, dass ein hoher Grad an Dynamik und Flexibilität im Hinblick auf die Vergabe der Zugriffsrechte ermöglicht werden kann: typischerweise wird einem bestimmten Nutzer, zum Beispiel dem Geschäftsführer, ein Eigner-Zertifikat für eine bestimmte Nutzdaten-Datenbank zugeordnet. Dieses "erste/initiale" Eigner-Zertifikat hat vorzugsweise den Delegierbarkeitsparameterwert "DELEGIERBAR". Dieser Nutzer kann nun über die erste Schnittstelle dieses erste Eigner-Zertifikat in identischer oder modifizierter Kopie ein oder mehreren weiteren Nutzern zuordnen, sodass diese weiteren Nutzer im Hinblick auf die Nutzdaten-Datenbank ebenfalls Eigner-Rechte bekommen und Datensätze anlegen können. Dabei kann der Inhaber des ersten Eigner-Zertifikats entscheiden, ob die den weiteren Nutzern zugeordneten Eigner-Zertifikate für diese Nutzdaten-Datenbank ebenfalls delegierbar sein sollen, diese anderen Nutzer also ebenfalls die Möglichkeit haben sollen, weiteren Nutzern Eigner-Rechte bezüglich dieser Nutzdaten-Datenbank auszustellen. Falls eine modifizierte Kopie des Eigner-Zertifikats für die ein oder mehreren weiteren Nutzer erstellt wird, welches den Delegierbarkeitsparameterwert "NICHT DELEGIERBAR" besitzt, können die weiteren Nutzer zwar eine Datenbankverbindung zu der Nutzdaten-Datenbank erstellen und dort Datensätze erzeugen, jedoch keine weiteren Eigner-Zertifikate für weitere Nutzer bezüglich dieser Nutzdaten-Datenbank ausstellen. Die Kette der ausgestellten Eigner-Zertifikate endet also notwendigerweise mit der Ausstellung von nicht weiter delegierbaren Eigner-Zertifikaten, wobei es natürlich möglich ist, das einen bestimmten Nutzer von einem Datenbank-Eigner ein delegierbares Eigner-Zertifikat ausgestellt wird und von einem anderen Datenbank-Eigner ein nicht-delegierbares Eigner-Zertifikat. In diesem Fall kann der Nutzer weitere Eigner-Zertifikate für Dritte ausstellen, jedoch wird vorzugsweise die chronologische Kette der ein Eigner-Zertifikat ausstellen Nutzer gespeichert, zum Beispiel in Form von Ermächtigungsobjekten und/oder Logeinträgen, sodass der Pfad der Verantwortungskette dokumentiert ist. Vorzugsweise erfolgt die Speicherung dieser chronologischen Kette in einer speziellen Datenbank, im folgenden "ID- Datenbank" genannt. In analoger Weise kann der Delegierbarkeitsparameter innerhalb eines Zuweisungsobjekts, also z.B. eines Eignerschaftsermächtigungskettenobjekts, gespeichert sein und vorgeben, ob ein Nutzer weitere Zuweisungsobjekte (weitere Eignerschaftsermächtigungskettenobjekte) erstellen darf um ein Eigner-Zertifikat anderen Nutzern zuzuweisen).

Nach Ausführungsformen umfasst die ID-Datenbank einen privaten Signierschlüssel. Die Nutzdaten-Datenbank umfasst einen öffentlichen Signaturprüfschlüssel, welcher zur Prüfung der mit dem Signierschlüssel erstellten Signaturen ausgebildet ist. Das Überwachungssystem ist konfiguriert zum:
- Signierung des Berechtigungstoken durch die ID-Datenbank mit dem Signierschlüssel, wobei der Berechtigungstoken in signierter Form an die Nutzdaten-Datenbank übermittelt wird; und
- Prüfung, durch die Nutzdaten-Datenbank mittels des Signaturprüfschlüssels, ob die Signatur des Berechtigungstoken valide ist, wobei der Aufbau der Datenbankverbindung zwischen Anfrageeinheit und Nutzdaten-Datenbank und der Datensatzzugriff nur dann gestattet wird, wenn die Signatur valide ist.

Ausführungsformen können den Vorteil haben, dass die Nutzdaten-Datenbank anhand der Signatur prüfen kann, dass ein Berechtigungstoken tatsächlich von der ID-Datenbank erzeugt wurde und nicht von einem nicht vertrauenswürdigen Dritten.

Nach Ausführungsformen führt die ID-Datenbank des Überwachungssystems im Zuge der Erzeugung des Berechtigungstoken beinhaltend eines der Eigner-Zertifikate eine Zertifikatskettenprüfung durch, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekten zugewiesen ist, eingebunden ist. Die Signierung des Berechtigungstoken erfolgt nur im Falle der Feststellung einer erfolgreichen Einbindung.

Zusätzlich oder alternativ dazu führt die ID-Datenbank im Zuge der Erzeugung des Berechtigungstoken beinhaltend ein oder mehrere Zugriffs-Zertifikate eines Erzeuger-Nutzers (Erzeuger eines Datensatzes), eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist, wobei die Signierung des Berechtigungstoken nur im Falle der Feststellung einer erfolgreichen Einbindung erfolgt. Die Erzeugung des Berechtigungstoken und die damit einhergehende Zertifikatskettenprüfung kann Bestandteil der weiteren Prüfung sein.

Nach Ausführungsformen beinhaltet das Überwachungssystem ein software- oder hardwarebasiertes Zugriffs-Verwaltungssystem. Das Zugriffs-Verwaltungssystem kann dazu konfiguriert sein, eine grafische Benutzeroberfläche (GUI) bereitzustellen. Die GUI ermöglicht es Nutzern einer Organisation, weitere Eigner-Zertifikate für andere, manuell ausgewählte Nutzer (z.B. Überwachungssysteme) für eine bestimmte Nutzdaten-Datenbank zu erstellen, sofern dem ausstellenden Nutzer selbst ein entsprechendes Eigner-Zertifikat in der ID-Datenbank zugewiesen ist. Zusätzlich kann es diese Benutzeroberfläche dem Nutzer, der einen bestimmten Datensatz erstellt hat, ermöglichen, ein oder mehreren anderen manuell über die GUI ausgewählten Nutzern bzw. durch diese repräsentierte anderen Überwachungssystemen, ein oder mehrere ausgewählte Zugriffsrechte auf diesen Datensatz einzuräumen. Beispielsweise kann die GUI mehrere Personen oder Überwachungssysteme in Form einer auswählbaren Personenliste bzw. Überwachungssystemliste grafisch repräsentieren, sodass ein Nutzer der GUI durch Auswahl von ein oder mehreren Elementen aus dieser Liste die Empfänger der einzuräumenden Eigner-und Zugriffsrechte spezifizieren kann. Weitere auswählbare GUI Elemente, zum Beispiel Radio-Buttons oder Check-Boxes, können es dem Nutzer der GUI ermöglichen, durch Auswahl dieses Elementes den Delegierbarkeitsparameter des ausgestellten Zugriffs-bzw. Eigner-Zertifikats zu bestimmen (delegierbar oder nicht-delegierbar), sofern die Berechtigung des Nutzers hierfür ausreichend ist. Die GUI kann ferner über auswählbare GUI Elemente verfügen, die es einem Nutzer ermöglichen, Zugriffsrechte, die er anderen Nutzern bzw. Überwachungssystemen eingeräumt hat, auch wieder zu entziehen. Die GUI ist so konfiguriert, dass sie automatisch im Hintergrund neue Zertifikate und/oder Zuweisungen von Zertifikaten zu Nutzern bzw. Überwachungssystemen gemäß den Eingaben des Nutzers über die GUI erstellt oder invalidiert und den Inhalt der ID-Datenbank entsprechend aktualisiert.

Nach Ausführungsformen handelt es sich bei den ein oder mehreren Nutzdaten-Datenbanken und der ID-Datenbank jeweils um eine NoSQL-Datenbank, also um eine Datenbank eines NoSQL Datenbanksystems. Vorzugsweise handelt es sich bei den NoSQL-Datenbanken jeweils um eine sogenannte "strukturlose" Datenbank, die eine freie Definition der Art und Anzahl der Datenfelder unterstützt. Vorzugsweise ist die NoSQL-Datenbank so konfiguriert, dass der Inhalt sämtlicher Datenfelder eines jeden neuen Datensatzes automatisch indexiert wird und dass Änderungen des Inhalts der Datenbank in Form neuer Versionen gespeichert werden ("versionierte Datenbank"). Vorzugsweise wird die Erzeugung neuer Zugriffs-und/oder Eigner-Zertifikate sowie die chronologische Sequenz der Nutzer, die anderen Nutzern jeweils diese Zertifikate zugewiesen haben, in einer Log (z.B. Log-Datei) der ID-Datenbank gespeichert.

Nach Ausführungsformen handelt es sich bei dem Zugriffs-Verwaltungssystem um ein Datenbanksystem. Es ist jedoch auch möglich, dass das Zugriffsverwaltungssystem in der Firmware oder Software des Microcontrollers, in deren Speicher die Zertifikate und Ermächtigungskettenobjekte sowie die hier beschriebene Programmlogik implementiert sein können, implementiert ist.

Nach Ausführungsformen ist dem Überwachungssystem, das die Anfrage empfängt, ein erster Nutzer zugeordnet oder das Überwachungssystem selbst wird als erster (virtueller) Nutzer behandelt. Dem ersten Nutzer ist ein erstes Nutzer-Zertifikat zugeordnet. Das erste Nutzer-Zertifikat kann zum Beispiel ein Root-Zertifikat, das von einer Zertifizierungsstelle (certifying authority - CA) für eine bestimmte Organisation herausgegeben wird, sein, oder ein von dem Root-Zertifikat prüfbar abgeleitetes Zertifikat. Das erste Nutzer-Zertifikat ist in eine von einer Zertifizierungsstelle herausgegebene erste Zertifikatskette prüfbar eingeordnet (ist also beispielsweise bis zum Root-Zertifikat der Zertifizierungsstelle prüfbar). Dies kann vorteilhaft sein, da Zertifizierungsstellen als unabhängige Vertrauensgaranten auf breiter Basis bereits akzeptiert sind und bereits von vielen bestehenden technischen Systemen zur Prüfung der Authentizität bestimmter Nutzer und Nutzeraktionen verwendet werden.

Nach Ausführungsformen wird das Eigner-Zertifikat für den ersten Nutzer, das dessen Eignerschaft der Nutzdaten-Datenbank zertifiziert, so erstellt, dass dieses in die erste Zertifikatskette eingeordnet ist und durch das erste Nutzer-Zertifikat prüfbar ist. Beispielsweise wird das Eigner-Zertifikat von dem Zugriffs-Verwaltungssystem durch den privaten Schlüssel des ersten Nutzer-Zertifikats signiert. In analoger Weise kann der erste Nutzer auch Kopien von Zugriffs-Zertifikaten, die anderen Nutzern (z.B. anderen Überwachungssystemen oder der Anfrageeinheit) Zugriff auf die von dem ersten Nutzer erstellte Datensätze einräumen, mit dem privaten Schlüssel seines Nutzer-Zertifikats (hier also des ersten Nutzer-Zertifikats) signieren.

Nach Ausführungsformen ist einem zweiten Nutzer (auch "Anfrage-Nutzer" genannt, z.B. anderen Überwachungssystemen oder der Anfrageeinheit) ein zweites Nutzer-Zertifikat zugeordnet, wobei das zweite Nutzer-Zertifikat in eine von einer Zertifizierungsstelle herausgegebene zweite Zertifikatskette prüfbar eingeordnet ist.

Nach Ausführungsformen umfasst das Verfahren eine Erstellung eines dritten Eigner-Zertifikats durch den zweiten Nutzer und Verknüpfung des dritten Eigner-Zertifikats mit einem dritten Nutzer, um diesem zu ermöglichen, Datensätze in der Nutzdaten-Datenbank anzulegen.

Gemäß Ausführungsformen werden auch Zugriffs-Zertifikate, wie bereits für die Eigner-Zertifikate beschrieben, als delegierbare oder als nicht-delegierbare Zugriffs-Zertifikate erstellt und anderen Nutzern zugewiesen. Auch die Zuweisung selbst, also die Zugriffsermächtigungskettenobjekte, können delegierbar oder nicht-delegierbar sein. So kann jeder Ersteller eines Datensatzes und jeder Inhaber eines delegierbaren Zugriffs-Zertifikats eines anderen Nutzers, der einen Datensatz erstellt hat, flexibel selbst entscheiden, ob und inwieweit er die Zugriffs-Verantwortung und damit zusammenhängende Pflichten und Tätigkeiten an andere Nutzer bzw. durch diese repräsentierte Überwachungssysteme überträgt. Dies kann vorteilhaft sein, da ein hoher Grad an Flexibilität und Komplexität der Zugriffsgewährung ermöglicht wird.

Nach Ausführungsformen sind in einer ID-Datenbank eine Vielzahl von Nutzer-Zertifikaten, eine Vielzahl von Zugriffs-Zertifikaten und eine Vielzahl von Eigner-Zertifikaten gespeichert. Das Verfahren umfasst die Speicherung von Eignerschaftsermächtigungskettenobjekten und/oder Zugriffsermächtigungskettenobjekten in der ID-Datenbank.

Nach Ausführungsformen ist jedes Eignerschaftsermächtigungskettenobjekt ein Datenobjekt, welches eines der Eigner-Zertifikate und ein oder mehrere der Nutzer-Zertifikate beinhaltet (und dadurch einander zuweist). Die Reihung der Nutzer-Zertifikate in dem Eignerschaftsermächtigungskettenobjekt gibt die Sequenz der Nutzer, die dieses Eignerschafts-Zertifikat für jeweils andere Nutzer erstellt und diesen zugewiesen haben, wieder.

Jedes Zugriffsermächtigungskettenobjekt ist ein Datenobjekt, welches eines der Zugriffs-Zertifikate und ein oder mehrere der Nutzer-Zertifikate beinhaltet (und dadurch einander zuweist). Die Reihung der Nutzer-Zertifikate in dem Zugriffsermächtigungskettenobjekt gibt die Sequenz der Nutzer, die dieses Zugriffs-Zertifikat für jeweils andere Nutzer ausgestellt haben, wieder.

Nach Ausführungsformen sind die Nutzdaten-Datenbanken frei von Zugriffsermächtigungskettenobjekten und beinhalten für jeden Datensatz nur die Zugriffs-Zertifikate, die dem Nutzer, welcher diesen Datensetz erstellt hat, Zugriff auf diesen Datensatz gewähren.

Die Verknüpfung dieser Zugriffs-Rechte des Datensatzerstellers mit ein oder mehreren anderen Nutzern um diesen Zugriff auf den Datensatz zu gewähren ist nicht in der Nutzdaten-Datenbank gespeichert, sondern in der ID-Datenbank. Umgekehrt enthält die ID-Datenbank keine Referenz auf einzelne Datensätze der Nutzdaten-Datenbänke. Dies kann vorteilhaft sein, da die Größe und Komplexität der einzelnen Datensätze der Nutzdaten-Datenbank begrenzt und logisch von der Verwaltung der Zugriffsrechte weitgehend entkoppelt wird. Die Größe der Datensätze wird also auch dadurch begrenzt, dass nicht die komplette Kette der Berechtigungsübertragungen als Bestandteil der Datensätze gespeichert werden. Insbesondere bei einer Vielzahl kleiner Datensätze mit identischer Berechtigungsstruktur kann dies den von der Datenbank benötigten Speicherplatz erheblich reduzieren.

Nach Ausführungsformen führt die ID-Datenbank im Zuge der Erzeugung des Berechtigungstoken, der eines der Eigner-Zertifikate beinhaltet, eine Zertifikatskettenprüfung durch. Dies geschieht, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekte zugewiesen ist, eingebunden ist. Die ID-Datenbank signiert den Berechtigungstoken nur im Falle der Feststellung einer erfolgreichen Einbindung in die Zertifikatskette des Eigner-Zertifikat. Diese Zertifikatskettenprüfung kann also insbesondere entlang der Zertifikatskette der Zertifizierungsstelle, die das Nutzer-Zertifikat als Root-Zertifikat für eine Organisation oder für eine funktional zusammenhängende Gruppe von Überwachungssystemen herausgegeben hat, erfolgen. Zusätzlich oder alternativ dazu führt die ID-Datenbank im Zuge der Erzeugung eines Berechtigungstoken, der ein oder mehrere Zugriffs-Zertifikate eines Nutzers zum Zugriff auf von ihm erstellte Datensätze beinhaltet, eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist. Die ID-Datenbank signiert den Berechtigungstoken nur im Falle der Feststellung einer erfolgreichen Einbindung.

Nach Ausführungsformen legt der zweite Nutzer (z.B. die Anfrageeinheit oder ein anderes externes Überwachungssystem), der einen bestimmten Datensatz in der Nutzdaten-Datenbank des Überwachungssystems erstellt hat, oder ein dritter Nutzer, dem über ein Zugriffsermächtigungskettenobjekt ein oder mehrere Zugriffszertifikate des zweiten Datenbank-Nutzers zugewiesen sind, ein weiteres Zugriffsberechtigungskettenobjekt an. In diesem weiteren Zugriffsberechtigungskettenobjekt werden ein oder mehrere Zugriffs-Zertifikate des Erstellers (also des zweiten Nutzers) dem vierten Nutzer zugewiesen. Die Nutzdaten-Datenbank ist dazu konfiguriert, vor der Gewährung des Zugriffs auf den von dem zweiten Nutzer erzeugten Datensatz durch den vierten Nutzer zu prüfen, ob dem vierte Nutzer ein oder mehrere dieser Zugriffs-Zertifikate zugewiesen sind. Die Prüfung erfolgt z.B. dann, wenn das von dem vierten Nutzer repräsentierte weitere Überwachungssystem eine Zugriffsanfrage sendet.

Nach einer Ausführungsform ist jedem der Datensätze in der Nutzdaten-Datenbank ein oder mehrere Zugriffs-Zertifikate des den Datensatz erstellenden Nutzers zugeordnet.

Nach Ausführungsformen sind in der Nutzdaten-Datenbank die Datensätze in einem Format gespeichert, welches eine Extraktion der in den Datensätzen enthaltenen Information ohne einen Zugriff über eine Datenbankverbindung zu der Nutzdaten-Datenbank ausschließt. Beispielsweise können die Datensätze als binäre Objekte oder in verschlüsselter Form gespeichert sein. Backups der Nutzdaten-Datenbank können durch Kopieren der Nutzdaten-Datenbank auf ein anderes Speichermedium erstellt werden, wobei der Nutzer, der diese Backups anlegt, kein Eigner-Zertifikat für diese Nutzdaten-Datenbank besitzt oder besitzen muss. Bespiesweise kann die Backup Erstellung durch eine Vielzahl von Überwachungssystemen durch einen Administrator-Nutzer durch eine Backup-Anfrage veranlasst werden. Der Administrator-Nutzer kann eine Person sein oder ein Super-Überwachungssystem, das neben seiner Funktion der Überwachung des an dieses gekoppelten Überwachungsobjekts auch noch verschiedene koordinierende und/oder administrative Aufgaben bezüglich mehrerer weiterer, untergeordneter Überwachungssysteme wahrnimmt.

Dies kann vorteilhaft sein, da ein Administrator-Nutzer zwar noch die ihm typischerweise zugeordneten Tätigkeiten wie zum Beispiel das Erstellen von Backups durchführen kann, jedoch nicht mehr auf den Inhalt der in der Datenbank gespeicherten Nutzdaten zugreifen kann. Dies schützt die Organisation durch missbräuchliche Weitergabe sensibler Zustandsdaten der Überwachungsobjekte an Dritte durch den Administrator-Nutzer, etwa im Kontext Industriespionage. Der Administrator-Nutzer des Zugriffs-Verwaltungssystems bzw. des Überwachungssystems hat nach Ausführungsformen der Erfindung also deutlich weniger Zugriffsrechte als dies in herkömmlichen IT-Systemen der Fall ist.

Nach Ausführungsformen repräsentiert jeder oder zumindest einige der Datensätze in der Nutzdaten-Datenbank jeweils eine software- oder Hardware Funktionalität, die das Überwachungssystem bereitstellt und/oder steuert. Nur ein Nutzer (z.B. Anfrageeinheit oder sonstiges externes Überwachungssystem), dem sowohl ein Eigner-Zertifikat der Nutzdaten-Datenbank als auch ein Zugriffs-Zertifikat für den Zugriff auf das Funktionsobjekt zugewiesen ist, wird von dem Zugriffs-Verwaltungssystem des Überwachungssystems, das die Anfrage empfängt, gestattet, die Funktionalität durchzuführen bzw. die Ausführung der Funktion zu veranlassen. Bei der Funktion kann es sich beispielsweise um das Starten eines Geräts, die Aktivierung oder Bewegung einer Hardwarekomponente, das Öffnen oder Schließen einer Tür für Gebäude, Räume oder Fahrzeuge, das Öffnen oder Schließen sonstiger Zutrittsbarrieren oder Verschlussvorrichtungen von Behältnissen oder um eine bestimmte Software Funktionalität handeln.

Somit kann die oben beschriebene vorteilhafte, flexible und feingranulare Zugriffskontrolle nicht nur für die Kontrolle des Zugriffs auf Datensätze, sondern auch für die Kontrolle des Zugriffs auf eine Vielzahl anderer Funktionen einschließlich Hardwarefunktionalitäten verwendet werden.

In einem weiteren Aspekt betrifft die Erfindung ein verteiltes System. Das verteilte System umfasst mehrere Überwachungssysteme nach einer der hier beschriebenen Ausführungsformen.

Nach Ausführungsformen ist jedes der Überwachungssysteme des verteilten Systems jeweils an ein anderes Überwachungsobjekt gekoppelt. Jedes der Überwachungssysteme ist dazu ausgebildet, als die Anfrageeinheit zu fungieren und eine Anfrage an eines der anderen Überwachungssysteme zu senden, wie dies z.B. für Ausführungsformen der Erfindung hier beschrieben ist. Jedes der Überwachungssysteme ist dazu ausgebildet, eine Anfrage eines der anderen Überwachungssysteme zu empfangen und diese so zu prüfen wie die Anfrage der Anfrageeinheit.

Beispielsweise können die mehreren Überwachungssysteme des verteilten Systems jeweils operativ an Überwachungsobjekte gekoppelt sein, die Komponenten eines komplexen, mehrkomponentigen physischen Objekts sind.

Beispielsweise könnte das komplexe Objekt ein Gebäude, ein Fahrzeug, ein Flugzeug, eine militärische Anlage, eine industrielle Anlage, ein Kraftwerk oder Krankenhaus sein. Die einzelnen Überwachungssysteme und die an diese gekoppelten Überwachungsobjekte bilden jeweils semi-autonom überwachte Systeme. Das heißt, dass die Überwachung der jeweiligen Überwachungsobjekte weitgehend von dem jeweils gekoppelten Überwachungssystem alleine vorgenommen wird, ohne die Zuhilfenahme anderer Überwachungssysteme oder zentraler Steuerungssysteme. Durch den Austausch von Anfragen und den damit bewirkten Austausch von z.B. Messwerten, von aus den Messwerten abgeleiteten Daten und/oder Steuersignalen, kann die Funktionalität des verteilten Systems wie auch die der einzelnen Überwachungssysteme in Ausführungsformen der Erfindung deutlich verbessert werden. Beispielsweise kann ein Überwachungssystem, das technische Probleme in "seinem" Überwachungsobjekt erkannt hat, diese Beobachtung anderen Überwachungssystemen durch entsprechende Anfragen mitteilen. Dies versetzt die anderen Überwachungssysteme in die Lage, schnell die richtigen Steuersignale an die "eigenen" Überwachungsobjekte zu senden, um sicherzustellen, dass das komplexe Objekt weiterhin korrekt arbeitet. Falls beispielsweise ein bestimmtes Überwachungssystem erkennt, dass in "seinem" Überwachungsobjekt, einem Benzintank, die Tankfüllung bald zur Neige geht, kann es dieses Wissen an ein Überwachungssystem übermitteln, welches für energieverbrauchende aber für die Fortbewegung nicht essentielle Fahrzeugkomponenten verantwortlich ist, z.B. eine Klimaanlage. Die Anfrage kann z.B. ein Steuersignal haben, die Leistung der Klimaanlage zu reduzieren um Kraftstoff zu sparen. Derartige Systeme können den Vorteil haben, dass eine zentrale Steuerung sämtlicher Komponenten bzw. sämtlicher Überwachungssysteme nicht mehr erforderlich ist. Dies erhöht auch die Sicherheit und Robustheit der Überwachung, denn es gibt keine zentrale Überwachungsinstanz mehr, deren Beschädigung zu einem Ausfall des gesamten komplexen Objekts und aller Steuersysteme führen würde.

Nach Ausführungsformen dienen die Anfragen dem Austausch von Messwerten, von den Messwerten abgeleiteten Daten (z.B. trainierte ML-Modelle) und/oder Steuersignalen zwischen den Überwachungssystemen. Die Messwerte sind Datenwerte, die von den Sensoren erfasst wurden und die zustandsbezogene Informationen der Überwachungsobjekte beinhalten. Die Steuersignale sind Datenwerte, die dazu ausgebildet sind, die Steuereinheit des die Steuersignale empfangenen Überwachungssystem zu veranlassen, das an dieses Überwachungssystem operativ gekoppelte Überwachungsobjekt gemäß den Steuersignalen zu steuern.

Nach Ausführungsformen beinhaltet jedes der Überwachungssysteme ein Vorhersageprogramm. Jedes der Vorhersageprogramme beinhaltet ein zur Berechnung des gleichen Vorhersagetyps trainiertes Machine-Learning (ML)-Modell. Ein Vorhersagetyp kann z.B. ein bestimmtes Vorhersageproblem sein, z.B. die Berechnung des voraussichtlichen Zeitpunkts, an welchem ein Bauteil wegen Materialermüdung ausgetauscht werden muss. Die trainierten Modelle der Vorhersageprogramme sind unterschiedlich. Jedes der ML-Modelle beinhaltet Paare einander zugeordneter Eingaben und Ausgaben. Beispielsweise kann jedes dieser ML-Modelle diese Eingabe-Ausgabe-Zuordnung anhand von Trainingsdaten gelernt haben, die vom Sensor des jeweiligen Überwachungssystem erfasst und lokal gespeichert wurden, wobei die Trainingsdaten Statusdaten des jeweils überwachten Überwachungsobjekts beinhalten.

Jedes der Überwachungssysteme ist konfiguriert zum:
- Synchronisieren der Eingabe-Ausgabe Paare der Modelle derart, dass jedes Modell nach der Synchronisation den gleichen Satz an Eingabe-Ausgabe Paaren beinhaltet;
- Eingeben von Eingabedaten in eines der Vorhersageprogramme;
- Berechnen einer Vorhersage auf Basis der Eingabedaten durch das eine Vorhersageprogramm unter Verwendung des synchronisierten Modells dieses einen Vorhersageprogrammes; und
- Verwendung der Vorhersage durch die Steuereinheit desjenigen Überwachungssystems, welches das eine Vorhersageprogramm beinhaltet, um den Zustand des an dieses Überwachungssystem operativ gekoppelten Überwachungsobjekts automatisch in Abhängigkeit von der Vorhersage zu verändern. Zusätzlich oder alternativ dazu kann das Überwachungssystem die Vorhersage an die Anfrageeinheit zurückgeben. Beispielsweise kann die Anfrageeinheit die Durchführung der Vorhersage mittels der Anfrage veranlasst haben und die Vorhersage wird in Antwort auf die Anfrage zurückgegeben.

In einem weiteren Aspekt betrifft die Erfindung ein System umfassend das Überwachungssystem nach einer der hier beschriebenen Ausführungsformen sowie ein operativ an dieses Überwachungssystem gekoppeltes Überwachungsobjekt.

In einem weiteren Aspekt betrifft die Erfindung ein Verfahren zur Überwachung eines Überwachungsobjekts. Das Verfahren umfasst:
- operative Kopplung eines Überwachungssystems an das Überwachungsobjekt, wobei das Überwachungssystem ein mikrocontroller-basiertes oder mikroprozessor-basiertes Datenverarbeitungssystem ist. Das Überwachungssystem umfasst zumindest einen Prozessor, eine Netzwerkschnittstelle, und zumindest einen Sensor, der dazu ausgebildet ist, bei bestehender operativer Kopplung an das Überwachungsobjekt einen aktuellen Zustand des Überwachungsobjektes zu erfassen. Zusätzlich oder alternativ zu dem zumindest einen Sensor umfasst das Überwachungssystem eine Steuereinheit, die dazu ausgebildet ist, bei bestehender operativer Kopplung an das Überwachungsobjekt den Zustand des Überwachungsobjektes durch Senden eines Steuerbefehls an das Überwachungsobjekt zu verändern;
- Empfang einer Anfrage über die Netzwerkschnittstelle von einer Anfrageeinheit durch das Überwachungssystem;
- Durchführung einer ersten Prüfung der Anfrage durch das Überwachungssystem;
- Falls die erste Prüfung ergibt, dass die Anfrage nicht vertrauenswürdig ist, Abbruch der ersten Prüfung durch das Überwachungssystem, ohne eine Antwort irgendeiner Form an die Anfrageeinheit zurückzugeben;
- nur falls die erste Prüfung ergibt, dass die Anfrageeinheit vertrauenswürdig ist, Durchführen einer weiteren Prüfung der Anfrage durch den Prozessor des Überwachungssystems;
- nur falls die weitere Prüfung der Anfrage ergibt, dass die Anfrageeinheit hinreichend berechtigt ist, Ermöglichung der Übertragung von Zustandsdaten des Überwachungsobjekts, die von dem zumindest einen Sensor erfasst wurden, an die Anfrageeinheit durch das Überwachungssystem und/oder Ändern des Zustands des Überwachungsobjekts mittels der Steuerungseinheit gemäß der Anfrage durch das Überwachungssystem.

Dies kann vorteilhaft sein, da Ausführungsformen ein Überwachungssystem bereitstellen, welches Anfragen über ein Netzwerk, z.B. das Internet, empfangen kann, und und somit für komplexe Anwendungen im IoT-Kontext verwendet werden kann. Gleichzeitig kann das Überwachungssystem trotz ggf. schwacher Leistung der vorhandenen Mikroprozessoren DoS Angriffe wirksam abwehren. Beispielsweise kann es die mehrstufige Prüfung, das völlige Ausbleiben einer Antwort und ggf. ein Verbindungsabbruch sowie ggf. zusätzlich eine Verhinderung eines erneuten Verbindungsaufbaus zur Anfrageeinheit für eine vordefinierte Mindestzeit im Falle eines negativen Ergebnisses der ersten Prüfung dafür sorgen, dass Angreifer das Überwachungssystem weder lahmlegen noch weitere Informationen über das Überwachungssystem in Erfahrung bringen können.

Nach Ausführungsformen wird das Verfahren für eine gegenüber Denial-of-Service Angriffen robuste, d.h., geschützte, Überwachung des Überwachungsobjekts verwendet.

Unter einer **"Überwachung"** wird hier das Erfassen und Speichern von Zuständen eines Überwachungsobjekts und/oder die Steuerung von Zuständen dieses Objekts verstanden.

Unter einem **"Datenverarbeitungssystem"** wird hier ein elektronisches System verstanden, das dazu ausgebildet ist, Datenmengen mit dem Ziel zu verarbeiten, Informationen über diese Datenmengen zu gewinnen oder diese Datenmengen zu verändern. Insbesondere kann es sich bei dem Datenverarbeitungssystem um einen auf einem oder mehreren integrierten Schaltkreisen mit einem oder mehreren Mikroprozessoren oder einem mikrocontroller-basierten digitalen Computer handeln, insbesondere um ein "eingebettetes System".

Unter einem **"Kettenobjekt"** wird hier eine Datenstruktur verstanden, welches mehrere Elemente enthält, die in der Datenstruktur in einer bestimmten Sequenz ("Kette") angeordnet und dadurch dem oder den jeweiligen Nachbarelementen zugeordnet sind. Die Zuordnung kann rein in der Positionierung der Elemente innerhalb der Sequenz als benachbarte Elemente begründet sein. In manchen Ausführungsformen bestehen einige oder alle der Elemente aus Zertifikaten, wobei die Zertifikate innerhalb der Sequenz einander nicht nur auf Basis ihrer Position sondern auch dadurch zugeordnet sind, dass die Zertifikate eine Zertifikatskette bilden, die durch eine sogenannte Zertifikatskettenprüfung entlang der Zertifikatssequenz prüfbar sind. Die Sequenz der Elemente wird vorzugsweise durch einen Nutzer, z.B. einen menschlichen Nutzer oder eine Software, eine Anfrageeinheit, ein Überwachungssystem, eine Hardware oder einen Software- oder Hardwarebasierten Prozess, der als "Nutzer" fungiert, festgelegt. Beispielsweise können Kettenobjekte ein erstes Element beinhalten, das ein Recht repräsentiert, z.B. ein Zugriffsrecht (das erste Element kann dann z.B. ein Zugriffs-Zertifikat sein) oder ein Eigner-Recht (das erste Element kann dann z.B. ein Eignerschafts-Zertifikat sein). Das Kettenobjekt kann zudem eine Sequenz weiterer Elemente beinhalten, z.B. Elemente, die je einen Nutzer repräsentieren (wobei diese weiteren Elemente z.B. als Nutzer-Zertifikate ausgebildet sein können, z.B. als X.509 Zertifikate). Die Sequenz der Nutzer-Zertifikate in dem Kettenobjekt repräsentiert die Sequenz der Nutzer, die jeweils das im ersten Element repräsentierte Recht, das ihnen gehört, auf einen anderen Nutzer übertragen haben. Beispielsweise ist ein "Zugriffsermächtigungskettenobjekt" ein Kettenobjekt, dass ein Zugriffsrecht und eine Sequenz an Nutzern repräsentiert, welche dieses Zugriffsrecht auf jeweils einen der anderen Nutzer gemäß dieser Sequenz übertragen haben. Beispielsweise ist ein "Eignerschaftsermächtigungskettenobjekte" ein Kettenobjekt, dass ein Eignerrecht und eine Sequenz an Nutzern repräsentiert, welche dieses Eignerrecht auf jeweils einen der anderen Nutzer gemäß dieser Sequenz übertragen haben.

Unter einer **"Anfrageeinheit"** wird hier ein physisches Objekt, z.B. ein Datenverarbeitungssystem oder eine Software verstanden, die dazu konfiguriert ist, eine Anfrage über ein Netzwerk an ein Überwachungssystem zu senden. Die Anfrage kann z.B. den Zweck haben, das Überwachungssystem zur Durchführung einer bestimmten softwarebasierten oder hardwarebasierten Funktionalität zu veranlassen, z.B. erfasste und protokollierte Zustandsdaten des Überwachungsobjekts an die Anfrageeinheit zu senden, der Anfrageeinheit Zugriff auf entsprechende Datensätze zu gewähren oder in Reaktion auf die Anfrage die Steuereinheit dazu zu veranlassen, einen Steuerbefehl an das Überwachungsobjekt zu senden um dessen Zustand zu verändern. Bei der Anfrageeinheit kann es sich z.B. um einen Standard-Computer oder ein anderes mikrocontrollerbasiertes oder mikroprozessorbasiertes Überwachungssystem handeln. Bei letzterem kann es sich um ein Überwachungssystem gemäß Ausführungsformen der Erfindung handeln, welches seinerseits Anfragen von anderen als Anfrageeinheit fungierenden Überwachungssystemen empfangen und wie beschrieben verarbeiten kann. Ausführungsformen der Erfindung können den Vorteil haben, dass ein Netzwerk aus Überwachungssystemen bereitgestellt wird, die ein Netzwerk aus IoT-Endknoten bilden, wobei jeder Endknoten dynamisch als Anfrageeinheit und Empfänger für die Anfragen anderer Überwachungssysteme auftreten kann und in Abhängigkeit vom Inhalt und den Prüfergebnissen der Anfrage dann das jeweils zugeordnete Überwachungsobjekt überwacht, also Zustandsdaten freigibt oder den Zustand aktiv verändert. Beispielweise kann das Netzwerk dazu dienen, lokal von den Überwachungssystemen erfasste Messwerte auszutauschen und/oder auf Basis dieser Messwerte im Zuge eines lokalen Trainingsprozesses erhaltene ML-Modelle zwischen den Überwachungssystemen zu synchronisieren.

Unter einem **"Berechtigungsnachweis"** wird hier ein Datenwert, insbesondere ein numerischer Datenwert verstanden, welcher die Funktion hat, den Überbringer dieses Datenwerts gegenüber dem Empfänger als vertrauenswürdig auszuweisen. Dies kann beinhalten, dass der Überbringer dieses Datenwerts als berechtigt ausgewiesen wird, das den Berechtigungsnachweis empfangende Überwachungssystem dazu zu veranlassen, eine bestimmte Funktion oder einen bestimmten Prozess (z.B. weiteren Prüfschritt) durchzuführen. Vorzugsweise handelt es sich um einen numerischen Wert hinreichender Länge und Komplexität, sodass dieser nicht einfach mit Hilfe eines Zufallsgeneratoren in wenigen Anfragezyklen erraten werden kann. Beispielsweise kann der numerische Wert mindestens 5, vorzugsweise mindestens 8 Ziffern beinhalten.

Gemäß Ausführungsformen blockiert das Überwachungssystem nach Erhalt einer Mindestanzahl von Anfragen der gleichen Anfrageeinheit, die alle keinen gültigen Berechtigungsnachweis enthalten, diese Anfrageeinheit dauerhaft oder für eine gewisse Mindestdauer, z.B. einige Minuten, einige Stunden oder einige Tage. Die Mindestanzahl kann "1" sein oder ein höherer Wert. Ausführungsformen können den Vorteil haben, dass hierdurch einem zufälligen Erraten des Berechtigungsnachweises z.B. mittels Zufallsgeneratoren wirksam vorgebeugt werden kann.

Unter einem **"Referenzberechtigungsnachweis"** wird hier ein Datenwert, insbesondere ein numerischer Datenwert, verstanden, der bei einem Überwachungssystem hinterlegt ist und der einen Überbringer eines zu diesem Referenzberechtigungsnachweis identischen Datenwerts (z.B. eine Anfrageeinheit) als berechtigt legitimiert, seitens des den Berechtigungsnachweis empfangenen Überwachungssystems die Durchführung einer bestimmten Funktion oder eines bestimmten Prozesses (z.B. weiteren Prüfschritt) zu veranlassen. Beispielsweise können Referenzberechtigungsnachweise die Summe aller Zugriffs-Zertifikate sein, die im Zuge der Registrierung verschiedener Nutzer (z.B. Überwachungssysteme) bei dem Empfänger-Überwachungssystem gespeichert wurden. Die Referenzberechtigungsnachweise können zusätzlich die Zugriffs-Zertifikate beinhalten, die zu einem späteren Zeitpunkt diesen registrierten Nutzern zugewiesen wurden und im Empfänger-Überwachungssystem gespeichert wurden.

Unter einem **"Mikroprozessor"** (auch µProzessor) wird hier ein Prozessor (typischerweise in sehr kleinem Maßstab) verstanden, bei dem alle Bausteine des Prozessors auf einem Mikrochip (integrierter Schaltkreis, IC) vereinigt sind. Nach Ausführungsformen beinhaltet der Chip neben dem Mikroprozessor auch zusätzliche Peripheriekomponenten. Ein solcher Chip mit einem oder mehreren Mikroprozessoren und ein oder mehreren Peripheriekomponenten (wie z.B. Sensoren und/oder Steuereinheiten für chip-interne oder chip-externe Funktionen und Systeme) wird als Mikrocontroller, auch "System-on-a-Chip (SoC)", bezeichnet.

Unter einem **"Mikrocontroller"** (auch µController, µC, MCU) werden hier Halbleiterchips bezeichnet, die zumindest einen Prozessor und zugleich auch Peripheriefunktionen enthalten. Der zumindest eine Prozessor kann als Mikroprozessor ausgebildet sein. Zu diesen Peripheriefunktionen können z. B. CAN- (Controller Area Network), LIN- (Local Interconnect Network), USB- (Universal Serial Bus), I²C- (Inter-Integrated Circuit), SPI- (Serial Peripheral Interface), serielle oder Ethernet-Schnittstellen, PWM-Ausgänge, LCD-Controller und -Treiber sowie Analog-DigitalUmsetzer gehören. Einige Mikrocontroller verfügen auch über programmierbare digitale und/oder analoge bzw. hybride Funktionsblöcke. In vielen Fällen befindet sich auch der Arbeits- und Programmspeicher teilweise oder komplett auf demselben Chip. Ein Mikrocontroller ist ein Ein-Chip-Computersystem. Für manche Mikrocontroller wird auch der Begriff System-on-a-Chip oder SoC verwendet. Mikrocontroller sind in Leistung und Ausstattung gemäß Ausführungsformen auf die jeweilige Anwendung angepasst. Daher haben sie gegenüber "normalen" Computern Vorteile bei den Kosten und der Leistungsaufnahme. Kleine Mikrocontroller sind in höheren Stückzahlen für wenige Cent verfügbar.

Beispiele für derzeit oder in der Vergangenheit auf dem Markt befindliche Mikrocontroller sind z. B. der Intel 80186 (vom 8086 abgeleitet), die XScale-Familie (ARM) sowie ColdFire (MC680xx) von Freescale (vormals Motorola). Ein Mikrocontroller kann z.B. auf 8-Bit-Prozessoren basieren, es gibt jedoch auch 4-, 16- und 32-Bit-Mikrocontroller.

Unter einem **"Mikrocontroller-basierten Überwachungssystem"** wird hier ein Datenverarbeitungssystem verstanden, dessen Funktionalität im Wesentlichen oder vollständig auf einem oder mehreren Mikrocontrollern beruht.

Teilweise werden Mikrocontroller als Bestandteil eines Multi Chip Modules (MCM) verwendet, wobei das MCM das Überwachungssystem darstellt oder einen wesentlichen Teil des Überwachungssystems stellt. Beispielsweise können derartige MCM basierte Überwachungssysteme dazu verwendet werden, verschiedene Halbleiterprozesse zu kombinieren, die sich schlecht oder gar nicht auf einem Chip kombinieren lassen. Beispiele dafür sind Kombinationen von Mikrocontrollern mit Hochfrequenzschaltungen für Funkverbindungen (z. B. Atmel, Cypress, Microchip stellen solche MCMs her), mit Leistungselektronik (z. B. Freescale, ST) oder mit Flash-ROM in dessen Anfangszeiten (z. B. Micronas Intermetall). Teilweise wird die Lösung mit einem MCM auch benutzt, wenn bereits vorhandene Chips miteinander kombiniert werden sollen, aber der Aufwand für einen Neuentwurf vermieden werden soll. Beispiele dafür sind Kombinationen mit Netzwerkcontrollern, bzw. den Anschlusstreibern für Netzwerke (PHY) oder LCD-Controllern.

Demgegenüber kann ein Überwachungssystem gemäß Ausführungsformen auch auf einer "klassischen" Mikrocontrollerarchitektur beruhen, die von Anfang an nicht als reines Mikroprozessorsystem gedacht war, sondern primär auf Steuerungsaufgaben zielt. Eine solche Architektur zeichnet sich z. B. dadurch aus, dass mit ihr auch ein Single-Chip-Betrieb völlig ohne externe Speicherbausteine möglich ist, ebenso wie der Befehlssatz der CPU meist spezialisierte Befehle für das Steuern einzelner Signalleitungen (mittels sogenannter Bitmanipulationen) bietet. Derartige mikrocontrollerbasierte Überwachungssysteme zeichnen sich oftmals durch eine sehr kurze Interrupt-Latenzzeit, also die Zeitspanne, die der Controller braucht, um auf die Unterbrechungsanforderung einer Signalquelle (Zeitgeber, Peripheriebaustein etc.) zu reagieren, aus. Typische Vertreter dieser Gattung sind z. B. der 8051 von Intel sowie der C166 von Siemens (heute Infineon) und Infineon TriCore. Zur Funktionsüberwachung von Mikrocontrollersteuerungen können z.B. sogenannte Watchdog-Schaltungen eingesetzt werden, die teilweise aber auch schon in den Mikrocontroller integriert sind.

Unter einem **"Mikroprozessor-basierten Überwachungssystem"** wird hier ein Datenverarbeitungssystem verstanden, das einen oder mehrere Mikroprozessoren beinhaltet und diese nutzt, um weitere Komponenten des Überwachungssystems wie z.B. Sensoren und/oder Steuereinheiten für überwachungssystem-interne und/oder externe Funktionen, anzusteuern.

Unter einem **"eingebetteten System"** (auch "embedded system") wird hier ein mikrocontrollerbasiertes Überwachungssystem verstanden, welches in ein physisches Objekt mit einer bestimmten Funktion integriert ist. Beispielswiese kann das Überwachungssystem in Gestalt eines eingebetteten Systems in Form eines technischen Gebrauchsartikeln, Fahrzeugen, Gebäudekomponenten, Maschinen, Maschinenkomponenten, insbesondere Sensoren oder Steuereinheiten realisiert sein. Waschmaschinen, Chipkarten (Geld-, Telefonkarten), Unterhaltungselektronik (Videorekordern, CD-/DVD-Spieler, Radios, Fernsehgeräten, Fernbedienungen), Büroelektronik, Segways, Kraftfahrzeugen (Steuergeräte für z. B. ABS, Airbag, Motor, Kombiinstrument, ESP usw.), Mobiltelefonen sowie Uhren und Armbanduhren sind Beispiele für eingebettete Systeme. Darüber hinaus sind eingebbettete Systeme in praktisch allen Computer-Peripheriegeräten enthalten (Tastatur, Maus, Drucker, Monitor, Scanner uvm.).

Unter einer **"Anfrageeinheit"** wird hier ein Datenverarbeitungssystem verstanden, das dazu ausgebildet ist, eine Anfrage zu erzeugen und über ein Netzwerk, z.B. das Internet, an eine oder mehrere Überwachungssysteme zu senden. Eine Anfrage kann verschiedenen Inhalts sein. Sie kann z.B. Daten von dem Überwachungssystem anfordern, oder einen Zugriff auf die in dem Überwachungssystem enthaltenen Daten und/oder Funktionen. Die Anfrage kann sich auch auf die Durchführung einer Steuerungsfunktion beziehen, welche den aktuellen Zustand des Überwachungsobjekts bestimmen oder ändern kann. Gemäß manchen Ausführungsformen ist die Anfrageeinheit ein Überwachungssystem gemäß einer der hier beschriebenen Ausführungsformen der Erfindung.

Unter einem **"Überwachungsobjekt"** wird hier ein physisches Objekt verstanden, das mehrere unterschiedliche Zustände einnehmen kann.

Unter einem **"Infrastrukturobjekt"** wird hier ein physisches Objekt verstanden, welches Bestandteil der Infrastruktur eines menschlichen Kollektivs (z.B. Organisation, Firma, Dorf, Stadt, Nation, etc.) ist. Bei dem physischen Objekt kann es sich z.B. um ein Gebäude, Gebäudetechnikkomponenten, eine Energieerzeugungsanlage, eine militärische Anlage, eine Vorrichtung, eine Maschine, ein Gerät oder um eine Komponente der vorgenannten Infrastrukturobjekte handeln. Ein Infrastrukturobjekt implementiert typischerweise eine oder mehrere Funktionen, die für das Funktionieren der jeweiligen Infrastruktur notwendig oder förderlich ist. Bei dieser Funktion kann es sich z.B. um Steuerungsfunktionen, Monitoringfunktionen, Datenaustauschfunktionen und sonstige Berechnungsfunktionen handeln.

Unter **"operativer Koppelbarkeit"** wird hier die Fähigkeit eines Überwachungssystems verstanden, nach einer mechanischen und/oder softwarebasierten Kopplung an ein Überwachungsobjekt dazu ausgebildet ist, Zustände, insbesondere Leistungs- und Fehlerparameter, des Überwachungsobjekts zu erfassen und/oder zu steuern. Die operative Koppelbarkeit kann in der Etablierung einer Kommunikationsverbindung zum Austausch von Messdaten und/oder Kontrollbefehlen bestehen. Beispielsweise kann das Überwachungssystem ein oder mehrere Sensoren beinhalten, die nach der Kopplung dazu fähig sind, Zustandsparameter des Überwachungsobjekts zu sensieren und/oder zu empfangen. Zusätzlich oder alternativ kann das Überwachungssystem eine Steuereinheit besitzen, die dazu ausgebildet ist, nach der Kopplung durch Erzeugung und Senden von Kontrollbefehlen an das Überwachungsobjekt dieses zu veranlassen, ein oder mehrere Funktionen auszuführen. Die operative Kopplung kann je nach Überwachungssystem, Sensor, Steuereinheit und Überwachungsobjekt z.B. im Aufbau eines kabelgebundenen Datenaustauschkanals, im Aufbau einer drahtlosen Kommunikationsverbindung z.B. über Funk oder Infrarot, in Form einer mechanischen Befestigung des Überwachungssystems und/oder seines Sensors an dem Überwachungsobjekt bestehen.

Unter **"Nutzdaten"** werden hier Daten verstanden, die für einen Nutzer, für einen Arbeitsablauf oder für eine Hardware- oder Softwarefunktionalität außerhalb des sie beinhaltenden Zugriffs-Verwaltungssystems relevant sind und welche nicht der Zugriffsverwaltung von Zugriffsrechten verschiedener Nutzer eines Zugriffs-Verwaltungssystems dienen. Nutzdaten können insbesondere Messwerte, Text, Zeichen, Bilder und Töne umfassen. Beispielsweise können die Nutzdaten Statusdaten von einem oder mehreren Überwachungsobjekten beinhalten die von dem Sensor eines operativ an das Überwachungsobjekt gekoppelten Überwachungssystem erfasst wurden.

Eine **"NoSQL"** (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Caché, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter einem **"Zugriffs-Verwaltungssystem"** wird im Folgenden ein elektronisches System oder eine Software zur Speicherung und Wiedergewinnung von Daten und zur Verwaltung von Zugriffsrechten bezüglich dieser Daten verstanden. Beispielsweise kann es sich bei dem Zugriffs-Verwaltungssystem um ein "Datenbankmanagementsystem" (DBMS) handeln. In manchen Ausführungsformen ist das Zugriffs-Verwaltungssystem in einem Programmspeicher eines mikrocontrollerbasierten Datenverarbeitungssystems gespeichert. Vorzugsweise werden die Daten in dem Zugriffs-Verwaltungssystem widerspruchsfrei und dauerhaft gespeichert und verschiedenen Anwendungsprogrammen und Nutzern in bedarfsgerechter Form effizient zur Verfügung gestellt. Ein Datenbankmanagementsystem kann typischerweise ein oder mehrere Datenbanken beinhalten und die darin enthaltenen Datensätze verwalten.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar.

Unter einer **"Datenbank"** wird im Folgenden eine (typischerweise große) Menge von Daten verstanden, die in einem Computersystem von einem Zugriffs-Verwaltungssystem nach bestimmten Kriterien verwaltet werden.

Unter einer **"ID-Datenbank"** wird im Folgenden eine Datenbank verstanden, welche nutzerbezogene Informationen wie zum Beispiel Nutzer-Zertifikate sowie diesen Nutzern zugewiesene Rechte in Form von weiteren Zertifikaten enthält und verwaltet. In Abgrenzung zu Nutzdaten-Datenbanken, welche vorwiegend der Speicherung von Nutzdaten dienen, dient die ID-Datenbank vorwiegend der Verwaltung der den Nutzern im Hinblick auf die Nutzdaten zugewiesenen Eigner- und Zugriffsrechte.

Unter einem **"Nutzer"** wird im Folgenden die digitale Repräsentanz einer menschlichen Person oder eines physischen Objekts, insbesondere eines Softwareprogramms oder eines Datenverarbeitungssystems, insbesondere eines Überwachungssystems und/oder einer Anfrageeinheit, verstanden. Beispielsweise kann ein Nutzer eine Anfrage an ein Überwachungssystem senden, wobei die weitere Verarbeitung der Anfrage durch das Überwachungssystem davon abhängen kann, ob der Absende-Nutzer dem empfangenden Überwachungssystem "bekannt" ist, also der Absender-Nutzer bei dem Überwachungssystem, das die Anfrage empfängt, registriert ist. Die digitale Repräsentanz kann z.B. bei einem Zugriffs-Verwaltungssystem registriert sein, das auf diesem Überwachungssystem instanziiert ist.

Unter einem **"Zertifikat"** wird hier im Folgenden ein Datenwert verstanden, welcher eine Eigenschaft (z.B. Identität eines Nutzers) oder ein Recht (z.B. Zugriffsrecht) repräsentiert und gegenüber Dritten beglaubigt ("zertifiziert"). Das Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können.

Bei einem Zertifikat kann es sich um einen einfachen Datenwert, insbesondere einen numerischen Wert handeln. Insbesondere ein Zugriffs-Zertifikat kann als einfacher numerischer Wert repräsentiert sein.

Beispielsweise kann das Zertifikat als Zahlenwert ausgebildet sein, welchem in der ID-Datenbank Metadaten zugeordnet sind. Die Verwendung von Zahlwerten kann vorteilhaft sein, da diese sich gut indexieren und schnell prüfen bzw. vergleichen lassen und nicht einer Variation durch leicht modifizierte Metadaten unterworfen sind. Vorzugsweise sind die Zugriffs-Zertifikate einzelner Nutzer als Attributzertifikate, insbesondere als Zahlwerte ausgebildet. Attributzertifikate enthalten keinen öffentlichen Schlüssel, sondern verweisen auf ein Public-Key-Zertifikat und legen dessen Geltungsbereich genauer fest.

Alternativ dazu kann es sich bei einem Zertifikat aber auch um einen komplexeren digitalen Datensatz handeln, der bestimmte Eigenschaften von Nutzern oder anderen Objekten bestätigt und dessen Authentizität und Integrität durch kryptografische Verfahren prüfbar macht. Das Zertifikat kann z.B. nach dem Standard X.509 ausgebildet sein, also einen öffentlichen Schlüssel beinhalten und die Identität des Inhabers sowie weitere Eigenschaften des öffentlichen kryptographischen Schlüssels des Zertifikats bestätigen.

Die Ausstellung des Zertifikats kann - z.B. bei Nutzer-Zertifikaten - durch eine offizielle Zertifizierungsstelle, die Certification Authority (CA), erfolgen.

Ein Zertifikat kann sich, muss sich aber nicht notwendigerweise auf einen kryptographischen Schlüssel beziehen, sondern kann allgemein Daten zur Prüfung einer elektronischen Signatur enthalten oder mit diesen Daten verknüpft gespeichert sein.

Unter einem **"Root-Zertifikat"** oder "Wurzel-Zertifikat" wird im Folgenden dasjenige Zertifikat bezeichnet, das den Vertrauensanker einer PKI darstellt. Da das Wurzel-zertifikat und damit die gesamte Zertifikatshierarchie nur vertrauenswürdig bleibt, solange dessen privater Schlüssel ausschließlich der ausstellenden Partei bekannt ist, kommt dem Schutz der Root-CA höchste Bedeutung zu.

Gemäß manchen Ausführungsformen stellt das Nutzer-Zertifikat desjenigen Nutzers, der in der Hierarchie einer Organisation ganz oben angesiedelt ist, das Root-Zertifikat der PKI dieser Organisation dar. Die Nutzer-Zertifikate aller anderen Mitglieder dieser Organisation sind von dem privaten Schlüssel dieses Root-Zertifikats signiert und damit von diesem gemäß einer Zertifikatskettenhierarchie abhängig. Aufgrund des hohen Schutzbedürfnisses des Root-Zertifikats erfolgt die automatische Verarbeitung von Signatur- oder Verschlüsselungsanforderungen mit Unterzertifikaten, die mit dem Root-Zertifikat signiert wurden und eine kürzere Gültigkeit (meist wenige Monate bis Jahre) als das Root-Zertifikat (das in der Regel mehrere Jahre oder Jahrzehnte gilt) aufweisen. Beispielsweise können die Nutzer-Zertifikate anderer Nutzer und/oder die von einzelnen Nutzern ausgestellten oder übertragenen Eigner-Zertifikate, Zugriffs-Zertifikate und/oder Attribut-Zertifikate eine begrenzte Gültigkeitsdauer von wenigen Tagen oder Monaten haben. Die Gültigkeit der Unterzertifikate wird so gewählt, dass es als unwahrscheinlich angesehen werden kann, dass die zu den Unterzertifikaten gehörenden privaten Schlüssel innerhalb des gewählten Gültigkeitszeitraums mit derzeit verfügbarer Rechenkapazität berechnet werden können. Auf diese Weise entsteht eine Zertifikatskette, bei der jeweils auf das unterzeichnende Zertifikat als ausgebende Stelle verwiesen wird. Diese Kette wird in der Regel als Teil eines Zertifikats mitgeliefert, um eine Prüfung bezüglich Vertrauenswürdigkeit, Gültigkeit und ggf. vorhandenem Zertifikatswiderruf entlang der gesamten Zertifikatskette zu ermöglichen.

Unter einem **"Eigner"** oder "Eigentümer" wird im Folgenden ein Nutzer verstanden, dem durch Zuweisung eines Eigner-Zertifikats das Recht im Hinblick auf eine bestimmte Nutzdaten-Datenbank eingeräumt wurde, in dieser Datensätze zu erstellen und eine Datenbankverbindung mit dieser Datenbank aufzubauen. Nach ausführungsformen leiten sich alle Eigner-Zertifikate, die für die Nutzdaten-Datenbanken des Überwachungssystems ausgestellt wurden, vom Nutzer-Zertifikat ("CEO-Zertifikat") desjenigen Nutzers ab, der die höchste Position innerhalb der Organisation, die das Überwachungssystem betreibt, innehat. Die Ableitung aus diesem Nutzer-Zertifikat bedeutet, dass jede Kopie dieses Eigner-Zertifikats per Zertifikatskettenprüfung auf Validität überprüft werden kann, wobei die für die Zertifikatskettenprüfung verwendete Zertifikatskette das "CEO-Nutzer-Zertifikat" beinhaltet.

Unter einem im Hinblick auf einen bestimmten Datensatz **"zugriffsberechtigten Nutzer"** wird im Folgenden ein Nutzer verstanden, dem durch Zuweisung eines Zugriffs-Zertifikats das Recht eingeräumt wurde, auf einen Datensatz, der dieses Zugriffs-Zertifikat beinhaltet, auf die Weise zuzugreifen, die in diesem Zugriffs-Zertifikat oder in Metadaten dieses Zugriffs-Zertifikats spezifiziert ist, sofern optional ggf. weitere notwendige Kriterien, wie z.B. die Eignerschaft bezüglich der den Datensatz enthaltenden Datenbank, erfüllt sind.

Die Verwendung von Ordinalzahlen wie erstes, zweites, drittes etc. dient hier, allein der Unterscheidung voneinander Elemente und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Verschiedene Ausführungsformen eines erfinderischen Überwachungssystems sowie eines entsprechenden Verfahrens zum Betrieb eines solchen Überwachungssystems sind in den nachfolgend beschriebenen Zeichnungen veranschaulicht. Darin zeigen:
- Figur 1: ein Blockdiagramm einer Ausführungsform eines erfindungsgemäßen Überwachungssystems;
- Figur 2: ein Flussdiagramm einer Ausführungsform eines erfindungsgemäßen Verfahrens;
- Figur 3: ein Blockdiagramm eines Systems mit einem kritischen Infrastrukturgebäude gemäß einer Ausführungsform, dessen Komponenten von Überwachungssystemen gesteuert wird;
- Figur 4: ein Blockdiagramm eines verteilten Systems mit mehreren Überwachungssystemen gemäß einer Ausführungsform, die ML-Modelle von Vorhersageprogrammen synchronisieren;
- Figur 5: ein Blockdiagramm eines Überwachungssystems mit mehreren Datenbanken,
- Figur 6: den Vorgang der Erstellung von Berechtigungstoken für zwei Nutzer gemäß einer Ausführungsform,
- Figur 7: den Ablauf der Einräumung von Zugriffsrechten über eine Sequenz von Nutzern,
- Figur 8: Ein Beispiel für Nutzdaten, die Bestandteil eines Datensatzes sind,
- Figur 9: zwei dynamisch und unabhängig voneinander generierte Hierarchien, entlang welcher einerseits Zugriffsrechte und andererseits Eignerrechte über eine Kaskade von Überwachungssystemen vergeben wurden, und
- Figur 10: ein Flussdiagramm eines Verfahrens zur Übertragung von Eignerrechten und Zugriffsrechten von einem Überwachungssystem auf ein anderes.

### Ausführliche Beschreibung

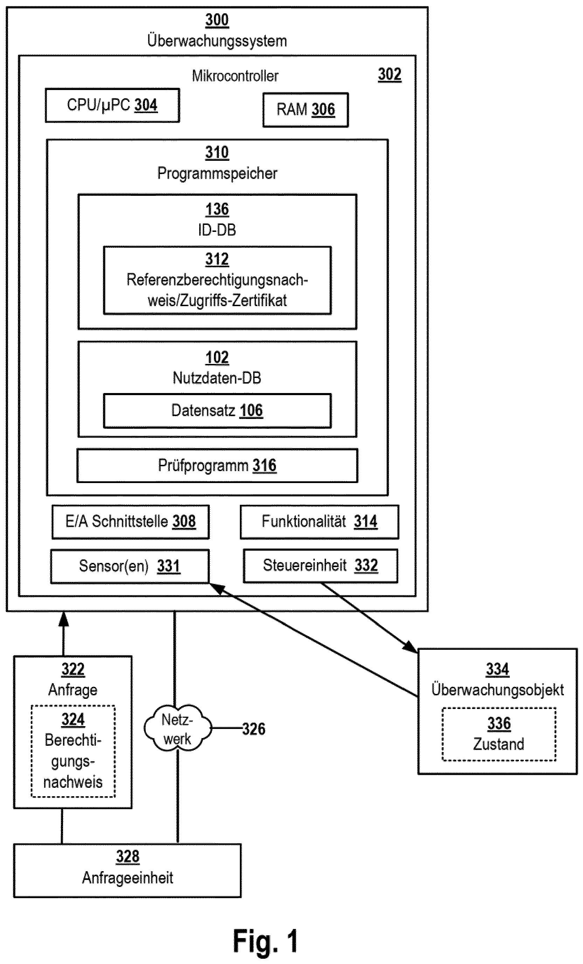

**Figur 1** zeigt ein Blockdiagramm einer Ausführungsform eines erfindungsgemäßen Überwachungssystems 300. Das Überwachungssystem 300 kann insbesondere als Endknoten einer IoT-Anwendung ausgebildet sein, z.B. als sogenanntes "embedded System". Das Überwachungssystem 300 beinhaltet eine Netzwerkschnittstelle 308, z.B. einen oder mehrere Eingabe/Ausgabe-Ports, über welchen das Überwachungssystem 300 Daten mit einem oder mehreren anderen Überwachungssystemen, zum Beispiel einer Anfrageeinheit 328, die ihrerseits ein Überwachungssystem gemäß einer der hier beschriebenen Ausführungsformen sein kann, über ein Netzwerk 326 austauschen kann. Bei dem Netzwerk 326 kann es sich insbesondere um eine Internetverbindung handeln, die zum Beispiel über ein Mobilfunknetz oder andere Telekommunikationstechnologien realisiert werden kann.

Beispielsweise kann das Überwachungssystem 300 dazu dienen, die Kühlwasserpumpe eines Kraftwerks kontinuierlich zu überwachen und bei einer Abweichung der Pumpleistung, die größer ist als eine vordefinierte zulässige Maximalabweichung, eine Warnung an übergeordnete Systeme senden und/oder durch das Erzeugen und Senden entsprechender Steuerbefehle an die Pumpe das Problem selbstständig zu beheben.

Das Überwachungssystem 300 beinhaltet einen Mikrocontroller 302, auf welchem sich ein oder mehrere Mikroprozessoren 304, ein Arbeitsspeicher 306 sowie ein nichtflüchtiger Programmspeicher 310 befinden. Der Programmspeicher beinhaltet zumindest einen oder mehrere Referenzberechtigungsnachweise 312 in Form von numerischen Datenwerten sowie ein Prüfprogramm 316. Das Prüfprogramm 316 ist dazu ausgebildet, Anfragen, die das Überwachungssystem 300 über ein Netzwerk 326 empfängt, zu prüfen und in Abhängigkeit des Prüfergebnisses zu beantworten bzw. nicht zu beantworten. Das Überwachungssystem 300 ist operativ koppelbar an ein Überwachungsobjekt 334, welches verschiedene Zustände 336 einnehmen kann. Beispielsweise kann die Kühlwasserpumpe des Kraftwerks die Zustände "abgeschaltet", "bereit", "defekt", und " [WERT] % der maximalen Drehzahl" einnehmen, wobei , "WERT" eine beliebige Zahl zwischen 0 und 100 sein kann und die aktuelle Drehzahl der Turbine angibt. Das Überwachungssystem beinhaltet einen Sensor 331 oder mehrere Sensoren, der bzw. die die Drehzahl der Pumpe und sonstige zustandsbezogene Parameter der Pumpe erfassen und als Datensatz in der Nutzdaten-Datenbank speichern kann. Jeder der Sensoren kann z.B. als eigener Nutzer in der ID-Datenbank des Überwachungssystems 300 repräsentiert sein.

Gemäß manchen Ausführungsformen wie der in Figur 1 gezeigten beinhaltet die Überwachungseinheit eine Steuereinheit 333, die dazu ausgebildet ist, Steuerbefehle an das Überwachungsobjekt zu senden um den Zustand des Überwachungsobjekts zu kontrollieren und ggf. zu ändern. Falls das Überwachungssystem beispielsweise feststellt, dass die Drehzahl der Pumpe zu niedrig ist um den benötigten Wasserdruck zu erzeugen kann die Steuereinheit 333 des Überwachungssystems einen entsprechenden Befehl zur Erhöhung der Drehzahl an die Pumpe 334 senden um die Pumpleistung entsprechend anzupassen. In manchen Ausführungsforen beinhaltet das Überwachungssystem ein Vorhersageprogramm, welches für einen künftigen Zeitpunkt vorhersagt, dass die Pumpleistung nicht ausreichen wird, sodass die Pumpleistung schon proaktiv so rechtzeitig angepasst werden kann, dass kein Druckabfall auftritt.

Gemäß einer Ausführungsform kann eine Anfrageeinheit 328 eine Anfrage 322 zum lesenden Zugriff auf einen bestimmten Datensatz 106 des Überwachungssystems 300 über das Netzwerk 326 an das Überwachungssystem 300 senden. Die Anfrageeinheit kann beispielsweise ein weiteres Überwachungssystem 328 sein, das im Wesentlichen die gleichen oder ähnliche Komponenten und Funktionen hat wie ein Überwachungssystem gemäß Ausführungsformen der Erfindung.

Gemäß einer Ausführungsform beinhaltet Anfrage einen Berechtigungsnachweis 324 in Form eines numerischen Datenwertes.

Das Prüfprogramm 316 ist dazu konfiguriert, in Antwort auf den Empfang der Anfrage 322 zunächst nur eine erste Prüfung durchzuführen. Die erste Prüfung besteht darin, zu prüfen, ob in dem Überwachungssystem 300 ein numerischer Datenwert, hier als Referenzberechtigungsnachweis 312 bezeichnet, gespeichert ist, der identisch ist zu dem empfangenen Berechtigungsnachweis 324. Beispielsweise kann der Referenzberechtigungsnachweis 312 innerhalb einer ID-Datenbank 136 gespeichert sein und der Datensatz 106, auf den sich die Zugriffsanfrage bezieht, innerhalb einer Nutzdaten-Datenbank 102 gespeichert sein. Sowohl die ID-Datenbank 136 als auch die Nutzdaten-Datenbank können auf dem Programmspeicher 310 des Microcontrollers 302 gespeichert sein.

Falls diese erste Prüfung ergibt, dass das Überwachungssystem 300 keinen zu dem Berechtigungsnachweis 324 identischen Wert gespeichert hat, reagiert das Überwachungssystem 300 nicht auf die Anfrage. Insbesondere sendet das keine Fehlermeldung an die Anfrageeinheit 328, sodass ein potentieller Angreifer in Antwort auf eine Anfrage keinerlei Informationen über das Überwachungssystem 300 erhält.

Das Prüfprogramm 316 ist dazu konfiguriert, nur dann, falls die erste Prüfung ergibt, dass das Überwachungssystem 300 einen zu dem Berechtigungsnachweis 324 identischen Wert gespeichert hat, eine weitere Prüfung durchzuführen. Beispielsweise kann die weitere Prüfung rechnerisch deutlich aufwändiger sein und eine Prüfung beinhalten, ob in der Anfrage weitere Datenwerte enthalten sind, die dem anfragenden System dazu berechtigen, die angefragte Funktionalität durchzuführen bzw. die angefragten Daten zu lesen oder schreibend zu verändern. Nur falls auch die weitere Prüfung ergibt, dass das anfragende System die entsprechenden Rechte hat, führt das Überwachungssystem 300 die angeforderte Funktionalität 314 aus. Beispielsweise kann die Funktionalität 314 darin bestehen, den angefragten Datensatz 106 auszulesen und über das Netzwerk an die Anfrageeinheit zurückzugeben.

Beispielsweise können in der Nutzdaten-Datenbank 102 die kontinuierlich über einen längeren Zeitraum von mehreren Jahren erfassten Leistungszahlen (Schwingungsparameterwerte, Umdrehungen pro Minute, Temperatur, Strömungswiderstand etc.) der Pumpe gespeichert sein. Die von der Anfrageeinheit in der Anfrage 322 angeforderte Funktionalität 314 kann darin bestehen, dass das Überwachungssystem 300 die innerhalb eines bestimmten Zeitraums erfassten Leistungszahlen der Pumpe, zum Beispiel die Leistungszahlen des letzten Monats, oder nur diejenigen Leistungszahlen, die außerhalb eines vorgegebenen Normbereichs waren, auszulesen und zurückzugeben.

In anderen Ausführungsformen kann die Funktionalität 314 aber auch darin bestehen, dass das Überwachungssystem 300 über die Steuereinheit 333 einen Steuerbefehl an die Pumpe 334 sendet, welche die Pumpe dazu veranlasst, ihre Tätigkeit einzustellen oder zu erhöhen. Derartige Manipulationen an wichtigen Komponenten sicherheitskritischer Infrastrukturobjekte, wie zum Beispiel Kraftwerken, müssen sicher vor unberechtigten Zugriffen geschützt werden. Ausführungsformen der Erfindung können vorteilhaft sein, weil sie ein sehr komplexes und dabei gleichzeitig sicheres System und Verfahren bieten können, um solche Komponenten vor unberechtigten Zugriff zu schützen. Gleichzeitig können Überwachungssysteme gemäß Ausführungsformen der Erfindung auch vorteilhaft sein, weil sie verlässlichen Schutz vor DOS Angriffen bieten können.

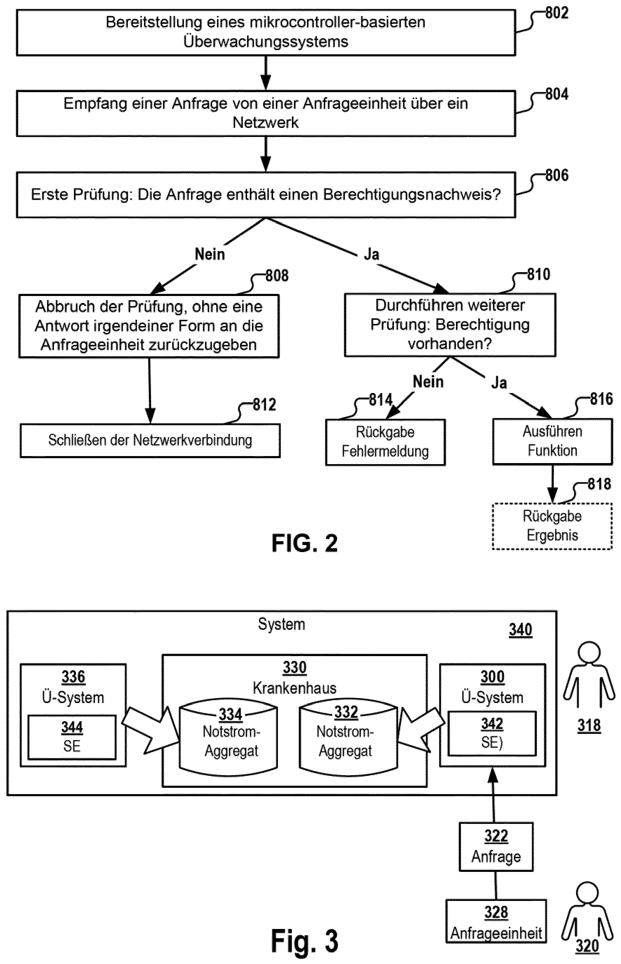

**Figur 2** zeigt ein Flussdiagramm einer Ausführungsform eines erfindungsgemäßen Verfahrens zur Überwachung eines Überwachungsobjekts 334 mittels eines Überwachungssystems 300, wie dies z.B. in Figur 1 dargestellt ist.

In einem ersten Schritt 802 wird das Überwachungssystem 300 bereitgestellt und operativ an das Überwachungsobjekt 334 gekoppelt. Beispielsweise kann das Überwachungssystem 300 ein IoT Endknoten sein, der mit weiteren IoT Endknoten über ein Netzwerk verbunden ist und zusammen mit diesem bereitgestellt wird. Dieses Netzwerk an IoT Endknoten, die jeweils als Überwachungssystem ausgestaltet sind und ein an sie gekoppeltes Überwachungsobjekt überwachen kann dazu verwendet werden, mehrere Komponenten eines komplexen Infrastrukturobjekts wie z.B. Pumpen, Notstromaggregate, Türen und Tore auf semi-autonome und dennoch konzertierte Art und Weise zu überwachen. Beispielsweise kann die Bereitstellung in der Auslieferung des Überwachungssystems an einen Kunden oder die Installation beim Kunden umfassen.

In einem nächsten Schritt 804 empfängt das Überwachungssystem 300 eine Anfrage 322 von einer Anfrageeinheit 328. Bei der Anfrageeinheit kann es sich um eine vertrauenswürdiges Überwachungssystem handeln, das zusammen mit dem Überwachungssystem 300 bereitgestellt wurde und zusammen mit diesem ein IoT bildet. Es kann sich aber auch um ein Gerät eines Angreifers handeln, dessen Ziel es ist, in das Überwachungssystem 300 einzudringen oder dieses funktional durch einen DOS oder DDOS Angriff außer Betrieb zu setzen.

Zum Schutz gegen solche Angriffe führt das Überwachungssystem 300 in Schritt 806 eine erste Prüfung durch, die sehr schnell und mit minimaler Rechenlasst durchgeführt werden kann. Die erste Prüfung umfasst lediglich eine Analyse, ob in der Anfrage ein Berechtigungsnachweis 324 in Form eines numerischen Datenwerts enthalten ist, der identisch ist zu einem in dem Überwachungssystem 300 gespeicherten Referenzberechtigungsnachweis.

Falls dies nicht der Fall ist, bricht das Überwachungssystem 300 in Schritt 808 die Prüfung ab, ohne eine Antwort, Fehlermeldung oder sonstige Nachricht an die Anfrageeinheit zu senden. Vorzugsweise wird zudem die Netzwerkverbindung zu der Anfrageeinheit zumindest für eine gewisse Zeit unterbrochen. Ein Angreifer erhält also keinerlei Information über das Überwachungssystem 300, er weiß letztlich noch nicht einmal, ob das Überwachungssystem 300 überhaupt existiert.

Falls die erste Prüfung jedoch zu einem positiven Ergebnis führt, führt das Überwachungssystem in Schritt 810 eine weitere Prüfungen durch, die rechenintensiver ist als die erste Prüfung und beispielsweise die Prüfung weiterer Merkmale mit kryptographischen Methoden und/oder Zertifikatskettenprüfung beinhaltet. Führt diese Prüfung zu dem Ergebnis, dass die Anfrageeinheit die erforderlichen Rechte zur Durchführung der angefragten Funktion nicht besitzt, kann das Überwachungssystem in Schritt 814 eine Fehlermeldung zurückgeben. Beispielsweise kann das Überwachungssystem davon ausgehen, dass die Anfrageeinheit an sich vertrauenswürdig ist, da die Anfrage ja immerhin den Berechtigungsnachweis enthielt. Es kann aber eine Fehlkonfiguration vorliegen oder die benötigten weiteren Rechte könnten mittlerweile durch Zeitablauf oder aufgrund eines aktiven Entzugs von Rechten nicht (mehr) vorhanden sein. In diesem Fall kann es sinnvoll sein, den Grund für das negative Ergebnis der weiteren Prüfung der Anfrageeinheit in Form einer Fehlermeldung mitzuteilen, sodass diese den Fehler ggf. beheben und z.B. ein neues Nutzer-Zertifikat für die Anfrageeinheit ausstellen lassen kann.

Für den Fall, dass auch die weitere Prüfung positiv verläuft, also zum Ergebnis hat, dass die weiteren benötigten Rechte vorliegen, ermöglicht das Überwachungssystem 300 in Schritt 816 es einer Person oder der Anfrageeinheit, die angefragte Funktion 314 auszuführen. Beispielsweise kann die Funktion 314 beinhalten, dass der Anfrageeinheit Zugriff auf die vom Sensor 331 erfassten Zustandsmesswerte des Objekts 334 über einen Push- oder Pull Mechanismus bereitgestellt werden.

Alternativ dazu kann die Funktion 314 beinhalten, die Anfrage daraufhin auszuwerten, ob darin Anweisungen enthalten sind, wie der Zustand des Überwachungsobjekts geändert werden soll, und über die Steuereinheit 333 einen entsprechenden Steuerbefehl an das Überwachungsobjekt zu senden.

In einem weiteren optionalen Schritt 818 gibt das Überwachungssystem das Ergebnis der Funktionsausführung an die Anfrageeinheit zurück. Beispielsweise kann die Funktion das Absenden eines Steuerbefehls an das Überwachungsobjekt beinhalten und das zurückgegebene Ergebnis beinhaltet eine Nachricht, dass der Steuerbefehl abgegeben und umgesetzt wurde.

**Figur 3** zeigt ein Blockdiagramm eines Systems 340, das ein sicherheitskritisches Infrastrukturobjekt, z.B. ein Krankenhaus 330, und mehrere Überwachungssysteme 336, 300 beinhaltet, die jeweils operativ an ein Überwachungsobjekt 332, 334 gekoppelt sind und diese jeweils über eine Steuereinheit 342, 344, steuern. Die Überwachungssysteme sind dazu ausgebildet, Komponenten 332, 334 des Infrastrukturobjekts zu überwachen, wobei die Überwachungssysteme 300, 336 miteinander vernetzt sind und Daten mittels Anfragen austauschen.

In einem Beispiel beinhaltet ein Krankenhausgebäude 330 mehrere Notstromaggregate 334, 332, die jeweils von einem der vernetzten Überwachungssysteme überwacht und gesteuert werden. Bei Ausfall der normalen Stromversorgung soll nur eines 332 der beiden Notstromaggregate aktiviert werden, das zweite 334 soll nur dann aktiviert werden, falls das erste Notstromaggregat sich nicht aktivieren lässt oder ausfällt. Die beiden Notstromaggregate werden jeweils von einem der Überwachungssysteme überwacht. Um sicherzustellen, dass bei Ausfall der normalen Stromversorgung erst das erste Notstromaggregat 332 und erst bei dessen Ausfall bzw. Nicht-Aktivierbarkeit das zweite Notstromaggregat 334 aktiviert wird, tauscht das erste Überwachungssystem 300, das das erste Notstromaggregat 332 kontrolliert, kontinuierlich Daten mit dem zweiten Überwachungssystem 336, das das zweite Aggregat 334 kontrolliert, aus. Beispielsweise kann das erste Überwachungssystem in regelmäßigen Abständen, z.B. einmal in der Sekunde, Anfragen an das zweite Überwachungssystem 336 schicken, wobei jede Anfrage, die vom zweiten Überwachungssystem 334 in einem in Figur 2 dargestellten mehrstufigen Prüfprozess als valide eingestuft wird, eine "Unterdrückungsfunktion" aktiviert. Das bedeutet, das ein "normal" funktionierendes erstes Überwachungssystem 300 die Aktivierung des zweiten Überwachungssystems 336 und damit auch die Aktivierung des zweiten Notstromaggregats 334 aktiv unterdrückt. Der erfolgreiche Funktionsaufruf bewirkt hier also eine Unterdrückung der Aktivierung des zweiten Notstromaggregats. Falls sich jedoch das erste Überwachungssystem bzw. das erste Notstromaggregat 332 nicht aktivieren lässt oder während des Betriebs ausfällt, kann das erste Überwachungssystem 300 keine "Unterdrückungsanfragen" mehr an das zweite Überwachungssystem 336 senden. Das zweite Überwachungssystem ist dazu konfiguriert, bei Ausbleiben einer Unterdrückungsanfrage für eine gewissen Mindestzeitdauer über seine Steuereinheit 344 einen Steuerbefehl an das zweite Notstromaggregat 334 zu senden. Der Steuerbefehl führt zur Aktivierung des Aggregats 334.

Dies ist nur ein Beispiel, wie die direkte Kommunikation zwischen IoT Endknoten gerade im Kontext von sicherheitskritischen Infrastrukturobjekten und Notfallsituationen besonders vorteilhaft sein kann: beim Ausfall wichtiger Komponenten wie z.B. der normalen Stromversorgung ist eine zentrale Steuerung mehrerer Komponenten durch einen zentralen Computer eventuell nicht möglich. Dadurch, dass die einzelnen Überwachungssysteme, die vorzugweise batteriebetrieben und damit weitgehend autonom arbeiten können, direkt miteinander kommunizieren, wird das gesamte System erheblich robuster. Durch das beschriebene mehrstufige Prüfverfahren können Ausführungsformen der Erfindung sicherstellen, dass sensible Funktionen nur von berechtigten Überwachungssystemen ausgelöst werden können und/oder dass die Interoperabilität der Überwachungssysteme nicht mit dem Nachteil einhergeht, für DoS Angriffe ein leichtes Ziel zu bieten.

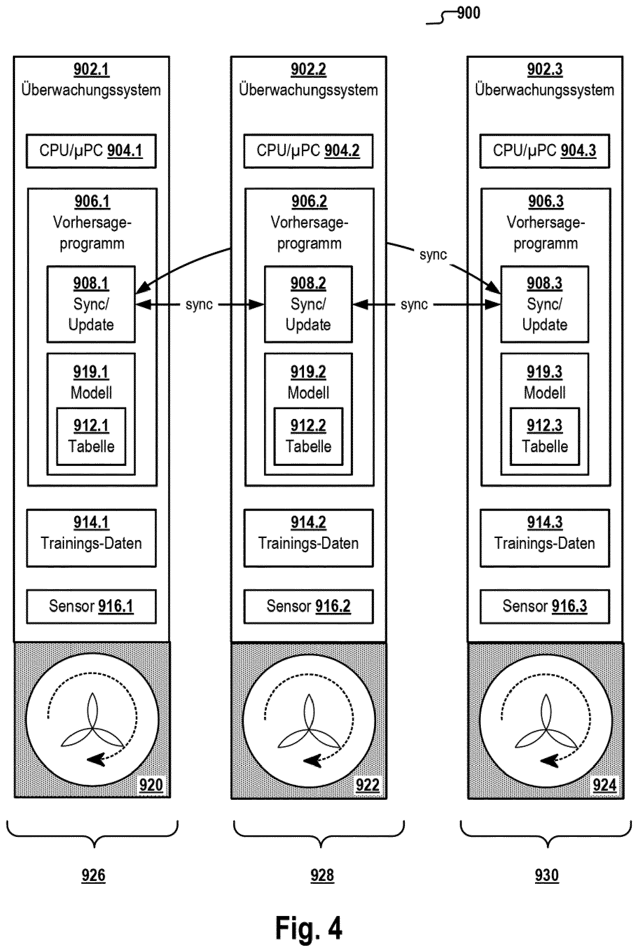

**Figur 4** zeigt ein Blockdiagramm eines verteilten Systems 900 mit mehreren Überwachungssystemen 902.1, 902.2, 902.3, die jeweils über ein Netzwerk, zum Beispiel das Internet, miteinander verbunden sind. Jedes der Überwachungssysteme beinhaltet einen Mikrocontroller mit einem oder mehreren Mikroprozessoren 904.1, 904.2, 904.3. Jedes der Überwachungssysteme 902.1, 902.2, 902.3 ist operativ an ein entsprechendes Überwachungsobjekt 920, 922, 924 gekoppelt.

Beispielsweise beinhaltet die operative Kopplung den Aufbau eines Datenaustauschkanals zwischen Überwachungssystem und Überwachungsobjekt.

Die Überwachungssysteme können im Wesentlichen gleichen oder ähnlichen Typs sein. Beispielsweise kann es sich bei den Überwachungsobjekten um Kühlwasserpumpen für Kraftwerke handeln. Bei den Überwachungssystemen kann es sich jeweils um sogenannte "eingebettete Systeme" handeln, die bereits vom Hersteller der Pumpen mit den Pumpen operativ verbunden werden. Beispielsweise kann jeder der Mikrocontroller einen Umdrehungssensor 916.1, 916.2, 916.3 beinhalten, der die aktuelle Umdrehungszahl der Pumpe messen und in einem lokalen Datenspeicher des jeweiligen Überwachungssystems speichern kann, handeln. Die Sensoren 916.1, 916.2, 916.3 können weitere Sensoren umfassen, die hier nicht dargestellt sind, z.B. Sensoren für Schwingungszustände des jeweiligen Überwachungsobjekts, welche Auskunft über den Grad der Materialermüdung des jeweiligen Objekts geben.

Gemäß Ausführungsformen werden die von den Sensoren erfassten Messdaten lokal gespeichert, z.B. in einer Nutzdaten-Datenbank, und als Trainingsdatensatz zum Trainieren eines statistischen prädiktiven Modells, auch "Machine-Learning Modell" oder "ML-Modell" genannt, verwendet.

Beispielsweise kann jedes der Überwachungssysteme ein Vorhersageprogramm 906.1, 906.2, 906.3 beinhalten. Jedes der Vorhersageprogramme beinhaltet mehrere Module und/oder Funktionen, um verschiedene Aufgaben wahrzunehmen. Beispielsweise beinhaltet jedes Vorhersageprogramm ein statistisches Modell 919.1, 919.2, 919.3, welches dazu verwendet werden kann, ein bestimmtes Vorhersageproblem zu lösen. Bei dem statistischen Modell kann es sich insbesondere um ein prädiktives Modell handeln, das im Rahmen eines Trainingsprozesses auf der Basis von Trainingsdaten 914.1, 914.2, 914.3 gelernt hat, statistische Zusammenhänge und Korrelationen innerhalb der Trainingsdaten zu erkennen und das so erlernte Wissen in dem Modell zu speichern, dass das Modell in der Lage ist, auf der Basis neuer, im Trainingsdatensatz nicht enthaltene Eingabedaten, eine verlässliche Vorhersage zu berechnen. Die Vorhersageprogramme 906.1, 906.2, 906.3 können also jeweils verschiedene Funktionen und insbesondere Machine-learning-(ML)-Algorithmen beinhalten, die zum Trainieren des Modells (auch als ML-Modell bezeichnet) während der Trainingsphase verwendet werden können.

Gemäß Ausführungsformen der Erfindung beinhaltet jedes der Vorhersageprogramme auch ein Modul bzw. eine Funktion zum kontinuierlichen Erfassen und Speichern von Daten, die als Trainingsdaten 914.1, 914.2, 914.3 im Zuge des Trainingsprozesses der ML-Modelle verwendet werden. Beispielsweise kann es sich bei den erfassten Daten um Umdrehungsraten und Schwingungsdaten der verschiedenen Pumpen 920, 922, 924 handeln, wobei die Daten von Sensoren 916.1, 916.2, 916.3 des jeweiligen Überwachungssystems selektiv für die Pumpe, die an das Überwachungssystem gekoppelt ist, erfasst werden.

Beispielsweise kann jedes der Überwachungssysteme einer Pumpe spezifisch zugeordnet und an diese operativ gekoppelt sein. Beispielsweise kann Überwachungssystem 902.1 an die Pumpe 920 gekoppelt sein und ein semi-autonomes System 926 bilden. Überwachungssystem 902.2 kann an die Pumpe 922 gekoppelt sein und ein semi-autonomes System 928 bilden. Überwachungssystem 902.3 kann an die Pumpe 924 gekoppelt sein und ein semi-autonomes System 930 bilden. Im Laufe der Zeit werden die verschiedenen Überwachungssysteme also unterschiedliche Trainingsdaten sammeln in Abhängigkeit davon, welche Umdrehungszahlen und Schwingungszustände die einzelnen Pumpen im Laufe ihres Betriebs einnehmen. Die Unterschiedlichkeit der erfassten Sensordaten kann z.B. darauf beruhen, dass die Pumpen unterschiedlich alt sind und/oder unterschiedlich genutzt werden. Welche dieser Merkmale im Zuge des Trainingsprozesses ausgewertet und zum Trainieren des Modells verwendet werden hängt vom jeweiligen Modell und der von diesen zu lösenden Vorhersageaufgabe ab.

Beispielsweise kann es sich bei dem Vorhersageproblem um das Problem der Vorhersage des Zeitpunkts handeln, wann eine Pumpe wegen Materialermüdung ausgetauscht werden muss. Beispielsweise können die Trainingsdaten neben den Schwingungszuständen, von welchen bekannt ist, dass diese gute Indikatoren bzw. Prädikatoren für Materialermüdung sind, auch Umdrehungszahlen beinhalten, die ggf. ebenfalls eine gewisse Prädiktivität für die zu erwartende Materialermüdung besitzen.

Bei jedem der Vorhersageprogramme kann es sich um eine bereits vortrainierte, ML-basierte Übersetzungssoftware handeln, die dazu verwendet wird, aktuell gemessene Eingabedaten (zum Beispiel aktuelle Schwingungszustände und aktuelle Umdrehungszahl der Pumpe) zu nutzen, um den Zeitpunkt vorherzusagen, an dem die Schwingungszustände die Notwendigkeit des Ersetzens der Pumpe anzeigen. Der Zeitpunkt von in der Vergangenheit durchgeführten Ersetzungen von Pumpen oder Pumpenkomponenten bei bestimmten Schwingungszuständen und Umdrehungswerten ist in den Trainingsdatensätzen ebenfalls enthalten. Im Zuge der Trainingsphase lernt das ML-Modell, Schwingungszustände und/oder Umdrehungszahlprofile dem Zeitpunkt zuzuordnen, an welchem die Pumpe oder Pumpenkomponenten wegen Materialverschleiß ersetzt wurden. Die erlernten Zuordnungen können beispielsweise in Form von ein oder mehreren Tabellen 912.1, 912.2, 912.3 gespeichert werden. Diese im Laufe der Zeit gewonnenen Messwerte und Zuordnungen werden als Trainingsdaten 914.1, 914.2, 914.3 jeweils lokal gespeichert.

Gemäß Ausführungsformen für jedes der Überwachungssysteme in regelmäßigen Abständen ein erneutes Training seines ML-Modells 919.1, 919.2, 919.3 auf dem mittlerweile jeweils erweiterten Trainingsdatensatz durch. Dies kann den Vorteil haben, dass die Qualität des ML-Modells und damit die Qualität der von diesem erzeugten Vorhersagen zunimmt, denn je umfangreicher der Trainingsdatensatz, desto höher ist im allgemeinen auch die Qualität eines auf diesem trainierten prädiktiven Modells.

Gemäß bevorzugter Ausführungsformen beinhaltet jedes der Vorhersageprogramme ein Modul 908.1, 908.2, 908.3 zur Synchronisation der Trainingsdaten und/oder des trainierten Modells mit den anderen Vorhersageprogrammen. Beispielsweise kann jedes der Überwachungssysteme in Form eines virtuellen Nutzers mit entsprechenden Account in einer ID-Datenbank des jeweils anderen Überwachungssystems registriert sein. Außerdem kann jedes der Überwachungssysteme die von diesen lokal erfassten Trainingsdaten in Form von ein oder mehreren Datensätzen in einer Nutzdaten-Datenbank speichern. Jeder dieser Datensätze kann ein oder mehrere Zugriffs-Zertifikate beinhalten.

In der ID-Datenbank der jeweiligen Überwachungssysteme können Nutzerzertifikate, Eignerzertifikate und/oder Zugriffszertifikate sowie entsprechende Kettenobjekte, welche Eignerrechte und/oder Zugriffsrechte einzelnen Nutzern (und damit Überwachungssystemen) zuweisen, gespeichert sein. Im Zuge der Synchronisation sendet jedes der Überwachungssysteme eine Synchronisations-Anfrage an jedes der anderen Überwachungssysteme, wobei das als Empfänger dieser Anfrage fungierende Überwachungssystem dazu konfiguriert ist, eine Prüfung der Anfrage gemäß den hier beschriebenen Ausführungsformen der Erfindung durchzuführen. Beispielsweise beinhaltet die Synchronisationsanfrage zumindest ein Zugriffs-Zertifikat, welches zum lesenden und/oder schreibenden Zugriff auf einen bestimmten Datensatz des Empfänger-Überwachungssystems berechtigt. Das Zugriffszertifikat ist ein einfacher numerischer Wert, zum Beispiel "29347293892877172". Das Empfänger-Überwachungssystem prüft nach Erhalt der Anfrage zunächst in einem ersten Prüfschritt, ob ein solcher Wert in seiner ID-Datenbank vorhanden ist. Da es sich bei diesem Schritt nur um einen Vergleich einer numerischen Zahl auf Identität handelt, kann dieser Schritt sehr schnell durchgeführt werden.

Falls das Empfänger-Überwachungssystem diesen Wert nicht kennt, wird keine weitere Prüfung durchgeführt und die Anfrage nicht beantwortet. Gemäß Ausführungsformen unterbricht das Empfänger-Überwachungssystem zumindest für eine gewisse Zeit die Netzwerkverbindung zu dem Sender-Überwachungssystem 328.

Nur für den Fall, dass ein entsprechender Wert in der ID Datenbank enthalten ist, führt das Empfänger-Überwachungssystem weitere Prüfschritte durch, die insbesondere eine komplexe Prüfung beinhalten, ob das Überwachungssystem, von dem die Anfrage stammt, die nötigen Rechte hat, die angefragte Zugriffsaktion auf den Datensatz bzw. die Datenbank durchzuführen. Beispielsweise kann im Zuge dieser weiteren Prüfung eine komplexe und rechnerisch aufwändige Zertifikatskettenprüfung durchgeführt werden. Beispielsweise kann die Anfrage neben dem Berechtigungsnachweis "29347293892877172" ein Nutzer-Zertifikat beinhalten, das von einer Zertifizierungsstelle (CA) für das die Anfrage sendende Überwachungssystem ("Sender-Überwachungssystem") ausgestellt wurde.

Das Überwachungssystem, das die Anfrage empfangen hat ("Empfänger-Überwachungssystem") kann im Zuge der weiteren Prüfung ein Zugriffsermächtigungskettenobjekt innerhalb der ID-Datenbank identifizieren, das diesem Nutzer-Zertifikat das Zugriffs-Zertifikat "29347293892877172" über eine Kette mehrerer weiterer Nutzer-Zertifikate zuweist, wobei die weiteren Nutzerzertifikate für Nutzer bzw. Überwachungssysteme stehen, die dem Sender-Überwachungssystem das Zugriffsrecht "29347293892877172" letztlich mittelbar zugewiesen haben. Die Nutzer-Zertifikate dieser Nutzer bzw. Überwachungssysteme wurden z.B. von der gleichen Zertifizierungsstelle oder einer dieser nachgeordneten, vertrauenswürdigen Stelle ausgestellt. Durch die Zertifikatskettenprüfung kann das Empfängersystem sicher prüfen, ob das Anfrage-Überwachungssystem sein Zugriffsrecht auch wirklich von Nutzern bekommen hat, die dem Empfänger-Überwachungssystem bekannt sind und als vertrauenswürdig gelten und die selbst jeweils dieses Zugriffsrecht hatten. Falls auch die weitere Prüfung positiv ist, darf das Sender-Überwachungssystem seine lokal erfassten Trainingsdaten und/oder sein lokal trainiertes und verbessertes ML-Modell mit den lokalen Trainingsdaten oder dem Modell des Empfänger-Überwachungssystems synchronisieren.

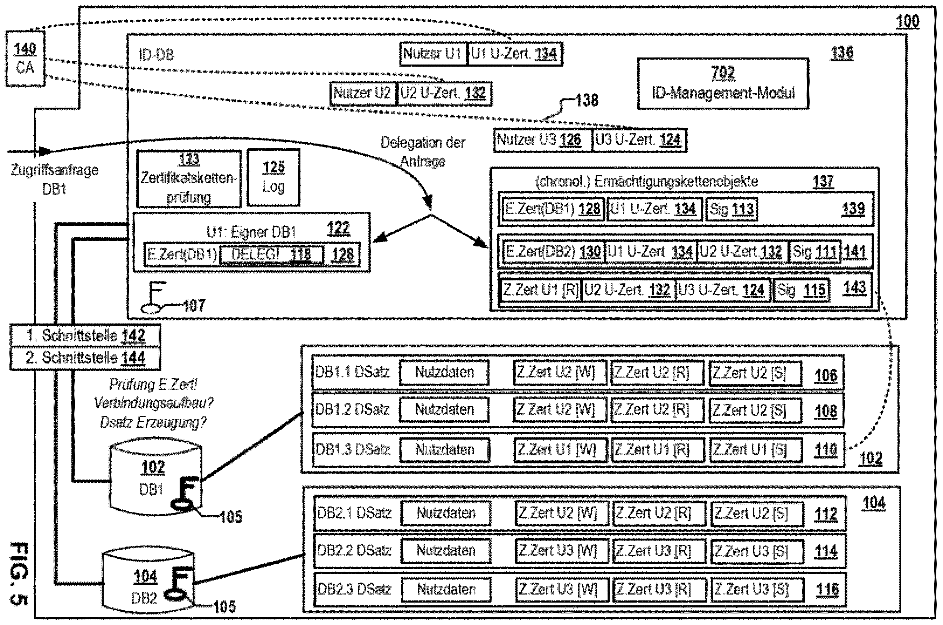

**Figur 5** zeigt ein Blockdiagramm eines Überwachungssystems 100 mit mehreren Nutzdaten-Datenbanken 102 DB1, 104 DB2 und einer ID-Datenbank 136. Das Überwachungssystem beinhaltet ein Zugriffs-Verwaltungssystem in Form einer Zugriffsverwaltungssoftware, die dazu konfiguriert ist, den Zugriff von mehreren Nutzern U1, U2, U3, ..., auf mehrere Datensätze 112, 114, 116 zu kontrollieren. Jeder der Nutzer U1, U2, U3 repräsentiert jeweils ein Überwachungssystem, z.B. das vorliegende Überwachungssystem 100 sowie externe Überwachungssysteme.

Beispielsweise ist einem ersten Nutzer- U1 ein Nutzer-Zertifikat 134 zugeordnet. Das Nutzer-Zertifikat 134 wurde von einer Zertifizierungsstelle 140 als ein Root-Zertifikat für den Nutzer-U1 ausgestellt. Nutzer U1 kann z.B. das Überwachungssystem 100 repräsentieren, Nutzer U2, U3 könnten jeweils externe Überwachungssysteme repräsentieren, die ggf. Anfragen an das Überwachungssystem 100 senden können, um Nutzdaten in der Nutzdatenbank zu lesen oder zu erstellen oder um die Ausführung einer mit einem Nutzdatensatz verknüpfte Funktionalität zu triggern. In analoger Weise könnten auch den weiteren Überwachungssystemen Nutzer-Zertifikate 132,124 zugeordnet sein, die von der Zertifizierungsstelle als Root-Zertifikate ausgestellt wurden. Die Nutzer-Zertifikate 134,132,124 können durch Zertifikatskettenprüfung bis zum entsprechenden Rot-Zertifikat der Zertifizierungsstelle geprüft werden.

Der erste Nutzer U1 könnte beispielsweise das Überwachungssystem 100 selbst oder ein technischer Administrator für die Nutzdaten-Datenbanken DB1, DB2 des Überwachungssystems 100 sein. Entsprechend kann dem ersten Nutzer U1 ein Eigner-Zertifikat 128 für die erste Nutzdaten-Datenbank DB1 zugeordnet sein. Die Zuordnung, auch "Verknüpfung" genannt, kann beispielsweise in Form eines Ermächtigungskettenobjekts 139 implementiert und in einer ID-Datenbank 136 gespeichert sein.

Das Zugriffs-Verwaltungssystem ist also dazu ausgebildet, ein erstes Eignerzertifikat, zum Beispiel Eigner-Zertifikat 128 bezüglich DB1 oder Eigner-Zertifikat 130 bezüglich DB2 mit dem ersten Nutzer U1 zu verknüpfen. Dies kann durch Speicherung des Eigner-Zertifikats 128 und des Nutzer-Zertifikat 134 des ersten Nutzers U1 in einem Eignerschaftsermächtigungskettenobjekt 139 erfolgen bzw. durch Speicherung des Eigner-Zertifikat 130 und des Nutzer-Zertifikats 134 des ersten Nutzers U1 in einem Eignerschaftsermächtigungskettenobjekt 141. Ein Eigner-Zertifikat ist ein Zertifikat, welches einer oder mehreren Nutzdaten-Datenbanken zugeordnet ist und jedem Nutzer, mit dem es verknüpft ist, das Recht gewährt, Datensätze in dieser Nutzdaten-Datenbank anzulegen. Beispielsweise gewährt das Eigner-Zertifikat 128 jedem Nutzer, dem es (zum Beispiel durch ein Eignerschaftsermächtigungskettenobjekt) zugeordnet ist, das Recht, einen oder mehrere Datensätze in der Datenbank-DB1 zu erstellen.

Das Überwachungssystem 100 beinhaltet eine erste Schnittstelle 142, die es dem ersten Nutzer U1, dem das Eigner-Zertifikat 128 für die Datenbank DB1 zugeordnet ist, ermöglicht, ein zweites Eigner-Zertifikat für die Nutzdaten-Datenbank DB1 zu erstellen und dieses zweite Eigner-Zertifikat mit einem zweiten Nutzer U2 zu verknüpfen. Diese Verknüpfung mit dem zweiten Eigner-Zertifikat ermöglicht es dem zweiten Nutzer, nun seinerseits Datensätze in der Nutzdaten-Datenbank DB1 anzulegen. Auch der zweite Nutzer kann sich, sofern das zweite Eigner-Zertifikat gemäß seines Delegierbarkeitsparameters delegierbar ist, dieser ersten Schnittstelle bedienen um weiteren Nutzern seines Vertrauens identische oder veränderte Kopien des Eigner-Zertifikats für die Datenbank-DB1 auszustellen und in Verbindung mit einem Nutzer-Zertifikat dieser weitere Nutzer in der ID-Datenbank zu speichern, zum Beispiel in Form weiterer Eignerschafts-Ermächtigungskettenobjekte 139, 141.

Das Überwachungssystem 100 beinhaltet eine zweite Schnittstelle 144, die es dem zweiten Nutzer U2, der einen Datensatz 106, 108 in der Nutzdaten-Datenbank 102 erstellt hat (nachdem ihm bereits von dem ersten oder einem anderen Nutzer ein Eigner-Zertifikat für die DB1 ausgestellt wurde), ermöglicht, mindestens ein Zugriffs-Zertifikat zu erstellen und mit dem Nutzer-Zertifikat eines Nutzers, dem Zugriff auf diesen Datensatz gewährt werden soll, zu verknüpfen. Bei dem Nutzer, dem Zugriff gewährt werden soll, kann es sich um einen beliebigen anderen Nutzer (z.B. beliebiges anderes Überwachungssystem), der bei dem Zugriffs-Verwaltungssystem registriert ist und der das Vertrauen des zweiten Nutzers (Datensatzerstellers) besitzt, handeln. Bei den Zugriffs-Zertifikaten des zweiten Nutzers U2 kann es sich zum Beispiel um ein Schreibzugriffs-Zertifikat Z.Zert_U2[W], ein Lesezugriffs-Zertifikat Z.Zert_U2[R] und/oder ein Indexzugriffs-Zertifikat Z.Zert_U2[S] handeln. Ein Zugriffs-Zertifikat kann also eine Art des Datensatzzugriffs auf den von dem zweiten Nutzer erstellten Datensatz spezifizieren.

Falls nun der erste Nutzer U1 auf einen Datensatz 106, 108, den der zweite Nutzer U2 erstellt hat, zugreifen will, prüft das Zugriffs-Verwaltungssystem die Zugriffsberechtigung des ersten Nutzers auf einen von dem zweiten Nutzer angelegten Datensatz 106, 108. Der gewünschte Zugriff wird dem ersten Nutzer nur dann gewährt, wenn das Zugriffs-Verwaltungssystem feststellt, dass dem ersten Nutzer U1 sowohl ein Eigner-Zertifikat für die Nutzdaten-Datenbank 102 als auch ein Zugriffs-Zertifikat Z.Zert U2 [W] (oder [R] oder [S]) für den Zugriff auf den Datensatz zugeordnet ist.

Die einzelnen Datensätze 106, 108, 110, 112, 114, 116 enthalten lediglich Zugriffs-Zertifikate, die der Nutzer, der den betreffenden Datensatz erstellt hat, diesen Datensätzen im Zuge der Erstellung zuweist. Beispielsweise kann das Überwachungssystem 100 während des Vorgangs der Erstellung eines neuen Datensatzes im Hintergrund automatisch prüfen, welche Zugriffs-Rechte für den Nutzer, der gerade einen Datensatz erstellt, in der ID-Datenbank hinterlegt sind. Dies kann insbesondere dann vorteilhaft sein, wenn jedem Nutzer ein vordefinierter Satz an Zugriffs-Zertifikaten (zum Beispiel für Lese-, Schreib-, und Indexzugriffsrechte) zugewiesen ist welcher automatisch auch komplett jedem neu erstellten Datensatz zugewiesen werden soll. Diese Situation ist in Figur 5 dargestellt. Alternativ dazu ist es jedoch auch möglich, dass jedem Nutzer mehrere verschiedene Zugriffs-Zertifikate (der gleichen Zugriffsart, zum Beispiel Lesezugriff) in der ID-Datenbank zugewiesen sind und der Nutzer manuell über eine GUI im Zuge der Datensatzerstellung auswählen kann, welche dieser Zugriffs-Zertifikate dem neuen Datensatz zugewiesen werden sollen. Dies kann vorteilhaft sein, da der Nutzer für eine große Vielzahl von Datensätzen, die er anliegt und die zum Beispiel ähnlichen Inhalts sind oder ein ähnliches Vertraulichkeitsniveau besitzen, den gleichen Satz an Zugriffs-Zertifikaten im Zuge der Erstellung zuweisen kann. Für den Fall aber dass der Nutzer zum Beispiel zehn verschiedene Kreditkarten verwaltet und die vertraulichen Kreditkartennummern in zehn verschiedenen Datensätzen speichert, hat der Nutzer auch die Möglichkeit, jedem dieser Datensätze ein anderes Zugriffs-Zertifikat zuzuweisen. Dies hat den Vorteil, dass der Ersteller jedes dieser Kreditkartennummern-Datensätze weiteren Nutzern selektiv nur für einen bestimmten Kreditkartennummern-Datensatz gewähren kann, also ohne den betreffenden weiteren Nutzern automatisch auch Zugriffsrechte für die anderen Kreditkartendatensätze zu geben. Der Einfachheit halber beziehen sich die meisten der hier beschriebenen Ausführungsformen und Beispiele darauf, das einem Nutzer 3 Zugriffs-Zertifikate für Lese-, Schreib-, und Indexzugriffsrechte zugewiesen sind, die im Zuge einer Datensatzerstellung durch den Nutzer automatisch in diesen Datensatz integriert werden. Diese Beispiele sind jedoch so zu verstehen, dass nach alternativen Ausführungsformen und Beispielen der Nutzer, der einen Datensatz erstellt, auch manuell eine bestimmte Untermenge aus vordefinierten und ihm zugewiesenen Zugriffs-Zertifikaten auswählen und in den erstellten Datensatz integrieren kann.

Die in Figur 5 dargestellten Datensätze zeigen, dass beispielsweise die Datensätze 106, 108, und 112 von dem Nutzer U2 angelegt wurden. Der Datensatz 110 wurde von dem Nutzer U1 angelegt. Der Datensatz 116 wurde von dem Nutzer U3 angelegt. Die vordefinierten Zugriffs-Zertifikate der jeweiligen Ersteller wurden in die Datensätze integriert. Zumindest die Ersteller haben also vollumfänglichen Zugriff auf ihre Datensätze, sofern sie auch über ein Eigner-Zertifikat für die jeweilige Nutzdaten-Datenbank verfügen. Es ist jedoch durchaus möglich, dass weitere Nutzer Zugriff auf einzelne Datensätze haben. Diese Information ist jedoch nicht in der Nutzdaten-Datenbank enthalten, sondern in Form von Zugriffsermächtigungskettenobjekten 143 in der ID-Datenbank gespeichert. So ist beispielsweise aus dem Objekt 143 ersichtlich, dass ein Zugriffs-Zertifikat des Nutzers U1, dass ein Leserecht spezifiziert, von dem Ersteller U1 dem Nutzer U2 zugewiesen wurde, indem das Nutzer-Zertifikat 132 dieses Nutzers U2 innerhalb des Objekts 143 mit dem Lesezugriffs-Zertifikat von U1 verknüpft wurde. Außerdem ist aus dem Objekt 143 ersichtlich, dass der Nutzer U2 dieses Leserecht auf einen weiteren Nutzer U3 übertragen (weitergegeben) hat, indem das Nutzer-Zertifikat 124 des Nutzers U3 innerhalb des Objekts 143 mit dem Lesezugriffs-Zertifikat von U1 verknüpft wurde. Im Zuge jeder Übertragung eines Zugriffsrechts bzw. damit einhergehend im Zuge jeder Zuweisung eines weiteren Nutzer-Zertifikats zu einem bestimmten Zugriffs-Zertifikat wird ein neues Zugriffsermächtigungskettenobjekt in der ID-Datenbank vom Zugriffs-Verwaltungssystem erstellt. Dem menschlichen Nutzer wird vorzugsweise eine intuitive GUI angeboten um Nutzern Zugriffs bzw. Eignerrechte zu übertragen und dadurch im Hintergrund die Erzeugung weiterer Zertifikate oder weiterer Verknüpfungen von Zugriffs-bzw. Eigner-Zertifikaten mit Nutzer-Zertifikaten zu initialisieren. Das Zugriffsermächtigungskettenobjekt 143 impliziert also, dass sowohl Nutzer U2 als auch Nutzer U3 (und selbstverständlich auch Nutzer U1) Lesezugriff auf die von Nutzer-U1 erstellten Datensätze, zum Beispiel Datensatz 110, haben.

In analoger Weise spezifizieren Eignerschaftsermächtigungskettenobjekten 139, 141 eine Kette aus ein oder mehreren Nutzern, die anderen Nutzern Eigner-Zertifikate zugewiesen und dadurch Eigner-Rechte übertragen haben. So geht beispielsweise aus Objekt 139 hervor, dass der Nutzer-U1 Eigner-Rechte im Hinblick auf die Nutzdaten-Datenbank-DB1 besitzt, da das Nutzer-Zertifikat 134 des Nutzers U1 in dem Objekt 139 dem Eigner-Zertifikat 128 der DB1 zugewiesen ist. Das Objekt 141 spezifiziert, dass der Nutzer U1 die Eigner-Rechte für die Datenbank DB2 an einen weiteren Nutzer U2 übertragen hat.

Falls ein Nutzer eine Zugriffsanfrage auf eine bestimmte Nutzdaten-Datenbank 102 absendet, prüft das Zugriffs-Verwaltungssystem 100 oder eine Komponente desselben, zum Beispiel die betreffende Datenbank 102, ob dem Nutzer, von dem die Anfrage stammt, in der ID- Datenbank ein Eigner-Zertifikat zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der anfragenden Nutzer diese Eignerrechte hat, wird ihm der Aufbau einer Datenbank Verbindung zu der Nutzdaten-Datenbank 102 gewährt und, falls dies angefragt wird, auch die Erstellung neuer Datensätze in dieser Datenbank. Damit diese Nutzer jedoch auch auf einzelne Datensätze lesend oder schreibend zugreifen kann oder über einen Index unerfahren bringen kann ob ein bestimmter Datensatz überhaupt existiert, müssen ihm (als es einem Nutzer-Zertifikat) in der ID-Datenbank auch die entsprechenden Rechte zugewiesen sein. Das Zugriffs-Verwaltungssystem prüft vor jedem Zugriff eines Nutzers mit Eignerschaftsrechten also zusätzlich, ob der Nutzer über die erforderlichen Zugriffsrechte verfügt.

Nach manchen Ausführungsformen (hier nicht dargestellt) verfügt jeder Datensatz einer bestimmten Nutzdaten-Datenbank über ein oder mehrere zusätzliche Felder für Zugriffs-Zertifikate, die anderen Nutzern oder Funktionen zugewiesen sind (also nicht speziell dem Nutzer, der den Datensatz erstellt hat). Beispielsweise kann es sich bei einer Nutzdaten-Datenbank um eine Datenbank mit Sensordaten handeln, die ein oder mehrere Sensoren des Überwachungssystems erfasst haben. Um die Sicherheit zu erhöhen, kann zum Beispiel in jedem Datensatz der Sensormesswertedatenbank ein zusätzliches Feld enthalten sein, in welchem ein Sensormesswertetyp-Zertifikat gespeichert ist. Beispielsweise kann das Überwachungssystem mehrere Sensoren unterschiedlichen Typs beinhalten, um den aktuellen Zustand des Überwachungssystems, das z.B. ein Gerät oder ein Bauteil sein kann, zu erfassen. Zu den Sensoren können z.B. Temperatursensoren, Schwingungssensoren, Feuchtigkeitssensoren, Turbinenumdrehungszahl-Sensoren etc. gehören. Falls es sich bei der Nutzdaten-Datenbank um eine generische Sensordatenbank handelt, die die Messwerte all dieser Sensoren umfasst, kann in jedem Datensatz der Sensormesswertdatenbank ein zusätzliches Feld enthalten sein, in welchem ein Sensorytp-Zertifikat gespeichert ist. Es können eine Vielzahl solcher Felder pro Datensatz enthalten sein, und das Zugriffs-Verwaltungssystem kann für bestimmte Typen von Nutzdaten-Datenbanken automatisch im Zuge der Erzeugung eines neuen Datensatzes die entsprechenden Zugriffs-Zertifikate in den Feldern speichern. Beispielsweise wird bei Erzeugung eines neuen Sensormesswert-Datensatzes durch einen Temperatursensor automatisch in das entsprechende Feld ein Temperatursensor-Zertifikat durch das Zugriffs-Verwaltungssystem eingefügt. Ein Nutzer, der auf einen solchen Datensatz zugreifen möchte, muss also zusätzlich zu dem Eignerschaftsrecht bezüglich der Sensormesswert-Datenbank und zusätzlich zu der Zugriffsberechtigung durch den Ersteller oder einer von diesen dazu ermächtigten Nutzer auch noch nachweisen, dass ihm ein Temperatursensor-Zertifikat zugewiesen ist. Dies kann die Sicherheit erhöhen, da so auf relativ generische und globale Art und Weise bestimmten Nutzern der Zugriff auf bestimmte Daten verwehrt werden kann, von welchen davon ausgegangen werden kann, dass sie für die Arbeit des Nutzers nicht notwendig sind. Beispielsweise könnten Temperaturdaten als sensibel angesehen werden, da diese etwas darüber aussagen, in welcher Umgebung das Überwachungssystem verwendet wurde, wohingegen die Turbinendrehzahl nur über den Zustand der Turbine Aufschluss gibt. Je nach Einsatzszenario kann es also vorteilhaft sein, dass bestimmte Nutzer bzw. andere Überwachungssysteme nur auf bestimmte Messwerte zugreifen können, die sicherheitstechnisch als weniger sensibel gelten, auf andere jedoch nicht. Somit kann für IoT Anwendungen ein sehr fein granulares Rechtemanagement bereitgestellt werden, deren Prüfung dennoch die Prozessoren der als IoT Endknoten verwendeten Überwachungssysteme nicht übermäßig beansprucht.

Vorzugsweise ist die Gesamtheit der Zugriffs-Zertifikate eines Datensatzes durch ein oder mehrere logische Operatoren wie zum Beispiel "AND" oder "OR" miteinander verbunden, sodass sich ein komplexer, logisch verbundener Ausdruck ergibt, welcher spezifiziert, welche Zugriffs-Zertifikate einem Nutzer zugewiesen sein müssen damit dieser Zugriff auf einen Datensatz hat. Dabei beinhalten die Zugriffs-Zertifikate eines Datensatzes vorzugsweise eine Mischung aus Zugriffs-Zertifikaten, die dem Ersteller des Datensatzes persönlich zugewiesen sind und die anderen Nutzern persönlich zugewiesen werden müssen um diesen Zugriff zu gewähren, und Zugriffs-Zertifikaten, die von dem Zugriffs-Verwaltungssystem oder einem menschlichen Nutzer automatisch oder manuell jedem Datensatz einer bestimmten Nutzdaten-Datenbank bei Erstellung zugewiesen werden (zum Beispiel Sensortypspezifisches-Zugriffszertifikat oder Steuerobjet-spezifisches-Zugriffszertifikat, wobei ein Steuerobjekt eine hardwarebasierte oder softwarebasierte Einheit ist, die von einer Funktionalität des Überwachungssystems gesteuert wird). Diese Zugriffs-Zertifikate werden auch als "Attribut-Zertifikate" bezeichnet.

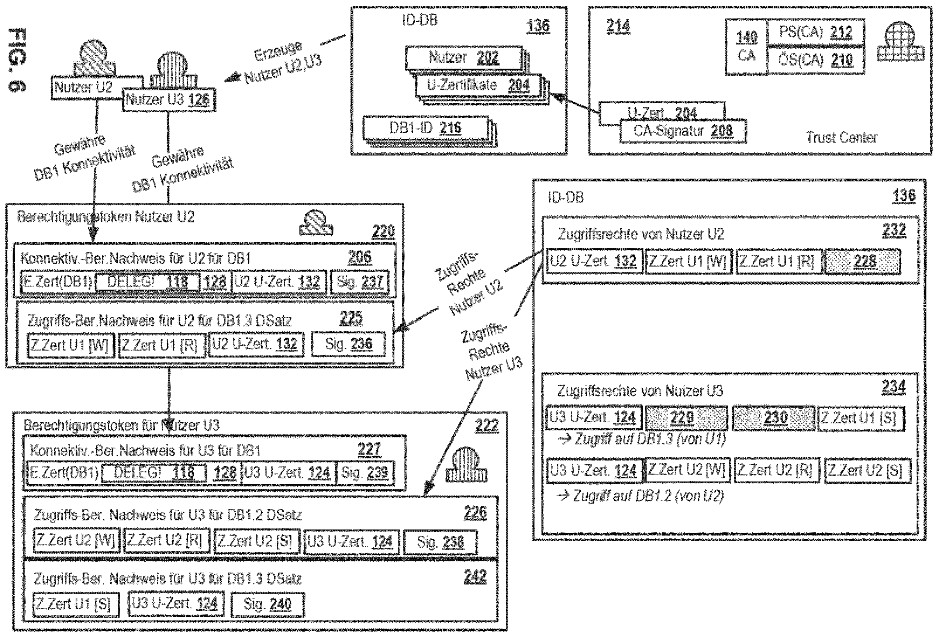

Optional können die einzelnen Ermächtigungsobjekte 139, 141, 143 mit dem privaten Signaturschlüssel 107 des Überwachungssystems 100 (der z.B. als Signaturschlüssel des darauf instanziierten Zugriffs-Verwaltungssystems implementiert sein kann) signiert werden. Zusätzlich oder alternativ dazu können Berechtigungstoken, die in Antwort auf eine Zugriffsanfrage eines Nutzers (z.B. einer Anfrage der Anfrageeinheit) an eine Nutzdaten-Datenbank von der ID-Datenbank für den anfragenden Nutzer dynamisch erstellt werden, signiert werden (siehe Beschreibung Fig. 6).

**Figur** 6 illustriert den Vorgang der Erstellung von Berechtigungstoken für zwei Nutzer U2, U3 gemäß einer weiteren Ausführungsform des erfindungsgemäßen Verfahrens. Bei dem Nutzer U2 kann es sich z.B. um die Anfrageeinheit handeln und bei dem Nutzer U3 um ein weiteres Überwachungssystem, das ggf. ebenfalls eine Anfrage an das Überwachungssystem 100 schicken kann. Das Überwachungssystem U2 und/oder U3 kann z.B. im Wesentlichen so ausgebildet sein wie das Überwachungssystem 300 gemäß Figur 1, das die Anfrage empfängt.

In der ID-Datenbank sind einer Vielzahl von Nutzern 202, die z.B. jeweils ein Überwachungssystem gemäß Ausführungsformen der Erfindung repräsentieren können, jeweils ein Nutzer-Zertifikat 204 zugewiesen. Die Nutzer-Zertifikate werden vorzugsweise von einer Zertifizierungsstelle 140 herausgegeben und mit einem privaten Signierschlüssel 212 der Zertifizierungsstelle signiert. Die Zertifizierungsstelle stellt zudem einen öffentlichen Signaturprüfschlüssel 210 zur Verfügung (zum Beispiel über entsprechende öffentliche Schlüsselverzeichnisse, die über das Internet einsehbar sind). Das bedeutet, dass die ID-Datenbank 136 die Validität eines Nutzer-Zertifikats durch Zertifikatskettenprüfung unter Einbeziehung des öffentlichen Signaturprüfschlüssels 210 der Zertifizierungsstelle prüfen kann. In der ID-Datenbank können Identifikatoren 216 mehrerer Nutzdaten-Datenbanken gespeichert sein, welchen wiederum jeweils ein oder mehrere eigene-Zertifikate zugewiesen sein können. Vorzugsweise enthält die ID-Datenbank jedoch keine Nutzdaten oder Verweise auf einzelne Datensätze in Nutzdaten-Datenbanken.

Wenn ein Nutzer U2, zum Beispiel über eine entsprechende Anfrage an das Überwachungssystem 300, 100, Zugriff auf Datensätze, die in der Nutzdaten-Datenbank-DB1 gespeichert sind, anfordert, wird von dem Überwachungssystem 100 automatisch eine Berechtigungsanfrage für diesen Nutzer U2 (der z.B. eine Anfrageeinheit repräsentiert) generiert und an die ID-Datenbank gesendet. Diese analysiert eine Menge an Ermächtigungskettenobjekten 137 um festzustellen, welche Eigner-Zertifikate und Zugriffs-Zertifikate dem Nutzer-Zertifikat 132 des Nutzers U2 zugewiesen sind und erstellt dynamisch in Antwort an diese Berechtigungsanfrage einen Berechtigungstoken 220 für den Nutzer U2. Aus diesem Berechtigungsnachweis geht hervor, dass dem Nutzer U2 ein Eigner-Zertifikat 128 für die Datenbank-DB1 zugewiesen ist, der Nutzer also zum Aufbau einer Datenbank Verbindung zur DB1 berechtigt ist. Außerdem geht aus dem Berechtigungstoken hervor, dass der Nutzer U2 berechtigt ist für den Schreibzugriff auf sämtliche Datensätze, die von dem Nutzer-U1 (der beispielsweise das Überwachungssystem 100 oder 300 repräsentiert) erstellt wurden.

Beispielsweise kann der Berechtigungstoken gegliedert sein in einen Konnektivitätsnachweis 206 für den Nutzer U2 im Hinblick auf die Erstellung einer Datenbank Verbindung zur DB1 und in einen Zugriffsberechtigungsnachweis im Hinblick auf eine bestimmte Zugriffsart und im Hinblick auf alle Datensätze, die von einem bestimmten Nutzer erstellt wurden.

Der Berechtigungstoken 220 und/oder die jeweiligen Teil- Berechtigungstoken 206, 225 können eine Signatur 237, 236 enthalten, die mit dem privaten Signierschlüssel 107 der ID-Datenbank dynamisch in Antwort auf die Berechtigungsanfrage erzeugt wurde. Jede der Nutzdaten-Datenbanken beinhaltet einen öffentlichen Signaturprüfschlüssel 105, der mit dem privaten Signierschlüssel 107 ein asymmetrisches kryptographisches Schlüsselpaar bildet. Bevor die Nutzdaten-Datenbank-DB1 dem Nutzer U2 den Aufbau einer Datenbankverbindung und/oder den Zugriff auf einzelne Datensätze erlaubt, wird neben dem Vorhandensein der entsprechenden Zertifikate auch die Validität der Signaturen 237, 236 geprüft und der Verbindungsaufbau bzw. der Datensatzzugriff nur im Falle der Validität der Signatur zugelassen.

In analoger Weise wird in Antwort auf eine Zugriffsanfrage des Nutzers U3 von der ID-Datenbank der Berechtigungstoken 222 generiert und signiert, aus welchem hervorgeht, dass Nutzer U3 zum Verbindungsaufbau zur Datenbank-DB1 berechtigt ist. Außerdem geht aus den Berechtigungstoken 226, 242 hervor, dass der Nutzer U3 auf die von Nutzer U2 erstellten Datensätze lesend und schreibend zugreifen darf und auch eine Indexabfrage um zu erfahren, ob ein bestimmter Datensatz, den der Nutzer erstellt hat, überhaupt existiert, durchführen darf. Außerdem darf Nutzer-U3 eine entsprechende Indexabfrage für Datensätze durchführen, die der Nutzer-U1 erstellt hat, jedoch nicht schreibend oder lesend zugreifen.

Dass der Nutzer U2 auf die Datensätze des Nutzers U1 nur lesend und schreibend, aber nicht per Indexzugriff zugreifen darf, geht aus dem Fehlen eines entsprechenden Zugriffs-Zertifikats in einem entsprechenden Zugriffsermächtigungskettenobjekt hervor. Dieses Fehlen ist durch Box 228 angedeutet.

Dass der Nutzer U3 auf die Datensätze des Nutzers U1 nicht schreibend oder lesend zugreifen darf, geht aus den Boxen 229, 230 hervor. Wenn einem Nutzer in der ID-Datenbank Zugriffsrechte in Form entsprechender Zugriffs-Zertifikate nicht zugewiesen sind, enthält auch der dynamisch erstellte Berechtigungstoken 220, 222 die entsprechenden Rechte nicht.

Vorzugsweise enthalten die dynamisch erstellten Berechtigungstoken 220, 222 nicht die gesamte Kette der Nutzer-Zertifikate derjenigen Nutzer, die anderen Nutzern entsprechende Eigner-Zertifikate oder Zugriffs-Zertifikate zugewiesen haben, sondern nur die dem anfragenden Nutzer zugewiesenen Eigner- und Zugriffs-Zertifikate sowie optional noch das Nutzer-Zertifikat des anfragenden Nutzers. Für den Nachweis der Berechtigung ist eine Dokumentation der Übertragungskette der Rechte nicht relevant. Dadurch, dass die Berechtigungstoken frei sind von den Nutzer-Zertifikaten der Übertragungskette, kann die Größe der Berechtigungstoken reduziert, das Verfahren beschleunigt und der Datenverkehr reduziert werden.

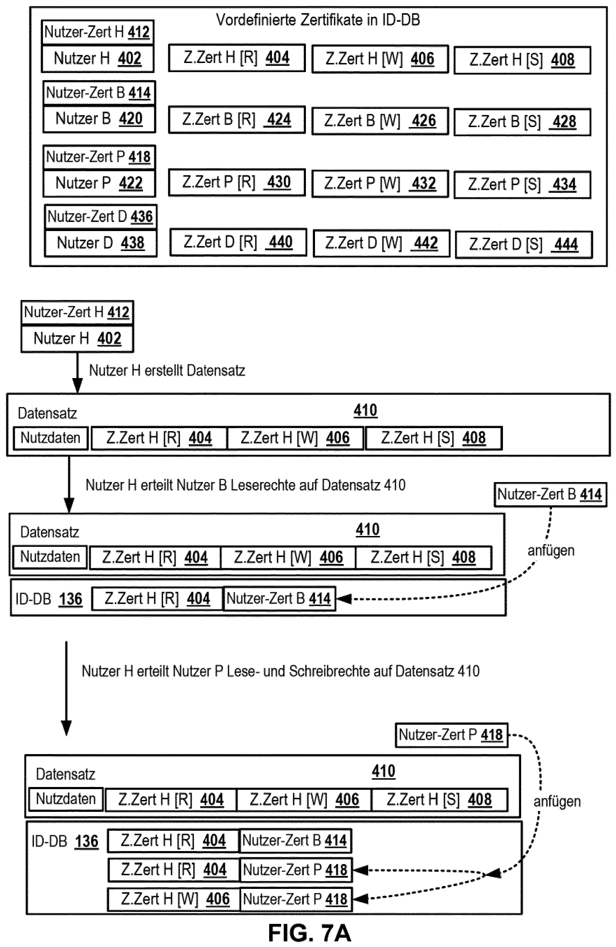

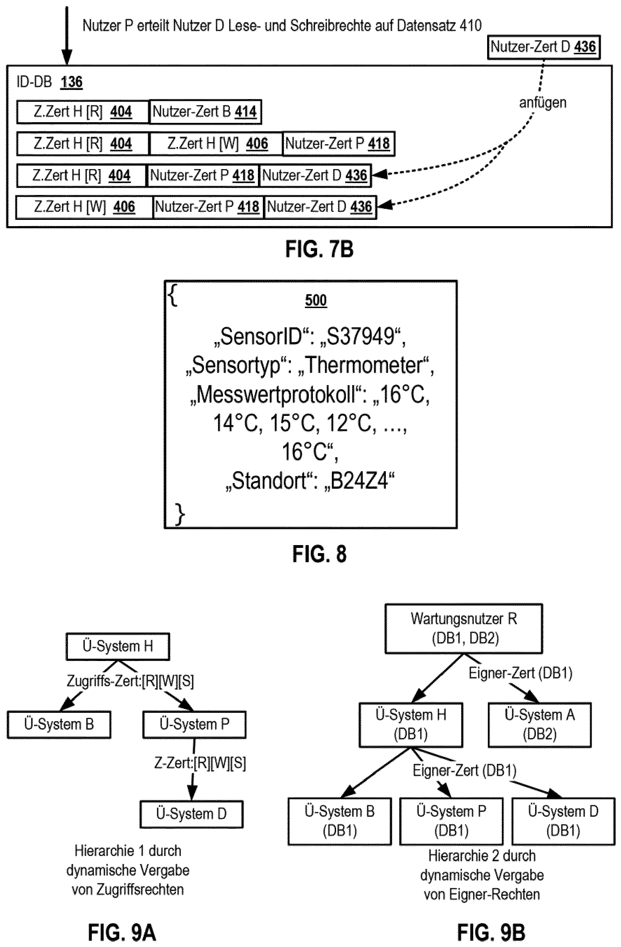

**Figur** 7 zeigt beispielhaft für vier Nutzer 402, 420, 422, 438, die jeweils ein Überwachungssystem gemäß Ausführungsformen der Erfindung, eine Software, ein Gerät, einen sonstigen IoT Endknoten oder eine natürliche Person repräsentieren können, welche Zugriffs-Zertifikate und Nutzer-Zertifikate diesen Nutzern in der ID-Datenbank jeweils zugewiesen sein können. Beispielsweise ist dem Nutzer 402 ein Nutzer-Zertifikat 412 zugewiesen. Außerdem sind dem Nutzer drei Zugriffs-Zertifikate für unterschiedliche Arten des Zugriffs auf die von ihm erstellten Datensätze zugewiesen, nämlich das Zugriffs-Zertifikat 404 für den Lesezugriff (z.B. numerischer Wert "34734939"), das Zugriffs-Zertifikat 406 für den Schreibzugriff (z.B. numerischer Wert "3832927117") sowie das Zugriffs-Zertifikat 408 für den Zugriff auf einen oder mehrere Indices einer Nutzdaten-Datenbank (z.B. numerischer Wert "94659237927655") um zu erfahren, ob und wie viele Datensätze dieser Nutzer in der Nutzdaten-Datenbank erstellt hat. In analoger Weise sind auch den anderen Nutzern 420, 422, 438 entsprechende Nutzer-Zertifikate und Zugriffs-Zertifikate zugewiesen.

Figur 7 illustriert zudem eine mögliche Sequenz der Übertragung von Zugriffs-Rechten über eine Kette mehrerer Nutzer.

In einem ersten Schritt erstellt der Nutzer 402 oder ein Sensor des Überwachungssystems 100 in einer Nutzdaten-Datenbank DB1 einen Datensatz 410. Im Zuge der Erstellung werden neben den eigentlichen Nutzdaten, wie zum Beispiel in Figur 7 abgebildet, automatisch im Hintergrund auch die drei Zugriffs-Zertifikate 404, 406, und 408, die dem erstellenden Nutzer 402 zugewiesen sind, in entsprechenden Feldern des Datensatzes gespeichert.

In einem nächsten Schritt überträgt der Ersteller 402 mithilfe einer GUI oder auf andere Weise einem anderen Nutzer 420 Leserechte auf den Datensatz 410 (sowie auf sämtliche anderen Datensätze, die der Nutzer 402 mit diesem speziellen Lesezugriffs-Zertifikat 404 erstellt hat und die dieses Zugriffs-Zertifikat daher beinhalten). Dies bedeutet, dass das Zugriffs-Verwaltungssystem in der ID-Datenbank dem Nutzer dieses spezielle Lesezugriffs-Zertifikat 404 zuweist, zum Beispiel in dem dieses Zertifikat 404 mit dem Nutzer-Zertifikat 414 des Nutzers 420 verknüpft gespeichert wird, zum Beispiel innerhalb des gleichen Zugriffsermächtigungskettenobjekts.

Der Ersteller des Datensatzes 410 kann auch einem anderen Nutzer Zugriffsrechte einräumen. So räumt der Nutzer 402 beispielsweise im nächsten Schritt einem anderen Nutzer 422 (Nutzer-Zertifikat 418) Lese-und Schreibrechte für sämtliche von dem Nutzer 402 erstellten Datensätze, die die Zertifikate 404 und 406 beinhalten, ein. Die ID-Datenbank bzw. die Ermächtigungskettenobjekte werden um ein neues Zugriffsermächtigungskettenobjekt je Zugriffs-Zertifikat 404, 406, das dem Nutzer-Zertifikat 418 zugewiesen werden soll, ergänzt, welche spezifizieren, dass der Nutzer 402 dem Nutzer 422 die Zugriffs-Zertifikate 404 und 406 zugewiesen hat. In den neu generierten Zugriffsermächtigungskettenobjekten kann jeweils eine Kopie des oder der zugewiesenen Zugriffs-Zertifikate gespeichert sein, die zumindest im Hinblick auf den Wert eines Delegierbarkeitsparameters von dem ursprünglichen Zugriffs-Zertifikat abweicht. Dadurch kann jeder Nutzer der Kette kontrollieren, ob ein anderer Nutzer, dem er bestimmte Rechte einräumt, diese weitergeben kann oder nicht. In dem in Figur 6 dargestellten Beispiel wurden dem Nutzer 422 die Zugriffsrechte 404 und 406 in delegierbarer Form zugewiesen. Alternativ dazu ist es auch möglich dass nur ein einziges Zugriffsermächtigungskettenobjekt erzeugt wird, welches beide Zugriffs-Zertifikate 404, 406 und das Nutzer-Zertifikat 418 beinhaltet.

Der Nutzer 418 kann diese Rechte also an andere weitergeben, was im nächsten Schritt illustriert ist: der Nutzer 422 weist die ihm zugewiesenen Zugriffs-Rechte 404 und 406 nunmehr auch an den Nutzer 438 zu. Diese Zuweisung bewirkt eine Erstellung eines neuen Zugriffsermächtigungskettenobjekts in der ID-Datenbank für jedes der Zugriffs-Zertifikate 404, 406, in welchen jeweils die in ihnen enthaltene Nutzer-Zertifikatskette durch Anfügen eines weiteren Nutzer-Zertifikats 436 des Nutzers, dem die Rechte zugewiesen wurden, um ein Glied erweitert wird. Nach einer alternativen Implementierung wird für zwei oder mehrere Zugriffs-Zertifikate, die mit der gleichen Kette an Nutzer-Zertifikaten verknüpft sind, insgesamt nur ein neues Zugrifffsermächtigungskettenobjekt pro Rechteübertragung an einen anderen Nutzer erzeugt. Im Beispiel von Figur 7b würden die Zertifikate 404 und 406 im gleichen Zugrifffsermächtigungskettenobjekt gespeichert sein, welches zudem auch die Nutzer-Zertifikate 418 und 436 beinhaltet.

Die in den Ermächtigungskettenobjekten dokumentierte Kette an Nutzer-Zertifikaten dokumentiert gemäß Ausführungsformen der Erfindung die Übertragung von Eigner- oder Zugriffs-Rechten über eine Sequenz mehrerer Nutzer. Die Sequenz kann aus einer bloßen Aneinanderreihung von Nutzer-Zertifikaten bestehen, wobei beispielsweise die Position der Nutzer-Zertifikate innerhalb der Kettenobjekte die zeitliche Reihe der Übertragungen repräsentiert. Optional kann nach manchen Ausführungsformen die Kette von Nutzer-Zertifikaten innerhalb eines Ermächtigungskettenobjekten dadurch generiert werden, dass die ID-Datenbank die den einzelnen Nutzer-Zertifikaten zugeordneten privaten Schlüssel so verwendet, dass das letzte Nutzer-Zertifikat in der Kette das an dieses neuangefügte neue Nutzer-Zertifikat signiert, sodass auch innerhalb der Kette der Nutzer-Zertifikate der einzelnen Ermächtigungskettenobjekte eine Zertifikatskettenprüfung möglich ist.

**Figur 8** zeigt ein Beispiel für Nutzdaten 500, die Bestandteil eines Datensatzes 106, 108 sein können. Die Nutzdaten sind im JSon Format spezifiziert. Es können jedoch auch beliebige andere Datenformate verwendet werden.

**Figur 9** zwei dynamisch und unabhängig voneinander durch mehrere Nutzer bzw. Überwachungssysteme generierte Hierarchien, entlang welcher einerseits Zugriffsrechte und andererseits Eignerrechte über eine Kaskade von Nutzern vergeben wurden.

So repräsentiert die in **Figur 9A** abgebildete Hierarchie eine Kaskade von Zugriffsrechten auf ein oder mehrere von Überwachungssystem H erstellte Datensätze. Beispielsweise repräsentiert das Überwachungssystem H eine Turbine, auf welcher mehrere Sensoren für die Temperatur und mehrere Sensoren für Schwingungszustände sowie ein Sensor für die aktuelle Umdrehungszahl der Turbine enthalten sind. Jeder dieser Sensoren wie auch die Steuerungsplatine der Turbine selbst kann als Überwachungssystem gemäß Ausführungsformen der Erfindung implementiert sein, welche mit allen anderen Überwachungssystemen nach entsprechendem Nachweis der Berechtigung Daten austauschen kann. Beispielsweise können sämtliche Sensoren nach entsprechendem Nachweis einer Schreibberechtigung ihre Messdaten in die Nutzdatenbank der die Kontrollerplatine bzw. des Überwachungssystem H schreiben, wobei die Sensoren hier jeweils als Anfrageeinheit auftreten und auf Basis eines Verfahrens nach Ausführungsformen der Erfindung nachweisen müssen, dass Sie die erforderlichen Schreibrechte haben.

Beispielsweise kann das Zugriffs-Recht je nach Sensortyp neben einem Recht zum Schreiben [W] auch ein Recht auf Lesen [R] und Indexzugriff [S] besitzen. Die verschiedenen Zugriffsrechte können mittels dreier unterschiedlicher Zugriffs-Zertifikate auf andere Überwachungssysteme, z.B. Überwachungssystem H, übertragen werden. Für die initiale Berechtigungsprüfung ist es ausreichend, dass zumindest eines der Zugriffs-Zertifikate in der ID-Datenbank des Überwachungssystems H als Referenzberechtigungsnachweis vorhanden ist. Falls dies der Fall ist, kann im Zuge einer weiteren Berechtigungsprüfung geprüft werden, ob noch weitere Zugriffszertifikate in der Anfrage vorhanden sind und bezüglich welcher Zugriffsarten diese Zertifikate ein Zugriffsrecht einräumen.

Beispielsweise hat im vorliegenden Fall das Überwachungssystem H einen Datensatz erstellt der drei Zugriffs-Zertifikate für die besagten drei Zugriffsrechten (in der Nutzdaten-Datenbank) enthält. Das Überwachungssystem H weist diese Zugriffrechte über die drei Zugriffs-Zertifikate den Überwachungssystemen B und P zu, wobei Überwachungssystem P diese Zugriffsrechte auf die von Überwachungssystem H erstellten Datensätze wiederum an das Überwachungssystem D weitergibt. Somit bezieht Überwachungssystem D seine Zugriffsrechte auf die Daten von Überwachungssystem H über das "Mittlersystem" "P".

Die in **Figur 9B** abgebildete Hierarchie bildet eine Kaskade von Eigner-Rechten auf ein oder mehrere Nutzdaten-Datenbanken DB1, DB2 ab. Der für die Wartung der Turbine (Überwachungssystem H) und weiterer Turbinen (Überwachungssystem A) verantwortliche technische Fachmann (Wartungsnutzer) hat z.B. Eigner-Zertifikate sowohl für Datenbank DB1 als auch DB2. Er überträgt diese Eigner-Rechte derart, dass Überwachungssystem H ein Eigner-Zertifikat für die Datenbank DB1 und Überwachungssystem A ein Eigner-Zertifikat für Datenbank DB2 zugewiesen wird. Überwachungssystem H wiederum überträgt Eignerschafts-Rechte für die Datenbank DB1 an die Überwachungssysteme B, P und D. Jedes Überwachungssystem, das ein Eigner-Zertifikat für z.B. DB1 zugewiesen bekommt, ist damit ermächtigt, eine Datenbankverbindung zu der entsprechenden Nutzdaten-Datenbank aufzubauen und in dieser eigene Datensätze anzulegen. Im vorliegenden Fall hat das Überwachungssystem D Eignerschaftsrechte für die Datenbank DB1 über das Überwachungssystem H vom Wartungsnutzer erhalten. Die Weitergabe von Zugriffsrechten über Zugriffs-Zertifikate wie in Figur 9A dargestellt und die Weitergabe von Eigner-Rechten über Eigner-Zertifikate wie in Figur 9B dargestellt erfolgen entlang einer dynamisch zwischen menschlichen Nutzern und/oder Überwachungssystemen definierten Kette des Vertrauens.

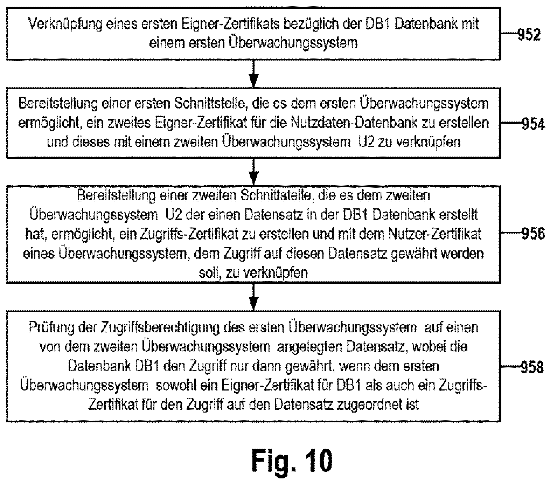

**Figur 10** zeigt ein Flussdiagramm einer weiteren Ausführungsform eines erfindungsgemäßen Verfahrens, wonach eine Zugriffskontrolle auf Datensätze 106, 108, 110, 112, 114, 116 mehrerer Nutzdaten-Datenbanken eines Zugriffs-Verwaltungssystems 100 bezüglich mehrerer anderer Überwachungssysteme erfolgt. In einem ersten Schritt 952 des Verfahrens wird ein erstes Eigner-Zertifikats 128, 13), das einer Nutzdaten-Datenbank 102 eines ersten Überwachungssystems 100, 300, hier "U1" genannt, zugeordnet ist, mit diesem ersten Überwachungssystem U1 verknüpft. Ein Eigner-Zertifikat ist ein Zertifikat, das einer oder mehreren Nutzdaten-Datenbanken zugeordnet ist und das jedem Überwachungssystem, mit dem es verknüpft ist, das Recht gewährt, Datensätze in dieser Nutzdaten-Datenbank anzulegen. Die Verknüpfung kann z.B. manuell durch einen menschlichen Nutzer über eine GUI des Zugriffs-Verwaltungssystems eines Überwachungssystems 100 vorgenommen werden, welches die Nutzdaten-Datenbank und die ID-Datenbank beinhaltet, oder automatisch und implizit durch das Zugriffs-Verwaltungssystem dieses Überwachungssystems, z.B. dann, wenn ein externes Überwachungssystem eine neue Nutzdaten-Datenbank innerhalb des Überwachungssystems U1 anlegt.

In einem weiteren Schritt 954 wird eine erste Schnittstelle 142 bereitgestellt, die es dem ersten Überwachungssystem U1 ermöglicht, ein zweites Eigner-Zertifikat für die Nutzdaten-Datenbank 102 zu erstellen und dieses mit einem zweiten Überwachungssystem U2 zu verknüpfen um diesem zu ermöglichen, Datensätze in der Nutzdaten-Datenbank 102 anzulegen. Die erste Schnittstelle kann z.B. in Form einer GUI implementiert sein, welche Zugriff auf die ID-Datenbank hat und die von dem Überwachungssystem erstellten Zertifikate und/oder die von einem entsprechend berechtigten Nutzer erstellte Zuweisung von Eigner-Zertifikaten an andere Nutzer in Form von Eigner- und Nutzer-Zertifikatszuweisungen in der ID-Datenbank zu speichert. Anstelle einer GUI kann auch eine Maschine-zu-Maschine Schnittstelle und/oder eine Konfigurationssoftware verwendet werden.

In einem weiteren Schritt 956 wird eine zweite Schnittstelle 144 bereitgestellt, die es dem zweiten Überwachungssystem U2, das einen Datensatz 106, 108 in der Nutzdaten-Datenbank 102 erstellt hat, ermöglicht, mindestens ein Zugriffs-Zertifikat Z.Zert_U2[W], Z.Zert_U2[R], Z.Zert_U2[S], das eine Art des Datensatzzugriffs auf den von dem zweiten Überwachungssystem erstellten Datensatz spezifiziert, zu erstellen und mit dem Nutzer-Zertifikat eines Überwachungssystems, dem Zugriff auf diesen Datensatz gewährt werden soll, zu verknüpfen. Die zweite Schnittstelle kann z.B. ebenfalls in Form einer GUI oder eines Teils der oben erwähnten GUI implementiert sein. Die Zugriffs-Zertifikate und/oder die von einem entsprechend berechtigten Überwachungssystem erstellte Zuweisung von Zugriffs-Zertifikaten an andere Überwachungssysteme in Form von Zugriffs- und Nutzer-Zertifikatszuweisungen werden in der ID-Datenbank gespeichert.

Das Zugriffs-Verwaltungssystem prüft, in Antwort auf eine Zugriffsanfrage des ersten Überwachungssystems bezüglich der in der Nutzdaten-Datenbank 102 gespeicherten Datensätze in Schritt 958, ob das erste Überwachungssystem eine Zugriffsberechtigung auf einen von dem zweiten Überwachungssystem angelegten Datensatz besitzt, ob dem ersten Überwachungssystem also von dem zweiten Überwachungssystem ein entsprechendes Zugriffs-Zertifikat für die von dem zweiten Überwachungssystem erstellten Datensätze zugewiesen wurde. Die Nutzdaten-Datenbank gewährt dem ersten Überwachungssystem den Zugriff auf die von dem zweiten Überwachungssystem angelegte Datensätze nur dann, wenn dem ersten Überwachungssystem in der ID-Datenbank sowohl ein Eigner-Zertifikat für die Nutzdaten-Datenbank 102 als auch ein Zugriffs-Zertifikat für den Zugriff auf den Datensatz zugeordnet ist.

### Bezugszeichenliste

- 100: Überwachungssystem
- 102: Nutzdaten-Datenbank DB1
- 104: Nutzdaten-Datenbank DB2
- 105: öffentlicher Signaturprüfschlüssel
- 106: Datensatz
- 107: privater Signierschlüssel
- 108: Datensatz
- 110: Datensatz
- 111: Signatur
- 112: Datensatz
- 113: Signatur
- 114: Datensatz
- 115: Signatur
- 116: Datensatz
- 118: Delegierter-Parameter
- 122: Berechtigungstoken
- 123: Modul zur Zertifikatskettenprüfung
- 124: drittes Nutzer-Zertifikat
- 125: Log
- 126: Nutzer
- 128: Eigner-Zertifikat für Datenbank DB1
- 132: zweites Nutzer-Zertifikat
- 134: erstes Nutzer-Zertifikat
- 136: ID-Datenbank
- 137: Zugriffs-und Eignerschafts-Ermächtigungskettenobjekte
- 138: Zertifikatskette
- 139: Eignerschaftsermächtigungskettenobjekt
- 140: Zertifizierungsstelle
- 141: Eignerschaftsermächtigungskettenobjekt
- 142: erste Schnittstelle
- 143: Zugriffsermächtigungskettenobjekt
- 144: zweite Schnittstelle
- 202: Nutzer, z.B. registrierte Überwachungssysteme
- 204: Nutzer-Zertifikate
- 206: Konnektivitäts- Berechtigungstoken für best. Nutzer und DB
- 208: Signatur eines privaten Schlüssels einer Zertifizierungsstelle
- 210: öffentlicher Signaturprüfschlüssel einer Zertifizierungsstelle
- 212: privater Signaturschlüssel der Zertifizierungsstelle
- 214: Trust-Center
- 216: IDs von Nutzdaten-Datenbanken
- 220: Berechtigungstoken für Nutzer U2
- 222: Berechtigungstoken für Nutzer U3
- 225: Zugriffs- Berechtigungstoken für best. Nutzer und Datensatz
- 226: Zugriffs- Berechtigungstoken für best. Nutzer und Datensatz
- 227: Konnektivitäts- Berechtigungstoken für best. Nutzer und DB
- 228: Fehlen des [S] Zugriffsrechts für Nutzer U2 bzgl. Daten, die von Nutzer U1 erstellt wurden
- 229: Fehlen des [W] Zugriffsrechts für Nutzer U3 bzgl. Daten, die von Nutzer U1 erstellt wurden
- 230: Fehlen des [R] Zugriffsrechts für Nutzer U3 bzgl. Daten, die von Nutzer U1 erstellt wurden
- 232: [W] und [R] Zugriffsrechte des Nutzers U2 auf Daten, die von Nutzer U1 erstellt wurden
- 234: Zugriffsrechte des Nutzers U3 auf Daten, die von Nutzer U1 und U2 erstellt wurden
- 236: Signatur von Berechtigungstoken 225
- 237: Signatur von Berechtigungstoken 206
- 238: Signatur von Berechtigungstoken 226
- 239: Signatur von Berechtigungstoken 227
- 240: Signatur von Berechtigungstoken 242
- 242: Zugriffs- Berechtigungstoken für best. Nutzer und Datensatz
- 300: Überwachungssystem
- 302: Mikrocontroller
- 304: Prozessor(en)
- 306: Arbeitsspeicher
- 308: Netzwerkschnittstelle
- 310: nicht-volatiler Programmspeicher
- 312: Referenzberechtigungsnachweis
- 314: Hardware- oder Softwarefunktionalität
- 316: Prüfprogramm
- 318: Wartungs-Nutzer
- 320: Angreifer
- 322: Anfrage
- 324: Berechtigungsnachweis innerhalb Anfrage
- 326: Netzwerk
- 328: Anfrageeinheit
- 330: Krankenhausgebäude
- 331: Sensor(en)
- 332: Notstromaggregat
- 333: Steuereinheit
- 334: Notstromaggregat
- 336: Überwachungssystem
- 340: System
- 342: Steuereinheit
- 344: Steuereinheit
- 402: Nutzer H
- 404-408: Zugriffs-Zertifikate für von H erstellte Daten
- 410: Datensatz
- 412: Nutzer-Zertifikat für Nutzer H
- 420: Nutzer B
- 424-428: Zugriffs-Zertifikate für von B erstellte Daten
- 414: Nutzer-Zertifikat für Nutzer B
- 422: Nutzer P
- 430-434: Zugriffs-Zertifikate für von P erstellte Daten
- 418: Nutzer-Zertifikat für Nutzer P
- 436: Nutzer D
- 440-444: Zugriffs-Zertifikate für von D erstellte Daten
- 438: Nutzer-Zertifikat für Nutzer D
- 500: Nutzdaten
- 702: ID-Management-Modul
- 802-818: Schritte
- 900: Verteiltes System aus mehreren Überwachungssystemen
- 902: Überwachungssystem
- 904: Prozessor
- 906: Vorhersageprogramm
- 908: Modellsynchronisationsmodul
- 914: Trainingsdaten (von lokalem Sensor erfasst)
- 916: Sensor
- 919: Machine-Learning Modell
- 920-924: Überwachungsobjekte
- 926-930: semi-autonome Systeme
- 952-958: Schritte

## Patentansprüche

1. Überwachungssystem, wobei das Überwachungssystem ein mikrocontroller-basiertes oder mikroprozessor-basiertes Datenverarbeitungssystem (300, 336, 902.1, 902.2, 902.3) ist, das operativ an ein Überwachungsobjekt (334, 920, 922, 924) koppelbar ist, wobei das Überwachungssystem umfasst:
- zumindest einen Prozessor (304, 904.1, 904.2, 904.3);
- eine Netzwerkschnittstelle (308);
- zumindest einen Sensor (331), der dazu ausgebildet ist, einen aktuellen Zustand des Überwachungsobjektes zu erfassen; und/oder eine Steuereinheit (333, 344, 432), die dazu ausgebildet ist, den Zustand des Überwachungsobjektes zu verändern;
wobei das Überwachungssystem ausgebildet ist zum:
• Empfang (804) einer Anfrage (322) über die Netzwerkschnittstelle von einer Anfrageeinheit (328);
• Durchführen einer ersten Prüfung (806) der Anfrage durch den Prozessor;
• Falls die erste Prüfung ergibt, dass die Anfrage nicht vertrauenswürdig ist, Abbruch (808) der ersten Prüfung, ohne eine Antwort irgendeiner Form an die Anfrageeinheit zurückzugeben;
• nur falls die erste Prüfung ergibt, dass die Anfrage vertrauenswürdig ist, Durchführen (810) einer weiteren Prüfung der Anfrage durch den Prozessor;
• nur falls die weitere Prüfung der Anfrage ergibt, dass die Anfrageeinheit hinreichend berechtigt ist, Ermöglichung der Übertragung von Zustandsdaten des Überwachungsobjekts, die von dem zumindest einen Sensor erfasst wurden, an die Anfrageeinheit und/oder Ändern des Zustands des Überwachungsobjekts mittels der Steuerungseinheit gemäß der Anfrage.

2. Überwachungssystem nach Anspruch 1, wobei die weitere Prüfung rechnerisch aufwändiger ist als die erste Prüfung.

3. Überwachungssystem nach einem der vorigen Ansprüche,
- wobei die erste Prüfung aus einer oder mehreren arithmetischen Operationen auf numerischen Datenwerten besteht, wobei die erste Prüfung insbesondere aus einer Prüfung besteht, ob die Anfrage einen Berechtigungsnachweis in Form eines numerischen Datenwerts beinhaltet, der identisch ist zu einem in einem nicht-flüchtigen Speichermedium (310) der Überwachungseinheit gespeicherten Referenzberechtigungsnachweis (312); und/oder
- wobei die weitere Prüfung eine Zertifikatskettenprüfung umfasst, wobei die Zertifikatskettenprüfung eine Prüfung beinhaltet, ob ein die Anfrageeinheit repräsentierendes Nutzer-Zertifikat über eine Kette weiterer Nutzer-Zertifikate ableitbar ist von einem als vertrauenswürdig geltenden Root-Nutzer-Zertifikat.

4. Überwachungssystem nach einem der vorhergehenden Ansprüche, wobei das Überwachungsobjekt ausgewählt ist aus einer Gruppe umfassend:
- ein Infrastrukturobjekt (330, 332, 334), insbesondere ein Infrastruktur-Gebäude, eine Energieerzeugungsanlage, ein Elektrizitätswerk, eine Anlage eines Wasserwerks, ein Kraftwerk;
- eine militärische Anlage;
- eine industrielle Anlage zur Produktion von Gütern;
- eine Vorrichtung,
- eine Maschine;
- ein Fahrzeug;
- ein Flugzeug;
- eine Komponente der vorgenannten Objekte;
- eine Kombination aus zwei oder mehr der vorgenannten Objekte.

5. Überwachungssystem nach einem der vorhergehenden Ansprüche,
- wobei die von dem zumindest einen Sensor erfassten Zustandsdaten ausgewählt sind aus einer Gruppe umfassend:
- Leistungsparameter des Überwachungsobjekts, insbesondere Drehzahl, Energieverbrauch, Wirkungsgrad, Beschleunigung, Größenveränderung, Temperatur, Menge der verbrauchten Verbrauchsmittel, Menge der erzeugten oder bereitgestellten Güter, zurückgelegte Strecke, Temperatur;
- Verschleißparameter, die einen Verschleiß des Überwachungsobjekts oder seiner Komponenten anzeigen, insbesondere Schwingungsmessdaten, optische oder leitfähigkeitsbasierte Rostindikatoren, Menge der verarbeiteten oder bereitgestellten Güter, akkumulierte Betriebsdauer, zurückgelegte Strecke;
- Zustandsindikatoren, die einen aktuellen Zustand des Überwachungsobjekts angeben, insbesondere "inaktiv", "bereit", "aktiv", "defekt", "Grad der Aktivität in %";
- eine Kombination aus zwei oder mehr der vorgenannten Zustandsparameter;
und/oder wobei die von der Steuereinheit bewirkte Zustandsänderung des Überwachungsobjekts ausgewählt ist aus einer Gruppe umfassend:
- eine Aktivierung des Überwachungsobjekts;
- eine Deaktivierung des Überwachungsobjekts;
- eine Erhöhung der Leistung des Überwachungsobjekts;
- eine Reduzierung der Leistung des Überwachungsobjekts.

6. Überwachungssystem nach einem der vorigen Ansprüche, wobei das Überwachungssystem dazu konfiguriert ist, falls die erste Prüfung ergibt, dass die Anfrage nicht vertrauenswürdig ist, die Netzwerkverbindung zu der Anfrageeinheit zu trennen (812).

7. Überwachungssystem nach einem der vorigen Ansprüche, wobei das Überwachungssystem ein nicht-flüchtiges Speichermedium (310) beinhaltet, wobei das Speichermedium beinhaltet:
- Eine erste Nutzdaten-Datenbank (102, 104), wobei die Nutzdaten-Datenbank mehrere Datensätze (106, 108, 110, 112, 114, 116) beinhaltet, wobei zumindest einer der Datensätze Zustandsdaten des Überwachungsobjekts, die von dem zumindest einen Sensor erfasst wurden, beinhaltet und/oder wobei zumindest einer der Datensätze Konfigurationsdaten beinhaltet, die von der Steuereinheit bei der Änderung des Zustands des Überwachungsobjekts gelesen und bei der Zustandsänderung berücksichtigt werden;
- eine ID-Datenbank (136), wobei in der ID-Datenbank eine Vielzahl von Nutzer-Zertifikaten (412, 414, 418, 436, 412, 414) und eine Vielzahl von Zugriffs-Zertifikaten (404, 406, 408, 424, 426, 444) gespeichert sind,
• wobei ein Nutzer-Zertifikat ein einem Nutzer eindeutig zugewiesener Datenwert ist,
• wobei ein Zugriffs-Zertifikat (Z.Zert_U2[W], Z.Zert_U2[R], Z.Zert_U2[S]), ein numerischer Datenwert ist, der einem Nutzer durch Zuweisung dieses Zugriffs-Zertifikats an dessen Nutzer-Zertifikat in der ID-Datenbank eine bestimmte Art des Datensatzzugriffs auf Datensätze der Nutzdaten-Datenbank gewährt,
- wobei die weitere Prüfung der Anfrage eine Prüfung umfasst, ob die Anfrage ein Nutzer-Zertifikat enthält, dem in der ID-Datenbank eines der Zugriffs-Zertifikate zugeordnet ist, welches die Anfrageeinheit zum Empfang der Zustandsdaten und/oder zur Veranlassung einer Zustandsänderung des Überwachungsobjekts berechtigt, wobei das Überwachungssystem dazu konfiguriert ist, die Ermöglichung der Übertragung der Zustandsdaten und/oder das Ändern des Zustands des Überwachungsobjekts nur dann zu veranlassen, wenn die Anfrage ein solches Nutzer-Zertifikat enthält.

8. Überwachungssystem nach Anspruch 7, wobei das Speichermedium einen oder mehrere Referenzberechtigungsnachweise (312) beinhaltet, wobei das Überwachungssystem dazu konfiguriert ist, die Referenzberechtigungsnachweise mit der Anfrage abzugleichen, wobei jeder der Referenzberechtigungsnachweise (312) eines der Zugriffs-Zertifikate der ID-Datenbank ist, wobei die Zugriffszertifikate jeweils numerische Datenwerte sind.

9. Überwachungssystem nach einem der Ansprüche 7-8, wobei die Ausführung der Funktionalität eine Erzeugung von einem oder mehreren neuen Datensätzen in der Nutzdaten-Datenbank beinhaltet,
- wobei der Nutzdaten-Datenbank ein Eigner-Zertifikat (128, 130) zugeordnet ist,
- wobei das Eigner-Zertifikat in der ID-Datenbank einem Nutzer-Zertifikat eines Nutzers (U1) zugeordnet ist;
- wobei ein Eigner-Zertifikat ein Zertifikat ist, das einer oder mehreren Nutzdaten-Datenbanken zugeordnet ist und jedem Nutzer, dem es zugeordnet ist, das Recht gewährt, Datensätze in dieser Nutzdaten-Datenbank anzulegen.
- wobei die weitere Prüfung eine Prüfung umfasst, ob die Anfrage ein Nutzer-Zertifikat enthält, welches in der ID-Datenbank dem Eigner-Zertifikat der Nutzdaten-Datenbank zugeordnet ist, wobei die weitere Prüfung nur dann, wenn dies der Fall ist, ergibt, dass die Anfrageeinheit zur Veranlassung der Ausführung der Funktionalität berechtigt ist.

10. Verteiltes System (900) umfassend:
- mehrere Überwachungssysteme (902.1, 902.2, 902.3) nach einem der vorigen Ansprüche, die jeweils an ein anderes Überwachungsobjekt gekoppelt sind;
wobei jedes der Überwachungssysteme dazu ausgebildet ist, als die Anfrageeinheit zu fungieren und eine Anfrage an eines der anderen Überwachungssysteme zu senden;
wobei jedes der Überwachungssysteme dazu ausgebildet ist, eine Anfrage eines der anderen Überwachungssysteme zu empfangen und diese so zu prüfen wie die Anfrage der Anfrageeinheit.

11. Verteiltes System (900) nach Anspruch10 wobei die Anfragen dem Austausch von Messwerten und/oder Steuersignalen dienen, wobei die Messwerte Datenwerte sind, die von den Sensoren erfasst wurden und zustandsbezogene Informationen der Überwachungsobjekte beinhalten, wobei die Steuersignale Datenwerte sind, die dazu ausgebildet sind, die Steuereinheit des die Steuersignale empfangenden Überwachungssystem zu veranlassen, das an dieses Überwachungssystem operativ gekoppelte Überwachungsobjekt gemäß den Steuersignalen zu steuern.

12. Verteiltes System (900) nach Anspruch 10 oder 11,
- wobei jedes der Überwachungssysteme ein Vorhersageprogramm (906.1, 906.2, 906.3) beinhaltet, wobei jedes der Vorhersageprogramme ein zur Berechnung des gleichen Vorhersagetyps trainiertes Machine-Learning (ML)-Modell (912.1, 912.2, 912.3) beinhaltet, wobei die trainierten Modelle der Vorhersageprogramme unterschiedlich sind, wobei jedes der Modelle Paare (114-128) einander zugeordneter Eingaben und Ausgaben beinhaltet, wobei jedes der Überwachungssysteme konfiguriert ist zum:
- Synchronisieren (304) der Eingabe-Ausgabe Paare der Modelle derart, dass jedes Modell nach der Synchronisation den gleichen Satz an Eingabe-Ausgabe Paaren beinhaltet;
- Eingeben (306) von Eingabedaten in eines der Vorhersageprogramme;
- Berechnen (308) einer Vorhersage auf Basis der Eingabedaten durch das eine Vorhersageprogramm unter Verwendung des synchronisierten Modells dieses einen Vorhersageprogrammes; und
- Verwendung der Vorhersage durch die Steuereinheit desjenigen Überwachungssystems, welches das eine Vorhersageprogramm beinhaltet, um den Zustand des an dieses Überwachungssystem operativ gekoppelten Überwachungsobjekts automatisch in Abhängigkeit von der Vorhersage zu verändern; und/oder Zurückgeben der Vorhersage an die Anfrageeinheit.

13. System (340, 926, 928, 930) umfassend:
- ein Überwachungsobjekt (920, 922, 924);
- das Überwachungssystem (300, 336) nach einem der vorigen Ansprüche 1-12.

14. Verfahren zur Überwachung eines Überwachungsobjekts (334, 332, 920, 922, 924) umfassend:
- operative Kopplung (802) eines Überwachungssystems (100, 300, 902.1, 902.2, 902.3) an das Überwachungsobjekt, wobei das Überwachungssystem ein mikrocontroller-basiertes oder mikroprozessor-basiertes Datenverarbeitungssystem ist, welches umfasst:
- zumindest einen Prozessor (304, 904.1, 904.2, 904.3);
- eine Netzwerkschnittstelle (308);
- zumindest einen Sensor (331), der dazu ausgebildet ist, bei bestehender operativer Kopplung an das Überwachungsobjekt einen aktuellen Zustand des Überwachungsobjektes zu erfassen; und/oder eine Steuereinheit (333, 344, 432), die dazu ausgebildet ist, bei bestehender operativer Kopplung an das Überwachungsobjekt den Zustand des Überwachungsobjektes durch Senden eines Steuerbefehls an das Überwachungsobjekt zu verändern;
- Empfang (804) einer Anfrage (322) über die Netzwerkschnittstelle von einer Anfrageeinheit (328) durch das Überwachungssystem;
- Durchführung (806) einer ersten Prüfung der Anfrage durch das Überwachungssystem;
- Falls die erste Prüfung ergibt, dass die Anfrage nicht vertrauenswürdig ist, Abbruch (808) der ersten Prüfung durch das Überwachungssystem, ohne eine Antwort irgendeiner Form an die Anfrageeinheit zurückzugeben;
- nur falls die erste Prüfung ergibt, dass die Anfrage vertrauenswürdig ist, Durchführen (810) einer weiteren Prüfung der Anfrage durch das Überwachungssystem;
- nur falls die weitere Prüfung der Anfrage ergibt, dass die Anfrageeinheit hinreichend berechtigt ist, Ermöglichung (816) der Übertragung von Zustandsdaten des Überwachungsobjekts, die von dem zumindest einen Sensor erfasst wurden, an die Anfrageeinheit durch das Überwachungssystem und/oder Ändern des Zustands (816) des Überwachungsobjekts mittels der Steuerungseinheit gemäß der Anfrage durch das Überwachungssystem.

15. Verfahren nach Anspruch 14, wobei das Verfahren für eine gegenüber Denial-of-Service-Angriffen robuste Überwachung des Überwachungsobjekts (334) verwendet wird.

## Claims

1. A monitoring system, wherein the monitoring system is a microcontroller-based or microprocessor-based data processing system (300, 336, 902.1, 902.2, 902.3), which is operatively coupleable to a monitoring object (334, 920, 922, 924), wherein the monitoring system comprises:
- at least one processor (304, 904.1, 904.2, 904.3);
- a network interface (308);
- at least one sensor (331), which is configured to detect a current state of the monitoring object; and/or a control unit (333, 344, 432) which is configured to change the state of the monitoring object;
wherein the monitoring system is configured to:
• receive (804) a query (322) via the network interface from a query unit (328);
• carry out a first examination (806) of the query by the processor;
• if the first examination indicates that the query is not trustworthy, terminate (808) the first examination without returning a response of any form to the query unit;
• only if the first examination indicates that the query is trustworthy, carry out (810) a further examination of the query by the processor;
• only if the further examination of the query indicates that the query unit is sufficiently authorised, allow the transfer of state data of the monitoring object that have been detected by the at least one sensor to the query unit and/or change the state of the monitoring object by means of the control unit in accordance with the query.

2. The monitoring system according to claim 1, wherein the further examination, from a processing perspective, is more complex than the first examination.

3. The monitoring system according to any one of the preceding claims,
- wherein the first examination consists of one or more arithmetic operations on numerical data values, wherein the first examination in particular consists of an examination as to whether the query includes a proof of authority in the form of a numerical data value that is identical to a reference proof of authority (312) stored in a non-volatile storage medium (310) of the monitoring unit; and/or
- wherein the further examination comprises a certificate chain examination, wherein the certificate chain examination includes an examination as to whether a user certificate representing the query unit is derivable, via a chain of further user certificates, from a root user certificate considered to be trustworthy.

4. The monitoring system according to any one of the preceding claims, wherein the monitoring object is selected from a group comprising:
- an infrastructure object (330, 332, 334), in particular an infrastructure building, an energy production facility, an electricity station, a plant of a waterworks, a power station;
- a military facility;
- an industrial facility for the production of goods;
- an apparatus;
- a machine;
- a vehicle;
- an aircraft;
- a component of the aforementioned objects;
- a combination of two or more of the aforementioned objects.

5. The monitoring system according to any one of the preceding claims,
- wherein the state data detected by the at least one sensor are selected from a group comprising:
- performance parameters of the monitoring object, in particular speed, energy consumption, efficiency, acceleration, change in magnitude, temperature, amount of spent consumables, amount of generated or provided goods, travelled distance, temperature;
- wear parameters, which indicate wear of the monitoring object or its components, in particular vibration measurement data, optical or conductivity-based rust indicators, amount of processed or provided goods, accumulative operating period, travelled distance;
- state indicators, which indicate a current state of the monitoring object, in particular "inactive", "ready", "active", "defective", "degree of activity in %"'
- a combination of two or more of the aforementioned state parameters;
and/or wherein the change of state of the monitoring object brought about by the control unit is selected from a group comprising:
- an activation of the monitoring object;
- a deactivation of the monitoring object;
- an increase in the performance of the monitoring object;
- a reduction in the performance of the monitoring object.

6. The monitoring system according to any one of the preceding claims, wherein the monitoring system is configured, if the first examination indicates that the query is not trustworthy, to disconnect the network connection to the query unit (812).

7. The monitoring system according to any one of the preceding claims, wherein the monitoring system includes a non-volatile storage medium (310), wherein the storage medium includes:
- a first payload database (102, 104), wherein the payload database includes a plurality of data sets (106, 108, 110, 112, 114, 116), wherein at least one of the data sets includes state data of the monitoring object that have been detected by the at least one sensor, and/or wherein at least one of the data sets includes configuration data that were read by the control unit when the state of the monitoring object was changed and are taken into consideration in the change of state;
- an ID database (136), wherein multiple user certificates (412, 414, 418, 436, 412, 414) and multiple access certificates (404, 406, 408, 424, 426, 444) are stored in the ID database,
• wherein a user certificate is a data value uniquely assigned to a user,
• wherein an access certificate (Z.Zert_U2[W], Z.Zert_U2[R], Z.Zert_U2[S]) is a numerical data value that grants a user a certain type of data set access to data sets of the payload database by assignment of this access certificate to the user certificate of the user in the ID database;
- wherein the further examination of the query comprises an examination as to whether the query contains a user certificate, with which one of the access certificates is associated in the ID database, which authorises the query unit to receive the state data and/or to initiate a change of state of the monitoring object, wherein the monitoring system is configured to initiate the enablement of the transfer of the state data and/or the change of the state of the monitoring object only if the query contains such a user certificate.

8. The monitoring system according to claim 7, wherein the storage medium includes one or more reference proofs of authority (312), wherein the monitoring system is configured to compare the reference proofs of authority with the query, wherein each of the reference proofs of authority (312) is one of the access certificates of the ID database, wherein the access certificates are each numerical data values.

9. The monitoring system according to any one of claims 7-8, wherein the execution of the functionality includes a generation of one or more new data sets in the payload database,
- wherein an owner certificate (128, 130) is associated with the payload database,
- wherein the owner certificate in the ID database is associated with a user certificate of a user (U1),
- wherein the owner certificate is a certificate that is associated with one or more payload databases and grants to each user with whom it is associated the right to enter data sets in this payload database,
- wherein the further examination comprises an examination as to whether the query contains a user certificate which in the ID database is associated with the owner certificate of the payload database, wherein the further examination, only if this is found to be the case, indicates that the query unit is authorised to initiate the execution of the functionality.

10. A distributed system (900) comprising:
- a plurality of monitoring systems (902.1, 902.2, 902.3) according to any one of the preceding claims, which are each coupled to another monitoring object; wherein each of the monitoring systems is configured to function as the query unit and to send a query to one of the other monitoring systems;
wherein each of the monitoring systems is configured to receive a query of one of the other monitoring systems and to examine this similarly to the query of the query unit.

11. The distributed system (900) according to claim 10, wherein the queries serve for the exchange of measured values and/or control signals, wherein the measured values are data values which have been detected by the sensors and include state-related information of the monitoring objects, wherein the control signals are data values which are configured to prompt the control unit of the monitoring system receiving the control signals to control the monitoring object, operatively coupled to this monitoring system, in accordance with the control signals.

12. The distributed system (900) according to claim 10 or 11,
- wherein each of the monitoring systems includes a prediction program (906.1, 906.2, 906.3), wherein each of the prediction programs includes a machine-learning (ML) model (912.1, 912.2, 912.3) trained to calculate the prediction type, wherein the trained models of the prediction programs are different, wherein each of the models includes pairs (114-128) of inputs and outputs associated with each other, wherein each of the monitoring systems is configured to:
- synchronise (304) the input-output pairs of the models in such a way that each model, after the synchronisation, includes the same set of input-output pairs;
- input (306) input data in one of the prediction programs;
- calculate (308) a prediction on the basis of the input data by the one prediction program using the synchronised model of this one prediction program; and
- use the prediction by the control unit of that monitoring system that includes the one prediction program in order to automatically change the state of the monitoring object operatively coupled to this monitoring system in dependence on the prediction; and/or return the prediction to the query unit.

13. A system (340, 926, 928, 930) comprising:
- a monitoring object (920, 922, 924);
- the monitoring system (300, 336) according to any one of preceding claims 1-12.

14. A method for monitoring a monitoring object (334, 332, 920, 922, 924) comprising:
- operatively coupling (802) a monitoring system (100, 300, 902.1, 902.2, 902.3) to the monitoring object, wherein the monitoring system is a microcontroller-based or microprocessor-based data processing system, which comprises:
- at least one processor (304, 904.1, 904.2, 904.3);
- a network interface (308);
- at least one sensor (331), which is configured to detect a current state of the monitoring object when operative coupling to the monitoring object exists; and/or a control unit (333, 344, 432) which, when operative coupling to the monitoring object exists, is configured to change the state of the monitoring object by sending a control command to the monitoring object;
- receiving (804) a query (322) via the network interface from a query unit (328) by the monitoring system;
- carrying out (806) a first examination of the query by the monitoring system;
- if the first examination indicates that the query is not trustworthy, terminating (808) the first examination by the monitoring system without returning a response of any form to the query unit;
- only if the first examination indicates that the query is trustworthy, carrying out (810) a further examination of the query by the monitoring system;
- only if the further examination of the query indicates that the query unit is sufficiently authorised, allowing (816) the transfer of state data of the monitoring object that have been detected by the at least one sensor to the query unit by the monitoring system and/or changing the state (816) of the monitoring object by means of the control unit in accordance with the query by the monitoring system.

15. The method according to claim 14, wherein the method is used for a robust monitoring of the monitoring object (334) in respect of denial-of-service attacks.

## Revendications

1. Système de surveillance, dans lequel le système de surveillance est un système de traitement de données basé sur microcontrôleur ou basé sur microprocesseur (300, 336, 902.1, 902.2, 902.3), qui peut être couplé de manière fonctionnelle à un objet de surveillance (334, 920, 922, 924), dans lequel le système de surveillance comprend :
- au moins un processeur (304, 904.1, 904.2, 904.3) ;
- une interface réseau (308) ;
- au moins un capteur (331), qui est configuré pour détecter un état actuel de l'objet de surveillance ; et/ou une unité de commande (333, 344, 432) qui est configurée pour modifier l'état de l'objet de surveillance ;
dans lequel le système de surveillance est configuré pour :
• recevoir (804) une requête (322) par l'intermédiaire de l'interface réseau à partir d'une unité de requête (328) ;
• faire mettre en œuvre un premier examen (806) de la requête par le processeur ;
• si le premier examen indique que la requête n'est pas digne de confiance, mettre fin (808) au premier examen sans renvoyer de réponse de n'importe quelle forme à l'unité de requête ;
• uniquement si le premier examen indique que la requête est digne de confiance, faire mettre en œuvre (810) un examen supplémentaire de la requête par le processeur ;
• uniquement si l'examen supplémentaire de la requête indique que l'unité de requête est suffisamment autorisée, autoriser le transfert de données d'état de l'objet de surveillance qui a été détecté par l'au moins un capteur à l'unité de requête et/ou modifier l'état de l'objet de surveillance au moyen de l'unité de commande conformément à la requête.

2. Système de surveillance selon la revendication 1, dans lequel l'examen supplémentaire, du point de vue du traitement, est plus complexe que le premier examen.

3. Système de surveillance selon l'une quelconque des revendications précédentes,
- dans lequel l'examen supplémentaire est constitué d'une ou de plusieurs opérations arithmétiques sur des valeurs de données numériques, dans lequel le premier examen consiste en particulier en un examen consistant à déterminer si la requête inclut une preuve d'autorité sous la forme d'une valeur de données numérique qui est identique à une preuve d'autorité de référence (312) stockée sur un support de stockage non volatil (310) de l'unité de surveillance ; et/ou
- dans lequel l'examen supplémentaire comprend un examen de chaîne de certificats, dans lequel l'examen de chaînes de certificats inclut un examen consistant à déterminer si un certificat utilisateur représentant l'unité de requête peut être dérivé, par l'intermédiaire d'une chaîne de certificats utilisateur supplémentaires, depuis un certificat utilisateur racine considéré comme étant digne de confiance.

4. Système de surveillance selon l'une quelconque des revendications précédentes, dans lequel l'objet de surveillance est choisi dans un groupe comprenant :
- un objet d'infrastructure (330, 332, 334), en particulier un bâtiment d'infrastructure, une installation de production d'énergie, une station électrique, une usine hydraulique, une centrale électrique ;
- une installation militaire ;
- une installation industrielle pour la production de marchandises ;
- un appareil ;
- une machine ;
- un véhicule ;
- un aéronef ;
- un constituant des objets susmentionnés ;
- une combinaison de deux des objets susmentionnés ou plus.

5. Système de surveillance selon l'une quelconque des revendications précédentes,
- dans lequel les données d'état détectées par l'au moins un capteur sont choisies dans un groupe comprenant :
- des paramètres de performance de l'objet de surveillance, en particulier la vitesse, la consommation d'énergie, l'efficacité, l'accélération, le changement d'amplitude, la température, la quantité de consommables consommés, la quantité de marchandises générées ou fournies, la distance parcourue, la température ;
- des paramètres d'usure, qui indiquent l'usure de l'objet de surveillance ou de ses constituants, en particulier des données des mesures de vibration, des indicateurs de rouille optiques ou basés sur la conductivité, une quantité de marchandises traitées ou fournies, une période de fonctionnement cumulative, la distance parcourue ;
- des indicateurs d'état, qui indiquent un état actuel de l'objet de surveillance, en particulier « inactif », « prêt », « actif », « défectueux », « degré d'activité en % »,
- une combinaison de deux des paramètres d'état susmentionnés ou plus ;
et/ou dans lequel le changement d'état de l'objet de surveillance amené par l'unité de commande est choisi dans un groupe comprenant :
- une activation de l'objet de surveillance ;
- une désactivation de l'objet de surveillance ;
- une augmentation de la performance de l'objet de surveillance ;
- une réduction de la performance de l'objet de surveillance.

6. Système de surveillance selon l'une quelconque des revendications précédentes, dans lequel le système de surveillance est configuré, si le premier examen indique que la requête n'est pas digne de confiance, pour déconnecter la connexion réseau à l'unité de requête (812).

7. système de surveillance selon l'une quelconque des revendications précédentes, dans lequel le système de surveillance inclut un support de stockage non volatil (310), dans lequel le support de stockage inclut :
- une première base de données de charges utiles (102, 104), dans lequel la base de données de charges utiles inclut une pluralité d'ensembles de données (106, 108, 110, 112, 114, 116), dans lequel au moins l'un des ensembles de données inclut des données d'état de l'objet de surveillance qui ont été détectées par l'au moins un capteur, et/ou dans lequel au moins l'un des ensembles de données inclut des données de configuration qui ont été lues par l'unité de commande lorsque l'état de l'objet de surveillance a été modifié et sont prises en considération dans le changement d'état ;
- une base de données d'ID (136), dans lequel plusieurs certificats utilisateurs (412, 414, 418, 436, 412, 414) et plusieurs certificats d'accès (404, 406, 408, 424, 426, 444) sont stockés dans la base de données d'ID,
• dans lequel un certificat utilisateur est une valeur de données attribuée de manière unique à un utilisateur,
• dans lequel un certificat d'accès (Z.Zert_U2[W], Z.Zert_U2[R], Z.Zert_U2[S] est une valeur de données numérique qui confère à un utilisateur un certain types d'accès à des ensemble de données de la base de données de charges utiles par l'attribution de ce certificat d'accès au certificat utilisateur de l'utilisateur dans la base de données d'ID ;
- dans lequel l'examen supplémentaire de la requête comprend un examen visant à déterminer si la requête contient un certificat utilisateur, auquel l'un des certificats d'accès est associé dans la base de données d'ID, qui autorise l'unité de requête à recevoir les données d'état et/ou à initier un changement d'état de l'objet de surveillance, dans lequel le système de surveillance est configuré pour initier l'activation du transfert des données d'état et/ou du changement de l'état de l'objet de surveillance uniquement si la requête contient un tel certificat utilisateur.

8. Système de surveillance selon la revendication 7, dans lequel le support de stockage inclut une ou plusieurs preuves d'autorité de référence (312), dans lequel le système de surveillance est configuré pour comparer les preuves d'autorité de référence à la requête, dans lequel chacune des preuves d'autorité de référence (312) est l'un des certificats d'accès de la base de données d'ID, dans lequel les certificats d'accès sont chacun des valeurs de données numériques.

9. Système de surveillance selon l'une quelconque des revendications 7 à 8, dans lequel l'exécution de la fonctionnalité inclut une génération d'un ou de plusieurs nouveaux ensembles de données dans la base de données de charges utiles,
- dans lequel un certificat propriétaire (128, 130) est associé à la base de données de charges utiles,
- dans lequel le certificat propriétaire dans la base de données d'ID est associé à un certificat utilisateur d'un utilisateur (U1),
- dans lequel le certificat propriétaire est un certificat qui est associé à une ou plusieurs bases de données de charges utiles et confère à chaque utilisateur auquel il est associé le droit d'entrer des ensembles de données dans cette base de données de charges utiles,
- dans lequel l'examen supplémentaire comprend un examen visant à déterminer si la requête contient un certificat utilisateur qui dans la base de données d'ID est associé au certificat propriétaire de la base de données de charges utiles, dans lequel l'examen supplémentaire, uniquement s'il est déterminé que c'est le cas, indique que l'unité de requête est autorisée à initier l'exécution de la fonctionnalité.

10. Système distribué (900) comprenant :
- une pluralité de systèmes de surveillance (902.1, 902.2, 902.3) selon l'une quelconque des revendications précédentes, qui sont chacun couplé à un autre objet de surveillance ;
dans lequel chacun des systèmes de surveillance est configuré pour fonctionner en tant que l'unité de requête et pour envoyer une requête à l'un des autres systèmes de surveillance ;
dans lequel chacun des systèmes de surveillance est configuré pour recevoir une requête de l'un des autres systèmes de surveillance et pour examiner ceci de manière similaire à la requête de l'unité de requête.

11. Système distribué (900) selon la revendication 10, dans lequel les requêtes servent à l'échange de valeurs mesurées et/ou de signaux de commande, dans lequel les valeurs mesurées sont des valeurs de données qui ont été détectées par les capteurs et incluent des informations liées à l'état des objets de surveillance, dans lequel les signaux de commande sont des valeurs de données qui sont configurées pour inviter l'unité de commande du système de surveillance recevant les signaux de commande à commander l'objet de surveillance, couplé de manière fonctionnelle à ce système de surveillance, conformément aux signaux de commande.

12. Système distribué (900) selon la revendication 10 ou 11,
- dans lequel chacun des systèmes de surveillance inclut un programme de prévision (906.1, 906.2, 906.3), dans lequel chacun des programmes de prévision inclut un modèle d'apprentissage machine (ML) (912.1, 912.2, 912.3) entraîné pour calculer le type de prévision, dans lequel les modèles entraînés des programmes de prévision sont différents, dans lequel chacun des modèles inclut des paires (114 à 128) d'entrées et de sorties associées les unes aux autres, dans lequel chacun des systèmes de surveillance est configuré pour :
- synchroniser (304) les paires entrée-sortie des modèles d'une manière telle que chaque modèle, après la synchronisation, inclut le même ensemble de paires entrée-sortie ;
- entrer (306) des données d'entrée dans l'un des programmes de prévision ;
- calculer (308) une prévision sur la base des données d'entrée par le programme de prévision spécifique en utilisant le modèle synchronisé de ce programme de prévision spécifique ; et
- utiliser la prévision par l'unité de commande du système de surveillance qui inclut le programme de prévision spécifique afin de modifier automatiquement l'état de l'objet de surveillance couplé de manière fonctionnelle à ce système de surveillance en fonction de la prévision ; et/ou renvoyer la prévision à l'unité de requête.

13. Système (340, 926, 928, 930) comprenant :
- un objet de surveillance (920, 922, 924) ;
- le système de surveillance (300, 336) selon l'une quelconque des revendications 1 à 12 précédentes.

14. Procédé de surveillance d'un objet de surveillance (334, 332, 920, 922, 924) comprenant les étapes consistant à :
- coupler de manière fonctionnelle (802) un système de surveillance (100, 300, 902.1, 902.2, 902.3) à l'objet de surveillance, dans lequel le système de surveillance est un système de traitement de données basé sur microcontrôleur ou basé sur microprocesseur, qui comprend :
- au moins un processeur (304, 904.1, 904.2, 904.3) ;
- une interface réseau (308) ;
- au moins un capteur (331), qui est configuré pour détecter un état actuel de l'objet de surveillance lorsqu'un couplage fonctionnel à l'objet de surveillance existe ; et/ou une unité de commande (333, 344, 432) qui, lorsqu'un couplage fonctionnel à l'objet de surveillance existe, est configurée pour modifier l'état de l'objet de surveillance en envoyant un ordre de commande à l'objet de surveillance ;
- faire recevoir (804) une requête (322) par l'intermédiaire de l'interface réseau à partir d'une unité de requête (328) par le système de surveillance ;
- mettre en œuvre (806) un premier examen de la requête par le système de surveillance ;
- si le premier examen indique que la requête n'est pas digne de confiance, faire mettre fin (808) au premier examen par le système de surveillance sans renvoyer de réponse de n'importe quelle forme à l'unité de requête ;
- uniquement si le premier examen indique que la requête est digne de confiance, faire mettre en œuvre (810) un examen supplémentaire de la requête par le système de surveillance ;
- uniquement si l'examen supplémentaire de la requête indique que l'unité de requête est suffisamment autorisée, faire autoriser (816) le transfert de données d'état de l'objet de surveillance qui ont été détectées par l'au moins un capteur à l'unité de requête par le système de surveillance et/ou faire modifier (816) l'état de l'objet de surveillance au moyen de l'unité de commande conformément à la requête par le système de surveillance.

15. Procédé selon la revendication 14, dans lequel le procédé est utilisé pour une surveillance robuste de l'objet de surveillance (334) du point de vue d'attaques par déni de service.
